(19) Europäisches Patentamt / European Patent Office / Office européen des brevets

(11) **EP 1 883 241 B1**

(12) **EUROPEAN PATENT SPECIFICATION**

(45) Date of publication and mention
of the grant of the patent:
**13.01.2016 Bulletin 2016/02**

(21) Application number: **06756353.6**

(22) Date of filing: **18.05.2006**

(51) Int Cl.:
*H04N 5/445* (2006.01)       *H04N 21/2343* (2011.01)
*H04N 21/235* (2011.01)      *H04N 21/258* (2011.01)
*H04N 21/431* (2011.01)      *H04N 21/435* (2011.01)
*H04N 21/4402* (2011.01)    *H04N 21/45* (2011.01)
*H04N 21/454* (2011.01)      *H04N 21/462* (2011.01)
*H04N 21/4788* (2011.01)    *H04N 21/488* (2011.01)
*H04N 21/845* (2011.01)

(86) International application number:
**PCT/JP2006/309948**

(87) International publication number:
**WO 2006/123744 (23.11.2006 Gazette 2006/47)**

(54) **CONTENT DISPLAY SYSTEM AND CONTENT DISPLAY METHOD**

INHALTSANZEIGESYSTEM UND INHALTSANZEIGEVERFAHREN

SYSTEME D'AFFICHAGE DE CONTENU ET PROCEDE D'AFFICHAGE DE CONTENU

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **18.05.2005 JP 2005145547**

(43) Date of publication of application:
**30.01.2008 Bulletin 2008/05**

(73) Proprietor: **NEC Corporation
Minato-ku
Tokyo 108-8001 (JP)**

(72) Inventor: **KASUTANI, Eiji
Minato-ku,
Tokyo 1088001 (JP)**

(74) Representative: **Vossius & Partner
Patentanwälte Rechtsanwälte mbB
Siebertstrasse 3
81675 München (DE)**

(56) References cited:
EP-A1- 1 347 645          WO-A1-2004/008768
JP-A- 06 149 968         JP-A- 2001 296 852
JP-A- 2002 351 781      JP-A- 2003 018 553
JP-A- 2003 032 747      JP-A- 2003 067 100
JP-A- 2003 085 087      JP-A- 2003 304 473
JP-A- 2004 110 427      US-A- 6 023 714
US-A1- 2002 199 190    US-A1- 2004 073 925

• KASUTANI E. ET AL: 'Nin'i Gamen Size ni Taisuru
Eizo Kanren Joho Teiji Balance no Saitekika
Optimizing Oresentation Balance of Video and its
Related Information to Any Screen Size' FIT 2005
(DAI 4 KAI FORUM ON INFORMATION
TECHNOLOGY), IPPAN KOEN RONBUNSHU vol.
2, 22 August 2005, pages 47 - 48, XP003006962

**Description**

TECHNICAL FIELD:

The present invention relates to a contents display system and a contents display method for displaying contents including video data and concomitant data associated with the video data on a desired display screen. The present invention is also concerned with a contents distribution system and a contents distribution method for performing such a contents distribution service.

BACKGROUND ART:

Video distribution services via data broadcasting and the Internet provide services for allowing the user to view video data and also view data associated with the video data at the same time. Data associated with data include textual information, for example. For example, there have been provided services for displaying a text representing details of a news article or a list of news titles while a news program is being viewed by the user, and services for displaying a text representing the prices and features of goods while a goods presentation program is being viewed by the user. Video images are viewed on not only television receivers, but also on mobile phones, PDAs (Personal Digital Assistants), notebook personal computers, etc. Environments for viewing video images have been well developed in terms of devices. It is an important task to perform to provide environments for viewing video images and data associated with the video images with various devices having various display screen sizes.

One representative scheme (service) for displaying video images and concomitant data associated with the video images is data broadcasting in digital broadcasting services. JP-A-2001-296852 discloses a video display method for providing a text information display area adjacent to a video display area and displaying text information in a scrolling manner in the text information area at the same time that a video image is displayed in the video display area. JP-A-2003-018553 discloses a data broadcast reception apparatus for extracting only a text from the substance of a data broadcast and displaying the extracted text together with a video image of an ordinary broadcasting program, rather than displaying whole substance including images and texts of the data broadcast. The data broadcast reception apparatus disclosed in JP-A-2003-018553 permits the user to recognize a summary of the substance of the data broadcast though only a portion of the substance of the data broadcast is reproduced and displayed. With the video display method disclosed in JP-A-2001-296852 and the data broadcast reception apparatus disclosed in JP-A-2003-018553, a video image and concomitant data associated with the video image can be displayed in a fixed manner on the display screen if the resolution of the display screen is essentially constant these technologies may be used to display a video image and concomitant data on a display screen in a fixed manner for a television receiver whose screen resolution is essentially constant. According to these technologies, however, if a video image and concomitant data associated are to be displayed on various terminals having different screen resolutions, such as terminals other than television receivers, then display contents and layouts need to be newly generated/prepared for the respective display screens on which they are to be displayed.

JP-A-2003-032747 discloses a terminal device for combining both video data and text data into combined image data to be displayed and displaying the combined image data on a display screen. The terminal device disclosed in JP-A-2003-032747 makes it possible for the user to recognize the substance of concomitant data such as text data or the like more clearly on a terminal with a limited display area per screen, such as a mobile phone. However, since concomitant data are superimposed on a video image at all times regardless of the size of the display screen of the terminal device, a format for superimposing the concomitant data, e.g., the size of letters and the location where they are to be superimposed, has to be determined per display screen to match the size of the display screen. Generally, however, it is difficult for the creator of contents such as video data to prepare formats for superimposing concomitant data, *i.e.,* layout information, in advance, for all display screens that are assumed. Furthermore, if an original video image or concomitant data are modified, then it is difficult for the contents creator to update all the generated/prepared layouts. Therefore, the terminal device disclosed in JP-A-2003-032747 makes it costly for the contents creator to produce layout information in view of environments for using the terminal device and also to manage the layout information of each of generated versions.

JP-A-6-149968 discloses a document processing device for automatically determining a layout for images in a document and data other than the images to match the size of the document area. JP-A-2003-067100 discloses a digital contents display method for dynamically generating a layout for displaying information including a title, a text and an image on a display screen to match the display screen, and then displaying the information based on the generated layout information. However, the document processing device disclosed in JP-A-6-149968 and the digital contents display method disclosed in JP-A-2003-067100 do not take into account how to display video data with a time axis, *i.e.*, video data representing an image that changes with time, together with concomitant data. Even if the document processing device and the digital contents display method are applied to display video data, the video data are displayed using a layout that has been determined once, irrespectively of the image that changes with time. Consequently, the video data and the concomitant data may not necessarily be laid out appropriately on the display screen and displayed thereon.

The documents cited in the present specification are as follows:

Patent document 1: Japanese Patent Laid-open Publication No. 2001-296852 (JP-A-2001-296852).
Patent document 2: Japanese Patent Laid-open Publication No. 2003-018553 (JP-A-2003-018553).
Patent document 3: Japanese Patent Laid-open Publication No. 2002-32747 (JP-A-2003-032747).
Patent document 4: Japanese Patent Laid-open Publication No. H6-149968 (JP-A-6-149968).
Patent document 5: Japanese Patent Laid-open Publication No. 2003-67100 (JP-A-2003-067100).
Non-patent document 1: Ullas Gargi, Rangachar Kasturi, Susan H. Strayer, "Performance Characterization of Video-Shot-Change Detection Methods", IEEE Transaction on Circuits and Systems for Video Technology, Vol. 10, No. 1, February 2000.
Non-patent document 2: A. Mohan, C. Papageorgiou, T. Poggio, "Example-Based Object Detection in Images by Components", IEEE Trans. on PAMI, Vol. 23, No. 4, pp. 349-361, 2001.

US 6,023,714 discloses that the layout of a document is adapted to the capabilities of an output device. The document further describes that the layout generator may be a general purpose layout generator which is designed to work with multiple documents and different sets of style sheets or style definitions.

US 2004/0073925 A discloses that a video content as a whole is converted into a format that is selected based on content replaying environment of the user.

EP 1 347 645 discloses a video terminal capable of displaying a subscreen within a main screen, wherein a screen layout is optimized depending on the types of images to be displayed on the main screen and the subscreen. The types of images to be displayed on the main screen include an incoming animation and a still image, whereas the types of images to be displayed on the subscreen include an incoming animation, an outgoing animation and a still image.

WO 2004/008768 discloses that video contents are adapted to video usage environment including user characteristic and terminal characteristic.

US 2002/0199190 A discloses that a client device receives and reconfigures a variety of content from multiple sources broadcast from a server.

DISCLOSURE OF THE INVENTION:

PROBLEMS TO BE SOLVED BY THE INVENTION:

As described above, the contents display system available heretofore for displaying contents including video data and concomitant data associated with the video data on a desired display screen is problematic in that it requires screen configurations to be designed for displaying video data and concomitant data on the display screen and it is highly cumbersome to design screen configurations for the display screens of terminals of a plurality of types.

It is an object of the present invention to provide a contents display system which is capable of displaying video data and concomitant data in a layout depending on a display screen and the configuration of contents without the need for a contents creator for designing a screen configuration per display screen with respect to individual information such as video data and concomitant data.

Another object of the present invention is to provide a contents display method which is capable of displaying video data and concomitant data in a layout depending on a display screen and the configuration of contents without the need for a contents creator for designing a screen configuration per display screen with respect to individual information such as video data and concomitant data.

MEANS FOR SOLVING THE PROBLEMS:

The objects above are achieved with the features of the claims.

According to the present invention, a display mode for contents is adaptively determined to match the substance of video data and corresponding concomitant data for each of video intervals included in the video data. Therefore, contents can be displayed while dynamically changing the video display area for displaying a video image on the display screen and the concomitant data display area for displaying concomitant data on the display screen for each video interval according to the determined display mode. According to the present invention, therefore, a display mode for contents is automatically determined per video interval to display a video image and concomitant data in a layout depending on the configurations of the display screen and the contents. Consequently, a video image and concomitant data can be displayed in a layout depending on the configurations of the display screen and the contents without the need for the contents creator to design a screen configuration per display screen with respect to individual information (*i.e.*, a video image and concomitant data).

According to the present invention, since a display mode for contents can adaptively be determined and displayed per video interval depending on the substance of the video image and the concomitant data, the contents display system is capable of more effectively presenting video data and concomitant data to the user. According to the present invention, if it is configured to adaptively determine a display mode for contents based on the display screen of the terminal which is a required condition of the viewer of video data and concomitant data, then the contents display system is capable of effectively presenting video data and concomitant data on any desired display screens. Furthermore, according to the present invention, if it is configured to adaptively determine a display mode for contents based on the importance balance which is a required condition on the viewer's side of video data and concomitant data, then the contents display system is capable of effectively presenting video data and concomitant data to match the taste of the user.

BRIEF DESCRIPTION OF THE DRAWINGS:

FIG. 1 is a block diagram showing a constitution of a contents display system according to a first exemplary embodiment of the present invention;
FIG. 2 is a diagram showing an example of video data, concomitant data, and metadata stored in a contents database;
FIG. 3 is a flow chart showing an example of a process for a contents distribution server to distribute contents in response to a request from a user terminal;
FIG. 4A is a diagram showing an example of a layout of a display screen on which the user terminal displays an video image and concomitant data;
FIG. 4B is a diagram showing another example of a layout of a display screen on which the user terminal displays an video image and concomitant data;
FIG. 5 is a flow chart showing an example of a display mode determining process for a contents display mode determiner to determine a display mode for contents;
FIG. 6 is a block diagram showing a constitution of a contents display system according to a second exemplary embodiment of the present invention;
FIG. 7 is a flow chart showing an example of a process for a contents display mode determiner to determine a display mode for contents in the system shown in FIG. 6;
FIG. 8 is a block diagram showing a constitution of a contents display system according to a third exemplary embodiment of the present invention;
FIG. 9 is a flow chart showing an example of a process for a contents display mode determiner to determine a display mode for contents in the system shown in FIG. 8;

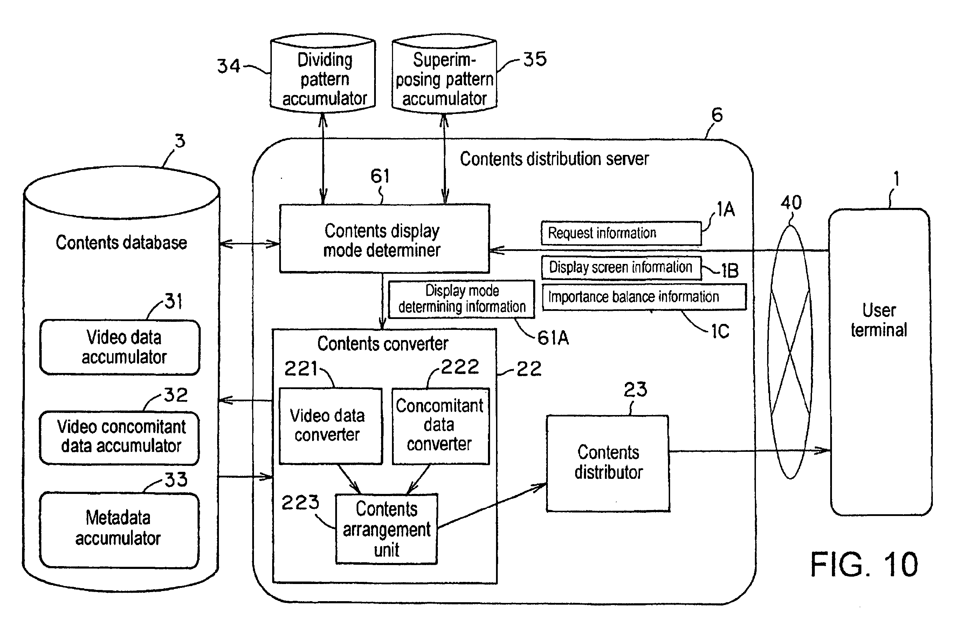

FIG. 10 is a block diagram showing a constitution of a contents display system according to a fourth exemplary embodiment of the present invention;
FIG. 11 is a flow chart showing an example of a process for a contents display mode determiner to determine a display mode for contents in the system shown in FIG. 10;
FIG. 12 is a block diagram showing a constitution of a contents display system according to a fifth exemplary embodiment of the present invention;
FIG. 13 is a block diagram showing a constitution of a contents display system according to a sixth exemplary embodiment of the present invention;
FIG. 14 is a flow chart showing an example of a process for a contents distribution server to distribute contents in response to a request from a user terminal
FIG. 15 is a diagram showing display screens displayed according to a determined display mode when a television receiver has requested a news program to be distributed; and
FIG. 16 is a diagram showing display screens displayed according to a determined display mode when a mobile phone has requested a news program to be distributed.

DESCRIPTION OF REFERENCE NUMERALS:

| 1, 7, 90 | User terminal; |
|---|---|
| 2, 4, 5, 6, 80 | Contents distribution server; |
| 3 | Contents database; |
| 8 | Input device; |
| 9 | Display; |

| 21, 41, 51, 61, 71, 81 | Contents display mode determiner; |
| 22, 72, 92 | Contents converter; |
| 23, 83 | Contents distributor; |
| 31 | Video data accumulator; |
| 32 | Video concomitant data accumulator; |
| 33 | Metadata accumulator; |
| 34 | Dividing pattern accumulator; |
| 35 | Superimposing pattern accumulator; |
| 40 | Communication network; |
| 221, 721, 921 | Video data converter; |
| 222, 722, 922 | Concomitant data converter; and |
| 223, 723, 923 | Contents arrangement unit. |

BEST MODE FOR CARRYING OUT THE INVENTION:

FIRST EXEMPLARY EMBODIMENT:

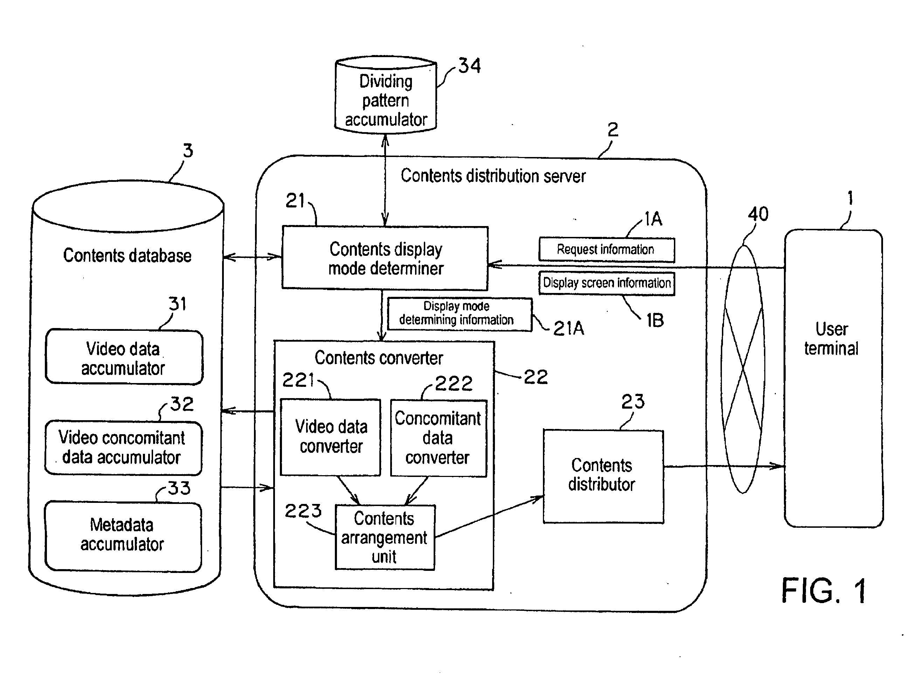

A contents display system according to a first exemplary embodiment of the present invention will be described below. FIG. 1 shows the constitution of the contents display system according to the first exemplary embodiment. The contents display system includes user terminal 1, contents distribution server 2, contents database 3, and dividing pattern accumulator 34. User terminal 1 and contents distribution server 2 are connected to each other by communication network 40 such as the Internet or the like.

The contents display system displays contents including video data and given concomitant data associated with the video data. At this time, the contents display system arranges the video data and the concomitant data on a display screen in a layout depending on the configuration of the contents, and displays the video data and the concomitant data simultaneously. According to the first exemplary embodiment, as shown in FIG. 1, the contents display system is realized by an arrangement in which contents distribution server 2 distributes contents to user terminal 1 and user terminal 1 displays the received contents.

User terminal 1 is a terminal used by the user, specifically, an information processing terminal such as a personal computer, a mobile phone, a PDA, or the like. User terminal 1 is not limited to the information processing terminal used by the user, but may be another contents display terminal having a display for displaying contents. For example, user terminal 1 may be a television receiver, a terminal having an electrical bulletin board, a wall-hung clock, a car navigation terminal, or the like. Though one user terminal 1 is shown in FIG. 1, the contents display system may include a plurality of user terminals 1.

User terminal 1 has a function to send a contents distribution request through the communication network to contents distribution server 2 according to an action of the user. In the present exemplary embodiment, user terminal 1 sends request information 1A for requesting contents to be distributed and display screen information 1 B indicative of the size of the display screen of user terminal 1 to contents distribution server 2. For example, user terminal 1 sends, as request information 1A, information including an identifier for identifying contents that are requested to be distributed. The identifier may comprise, for example, a contents name, a contents ID, a file name, and a title. User terminal 1 sends, as display screen information 1 B, information including the resolution of the display screen of user terminal 1. If contents are displayed using a browser or the like, for example, then user terminal 1 sends information including the resolution of a window of the browser for displaying the contents.

User terminal 1 also includes a contents display for displaying contents generated by contents distribution server 2 according to a determined display mode. The contents display includes, for example, a CPU of user terminal 1 for displaying various items of information on a display such as a liquid crystal display or the like. According to the present exemplary embodiment, user terminal 1 receives contents from contents distribution server 2 through the communication network. Based on the received contents, user terminal 1 displays a video image on the display and also displays concomitant data simultaneously with the video image.

Dividing pattern accumulator 34 accumulates in advance a plurality of dividing patterns indicative of patterns for dividing a display screen into a video display area for displaying a video image and a concomitant data display area for displaying concomitant data. Specifically, dividing pattern accumulator 34 is implemented by a database device such as a magnetic disk drive, an optical disk drive, or the like. Dividing pattern accumulator 34 accumulates, as dividing patterns, patterns for dividing a display screen into a video display area and a concomitant data display area which may be of L shapes or U shapes, for example. Alternatively, dividing pattern accumulator 34 accumulates, as dividing patterns, patterns for dividing a display screen into a video display area and a concomitant data display area as simple horizontally or vertically divided areas. Even if a display pattern is divided into identical shapes (e.g., L-shapes), the dividing pattern accumulator 34 accumulates a plurality of dividing patterns for dividing a display screen into a video display area and a concomitant data display area which have different area ratios.

Contents database 3 serves to accumulate contents generated by a contents creator. Specifically, contents database 3 is implemented by a database device such as a magnetic disk drive, an optical disk drive, or the like. As shown in FIG. 1, contents database 3 comprises video data accumulator 31, video concomitant data accumulator 32, and metadata accumulator 33. Video data accumulator 31 stores video data to be displayed on the screen. Video concomitant data accumulator 32 stores concomitant data as information to be displayed with video data. Metadata accumulator 33 stores metadata used to determine a contents display mode. In the present exemplary embodiment, one piece of contents is made up of video data accumulated in video data accumulator 31 and concomitant data accumulated in video concomitant data accumulator 32. Though one contents database 3 is shown in FIG. 1, either one or all of video data accumulator 31, video concomitant data accumulator 32, and metadata accumulator 33 may be provided as separate databases.

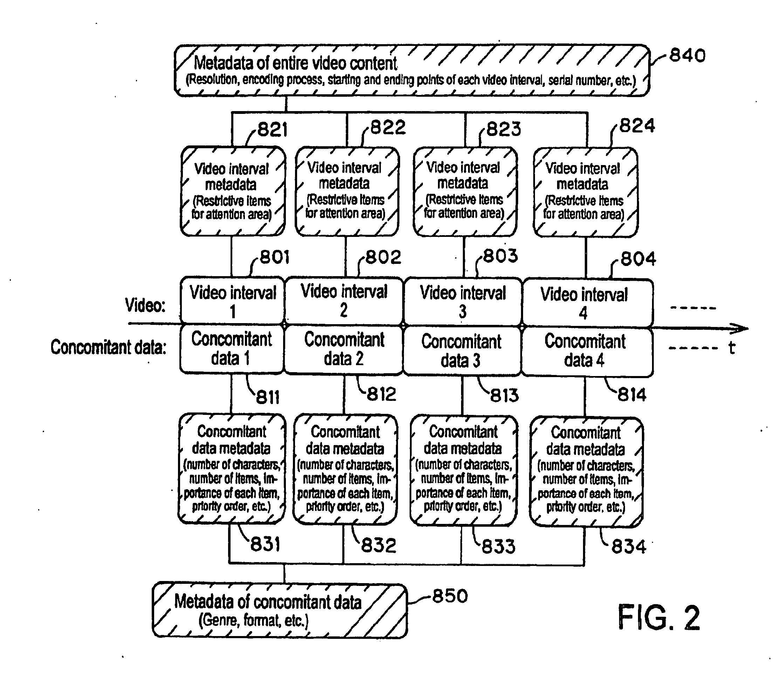

FIG. 2 shows an example of video data, concomitant data, and metadata accumulated in contents database 3. As shown in FIG. 2, the video data comprises a plurality of video intervals 801, 802, 803, 804. In the present exemplary embodiment, a video interval may be a shot which is an interval in which video image is continuously captured by a single camera, or a scene that is a collection of semantically coherent shots, for example. Alternatively, a video interval may be an interval having a length designated by the contents creator, for example.

As shown in FIG. 2, contents database 3 accumulates, for each video interval, concomitant data 811, 812, 813, 814 corresponding to the video intervals and metadata 821, 822, 823, 824 corresponding to the video intervals. Contents database 3 also accumulates, for each concomitant data, metadata 831, 832, 833, 834 corresponding to the concomitant data. Contents database 3 also accumulates metadata 840 including various information about the overall video data and metadata 850 including various information about the overall concomitant data. Metadata 840 and metadata 850 may be combined as single metadata.

The concomitant data corresponding to the respective video intervals include various information to be displayed on the display screen in connection with the corresponding video intervals, e.g., text information. Each concomitant data may be data in a plain text format or a structured text described by XML (Extended Markup Language). Alternatively, each concomitant data may be hypertext described by HTML (HyperText Markup Language), BML (Broadcast Markup Language), or the like.

Metadata 840 includes information about the overall video data. For example, as shown in FIG. 2, metadata 840 includes the resolution and encoding process of a video image, the starting and ending points of each video interval, and serial numbers thereof. Metadata 850 includes information about the overall concomitant data. For example, metadata 850 includes information such as genre, format, etc. of the concomitant data. Metadata (video metadata) 821, 822, 823, 824 include attribute information of video images included in the video intervals. For example, metadata 821, 822, 823, 824 include information about attention areas in video images, and restrictive items for video conversion. The restrictive items for video conversion include, for example, upper and lower limits for scaling ratio and compression ratio, evaluation functions for changes in video values upon video conversion, etc. Metadata (concomitant metadata) 831, 832, 833, 834 include attribute information of the concomitant data corresponding to the video intervals. For example, metadata 831, 832, 833, 834 include information about the number of characters and the number of items of the concomitant data, etc. Metadata 831, 832, 833, 834 include restrictive items for concomitant data conversion, and store video interval importance information which is descriptive of a balance of importance between video data and concomitant data in each of the video intervals. The restrictive items for concomitant data conversion include, for example, the importance of each display item, the priority order of each display item, and evaluation functions for changes in concomitant data values upon conversion, etc. The video interval importance information may be generated by the contents creator and may manually be assigned, or may be automatically generated by a server. Alternatively, an importance defining function for automatically generating video interval importance information, and video interval importance information may be generated using the importance defining function.

Contents distribution server 2 is a server operated by a service provider which provides contents distribution services for distributing various video contents. Specifically, contents distribution server 2 is implemented by an information processing device such as a work station, a personal computer, or the like. As shown in FIG. 1, contents distribution server 2 includes contents display mode determiner 21, contents converter 22, and contents distributor 23.

Specifically, contents display mode determiner 21 is implemented by a CPU and a network interface of an information processing device which operates according to a program. Contents display mode determiner 21 has a function to receive request information 1A and display screen information 1 B from user terminal 1 through the communication network. Contents display mode determiner 21 also has a function to determine a display mode for contents that have been requested to be distributed, based on request information 1A and display screen information 1B given (received) from user terminal 1, and the metadata accumulated in contents database 3. In this case, contents display mode determiner 21 determines, per video interval, a display mode for displaying video data and concomitant data included in the contents to be displayed, on the display screen. In the present exemplary embodiment, contents display mode determiner 21 selects, per video interval, a dividing pattern optimum for displaying on user terminal 1 a video image requested (for distribution) and concomitant data corresponding to the video image, from the dividing patterns accumulated in dividing pattern accumulator 34, and determines, per video interval, a display mode for the contents requested to be distributed, based on the selected dividing pattern.

Contents display mode determiner 21 also has a function to generate display mode determining information 21A representing a determined display mode, and supply display mode determining information 21A to contents converter 22. Specifically, contents display mode determiner 21 divides, per video interval, a display screen into a video display area and a concomitant data display area, using each of the dividing patterns prepared in dividing pattern accumulator 34, determines evaluated values of the overall contents made up of the video image displayed in the video display area and the concomitant data displayed in the concomitant data display area, according to the divided results, and determines, per video interval, a dividing pattern which provides an optimum evaluated value, e.g., a maximum evaluated value, among the dividing patterns, as a dividing pattern for use in dividing the display screen.

Display mode determining information 21A generated by contents display mode determiner 21 includes a video conversion parameter, a concomitant data conversion parameter, and layout information. The video conversion parameter is a parameter for converting a video image so as to be adapted to the display mode determined by contents display mode determiner 21. For example, contents display mode determiner 21 generates a video conversion parameter including a video conversion ratio. The video conversion ratio includes a video reduction ratio and a video enlargement ratio. Contents display mode determiner 21 may generate information for indicating the number of bits to be included in video data sent to user terminal 1, and a video conversion parameter including a video time resolution conversion ratio. The video time resolution conversion ratio includes a degree of frame decimation or the like.

The concomitant data conversion parameter is a parameter for converting concomitant data so as to be adapted to the display mode determined by contents display mode determiner 21. For example, contents display mode determiner 21 selects an amount of data that can be displayed in the concomitant data display area, among the concomitant data, depending on the size of the determined concomitant data display area. The amount of data that can be displayed is represented by the number of characters, for example. Contents display mode determiner 21 then generates a concomitant data conversion parameter including a list of data that can be displayed in the concomitant data display area. For example, contents display mode determiner 21 extracts a title portion and a sentence within given characters of the text included in the concomitant data, depending on the concomitant data display area, and generates a concomitant data conversion parameter.

The layout information is information descriptive of a layout with respect to a video image and concomitant data, *i.e.,* a dividing pattern. Contents display mode determiner 21 generates layout information including the shapes and sizes of the image display area and the concomitant data display area.

Specifically, contents converter 22 is implemented by a CPU of an information processing device which operates according to a program. As shown in FIG. 1, contents converter 22 comprises video data converter 221, concomitant data converter 222, and contents arrangement unit 223.

Video data converter 221 has a function to call (extract), from database 3, a video image requested (for distribution) from user terminal 1 based on request information 1A. Video data converter 221 also has a function to convert the extracted video data using the video conversion parameter, if necessary. Specifically, video data converter 221 converts a video image per video interval according to the display mode determined by contents display mode determiner 21. In this case, video data converter 221 reduces or enlarges the extracted video image according to the conversion ratio indicated by the video conversion parameter, for example.

Concomitant data converter 222 has a function to call (extract), from database 3, concomitant data corresponding to the video image requested by user terminal 1. Concomitant data converter 222 also has a function to convert the concomitant data using the concomitant data conversion parameter, if necessary. Specifically, concomitant data converter 222 converts concomitant data per video interval according to the display mode determined by contents display mode determiner 21. In this case, concomitant data converter 222 extracts data indicated in the list included in the concomitant data conversion parameter from the concomitant data, and generates converted concomitant data, for example. The data indicated in the list represent, for example, a title portion and sentence within given characters of the text.

Contents arrangement unit 223 has a function to generate new contents representing video data converted by video data converter 221 and concomitant data converted by concomitant data converter 222, which are arranged in a layout according to layout information. The new contents generated by contents arrangement unit 223 using the converted video and concomitant data will hereinafter referred to as converted contents. For example, contents arrangement unit 223 generates converted contents per video interval by arranging converted video and concomitant data in a layout according to the shapes and sizes of the video display area and the concomitant data display area which are represented by the layout information.

Specifically, contents distributor 23 is implemented by a CPU and a network interface of an information processing device which operates according to a program. Contents distributor 23 has a function to distribute converted contents to user terminal 1 through the communication network. Contents distributor 23 may individually distribute converted video data, converted concomitant data, and layout information, rather than distributing overall converted contents. In this case, user terminal 1 arranges and displays the converted video data and the converted concomitant data on the display screen according to the received layout information.

In the present exemplary embodiment, a memory device (not shown) of contents distribution server 2 stores various programs for distributing converted contents to user terminal 1. For example, the memory device of contents distribution server 2 stores a contents distribution program for enabling a computer to perform a process for receiving a contents distribution request from the user terminal through the communication network, a process for determining, per video interval, a display mode for displaying video data and concomitant data included in contents requested to be distributed on a display screen when a contents distribution request is received from the user terminal, a process for generating, per display interval, contents including arranged video data and concomitant data according to the determined display mode, and a process for sending the contents including arranged video data and concomitant data to the user terminal through the communication network.

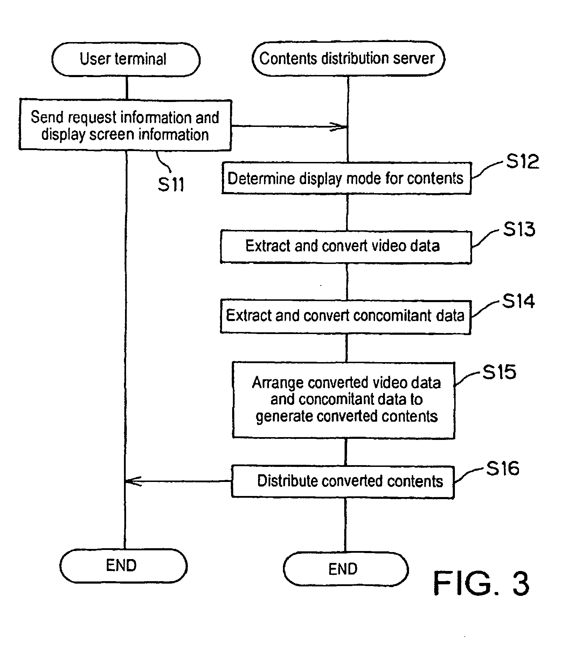

Operation of the contents display system according to the first exemplary embodiment will be described below. FIG. 3 shows an example of a process for the contents distribution server to distribute contents in response to a request from the user terminal.

When the user wants to view contents, the user operates user terminal 1 to enter a request to distribute the contents which the user wants to view. According to the action of the user, user terminal 1 sends request information 1A and display screen information 1B through the communication network to contents distribution server 2 in step S11. For example, user terminal 1 sends request information 1A including a contents name and a contents ID designated by the use through the communication network to contents distribution server 2. Furthermore, for example, user terminal 1 sends display screen information 1 B including the resolution of the display screen of user terminal 1 through the communication network to contents distribution server 2.

When the user terminal sends the above information, contents display mode determiner 21 of contents distribution server 2 receives request information 1A and display screen information 1 B from user terminal 1 through communication network 40. Contents display mode determiner 21 then determines a display mode for the contents per display interval based on request information 1A and display screen information 1 B that have been received, and the metadata accumulated in contents database 3 in step S12. Contents display mode determiner 21 also generates, per display interval, display mode determining information 21A including a video conversion parameter, a concomitant data conversion parameter, and layout information. Contents display mode determiner 21 supplys generated display mode determining information 21A to contents converter 22.

In step S13, video data converter 221 of contents converter 22 extracts the video data of the contents requested to be distributed from contents database 3 based on request information 1A, and converts the extracted video data per video interval based on the video conversion parameter included in display mode determining information 21A.

Next, in step S14, concomitant data converter 222 of contents converter 22 extracts the concomitant data of the contents requested to be distributed from contents database 3 based on request information 1A, and converts the extracted concomitant data per video interval based on the concomitant data conversion parameter included in display mode determining information 21A.

Next, in step S15, contents arrangement unit 223 of contents converter 22 arranges the converted video data and the converted concomitant data per video interval according to the layout information included in display mode determining information 21A, thereby generating converted contents. Thereafter, in step S16, contents distributor 23 sends the converted contents generated by contents converter 22 through the communication network to user terminal 1.

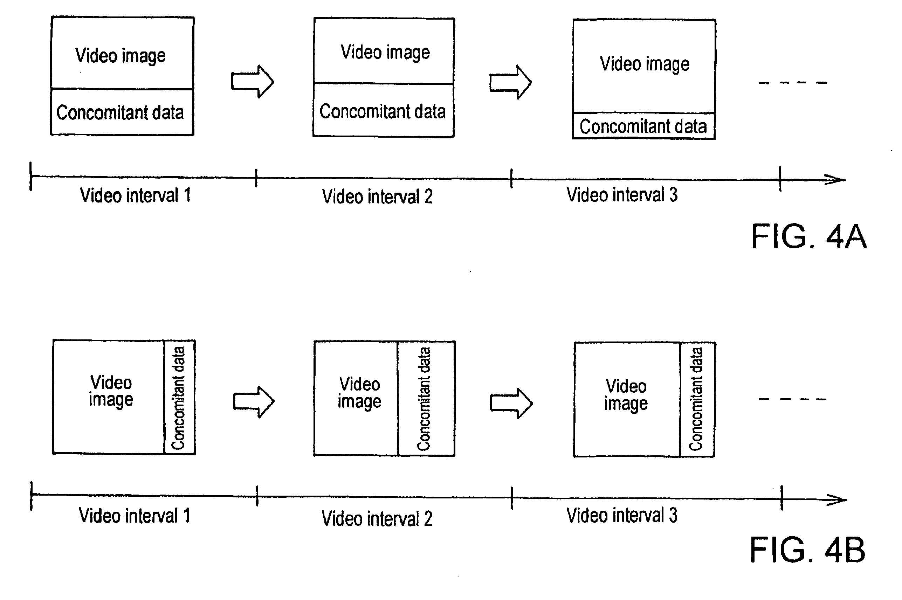

When the converted contents are thus generated and sent to user terminal 1, user terminal 1 reproduces and displays a video image and also displays, together with the video image, the concomitant data corresponding to the video image, based on the received converted contents. FIGs. 4A and 4B show examples of layouts of display screens for displaying the video image and the concomitant data on user terminal 1. FIG. 4A shows a case in which the video image and the concomitant data displayed using a dividing pattern in which the display screen is divided horizontally, and FIG. 4B shows another case in which the video image and the concomitant data displayed using a dividing pattern in which the display screen is divided vertically. As shown in FIGs. 4A and 4B, user terminal 1 displays the video image and the concomitant data per video interval while the ratio of the areas of the video display area and the concomitant data display area is being varied.

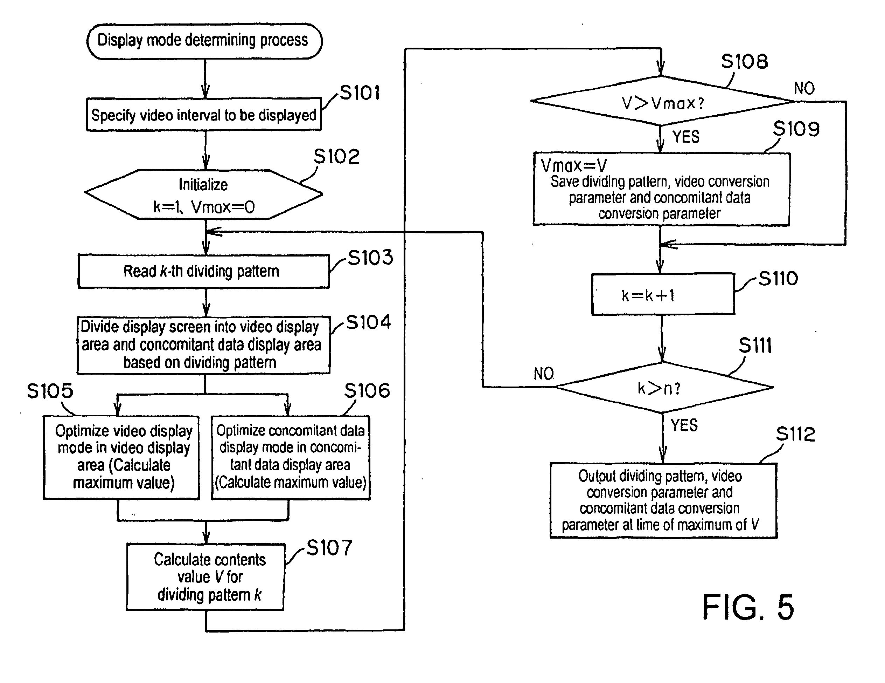

Next, operation of contents display mode determiner 21 to determine a display mode for contents in step S12 shown in FIG. 3 will be described below. FIG. 5 is a flow chart showing an example of a display mode determining process for contents display mode determiner 21 to determine a display mode for contents. In the present exemplary embodiment, contents display mode determiner 21 determines, per display interval, a value of contents when the display screen is divided into the video display area and the concomitant data display area using each of the dividing patterns accumulated in dividing pattern accumulator 34. Then, contents display mode determiner 21 selects a dividing pattern for a maximum contents value as a dividing pattern to be used for the display interval.

When contents display mode determiner 21 receives request information 1A and display screen information 1B from user terminal 1, contents display mode determiner 21 extracts video data and each concomitant data of the contents requested to be distributed from contents database 3 based on received request information 1A, and extracts each metadata corresponding to the contents requested to be distributed from contents database 3. Contents display mode determiner 21 identifies each video interval included in the video data based on the extracted metadata. For example, contents display mode determiner 21 determines the number of video intervals included in the video data and the positions of the video intervals in the video data, according to the starting and ending points of video intervals contained in metadata 840 about the overall video contents shown in FIG. 2. In step S101, contents display mode determiner 21 specifies a video interval to be displayed based on the identified video intervals. First, contents display mode determiner 21 selects a first video interval included in the video data as a video interval to be processed to determine a display mode.

It is assumed that $n$ pieces of dividing patterns are provided in advance and dividing pattern accumulator 34 accumulates $n$ pieces of the dividing patterns. When contents display mode determiner 21 selects a video interval to be processed, contents display mode determiner 21 initializes various variables and parameters used in the display mode determining process in step S102. In the present exemplary embodiment, contents display mode determiner 21 initializes prescribed variable $k$ to $k=1$ and prescribed value $V_{max}$ to $V_{max}=0$. Variable $k$ is a variable indicative of which one of the dividing patterns accumulated in dividing pattern accumulator 34 is currently used by contents display mode determiner 21 in the process. Value $V_{max}$ represents the maximum value of contents values that are determined for the respective dividing patterns by contents display mode determiner 21.

Then, in step S103, contents display mode determiner 21 reads a $k$-th dividing pattern from dividing pattern accumulator 34. Since variable $k$ is set to $k=1$ in step S102, contents display mode determiner 21 reads the first dividing pattern from dividing pattern accumulator 34 when it performs the display mode determining process for the first time. Thereafter, in step S104, contents display mode determiner 21 divides the display screen into the video display area and the concomitant data display area with respect to the video interval to be processed, based on the read dividing pattern.

Contents display mode determiner 21 converts the video image into a format optimum for the video display area. As a specific example of this conversion, the video image may be reduced to match the size of the divided video display area. Then, in step S105, contents display mode determiner 21 calculates a value (maximum value) which the video image has when the converted video image is displayed in the video display area. At this time, contents display mode determiner 21 determines a value that the converted video image which is displayed has, using a predetermined evaluation function. For example, generally, as the video image is reduced, it is more difficult to view the video image. Therefore, contents display mode determiner 21 determines the value of the video image such that the value is smaller as the video image is reduced, using the evaluation function. The evaluation function described here will hereinafter be referred to as a video image value calculating evaluation function.

Further, contents display mode determiner 21 converts the concomitant data corresponding to the video interval into a format optimum for the concomitant data display area. As a specific conversion example, data that can be displayed may be extracted depending on the size of the concomitant data display area. In step S106, contents display mode determiner 21 calculates a value (maximum value) which the concomitant data have when the converted concomitant data are displayed in the concomitant data display area. At this time, contents display mode determiner 21 determines a value that the converted concomitant data which are displayed have, using a predetermined evaluation function. This evaluation function will hereinafter be referred to as a concomitant data value calculating evaluation function. Generally, as the number of items of concomitant data displayed on the display screen is reduced, the amount of information that can be displayed is reduced, but the number of pages required to display the concomitant data is reduced, allowing the user to see the concomitant data more easily. Therefore, contents display mode determiner 21 determines a value that the converted concomitant data have, using an evaluation function having variables that are representative of the number of items of concomitant data displayed, the importance of those items, and the number of pages required to display the concomitant data.

Then, contents display mode determiner 21 calculates value V of the contents displayed on the display screen, *i.e.*, the overall video image and concomitant data, based on the converted video image and concomitant data, using another predetermined evaluation function, in step S107. This evaluation function will hereinafter be referred to as a contents value calculating evaluation function. In this case, according to a simplest method, for example, contents display mode determiner 21 determines value V of the overall contents using an evaluation function which simply averages the values of both video image and concomitant data.

In the present exemplary embodiment, contents display mode determiner 21 uses predetermined evaluation functions. However, contents display mode determiner 21 may extract evaluation functions from a memory storing evaluation functions and may determine a contents value using the extracted evaluation functions.

An example of the contents value calculating evaluation function which is used by contents display mode determiner 21 to evaluate value V of the contents displayed on user terminal 1, *i.e.*, the overall video image and concomitant data, will be described below. Contents display mode determiner 21 evaluates both video image and concomitant data using one or two or more of the amount of information to be provided to the user, the value of the information, and the ease with which to see the information, as evaluation criteria. Contents display mode determiner 21 can evaluate the value of the overall contents based on these evaluated values. For example, the value of the overall contents at the time the display screen is divided at an area ratio x:(1-x) can be described as a function having variables which represent the value of the video image displayed in the video display area and the value of the concomitant data displayed in the concomitant data display area. In this case, the value of the overall contents can be obtained by adding the value of the video image and the value of the concomitant data. Therefore, contents value calculating evaluation function $V(x)$ can be expressed as a function $f(g(x),h(x))$ having a variable which represents video image value calculating evaluation function $g(x)$ and a variable which represents concomitant data value calculating evaluation function $h(x)$. Contents value calculating evaluation function $V(x)$ can be expressed as the sum of video image value calculating evaluation function $g(x)$ and concomitant data value calculating evaluation function $h(x)$, according to equation (1):

$$V(x) = f\big(g(x), h(x)\big) = g(x) + h(x) \qquad (1)$$

An example of evaluation functions for video data and concomitant data per evaluation criterion will be described below. First, an example of evaluation functions using the amount of information provided to the user as a measure (evaluation criterion) will be described below. For evaluating video data and concomitant data using the amount of information provided to the user as a criterion, the number of pixels of a video image that can be displayed in the video data display area and the number of characters that can be displayed in the concomitant data display area are to be evaluated. It is assumed that a video image is converted so as to be displayed as widely as possible in the video display area whose resolution is represented by $w$ horizontal pixels and $v$ vertical pixels, with the aspect ratio of the video image being not changed. If the scaling ratio is represented by $b$, then since scaling ratio $b$ reflects the number of pixels that can be displayed, an evaluation function can be realized as a function having a variable representative of scaling ratio $b$. For example, if scaling ratio $b$ itself is used as an evaluated value of a video image, then the video image value calculating evaluation function is expressed by equation (2):

$$
\begin{aligned}
&g(w, v) = b \\
&b = \min(b1, b2), \quad b1 = w/x_{orig} \quad and \quad b2 = v/y_{orig} \\
&b = b_{max} \quad (b > b_{max}) \\
&b = 0 \quad (b < b_{min})
\end{aligned}
\qquad (2)
$$

where $x_{orig}$ and $y_{orig}$ indicate the height and width, respectively, of the original image, and $b_{max}$ and $b_{min}$ indicate the allowable maximum and minimum values, respectively, of the scaling ratio.

It is also assumed that concomitant data are converted so as to be displayed in the concomitant data display area whose resolution is represented by $w$ horizontal pixels and $v$ vertical pixels, or concomitant data are converted so as to be displayed in $q$ pages of the concomitant data display area. Specifically, it is assumed that there are $m$ items to be displayed in the concomitant data display area and items to be displayed in $g$ pages are selected from those items. It is assumed that there are $m$ items to be displayed in the concomitant data display area, the number of characters in one line is represented by $r$, the number of lines in one page by $s$, and the numbers of characters of the items by $t_1$, $t_2$, ..., $t_k$, ..., $t_m$ $(1 \leq k \leq m)$, and that whether an item is displayed in the concomitant data display area or not is represented by $a_1$, $a_2$, ..., $a_k$, ..., $a_m$ $(1 \leq k \leq m)$. $a_k$=1 means that the $k$-th item is displayed, and $a_k$=0 means that the $k$-th item is not displayed.

If the amount of information involved when all the concomitant data are displayed is represented by 1, then the amount of information of concomitant data converted so as to be held in $q$ pages of the concomitant data display area, $i.e.$, the concomitant data value calculating evaluation function, is expressed by equation (3):

$$h(w,v) = \max \left\{ \frac{\sum_{k=1}^{m} \{a_k \cdot floor\ (t_k/S)\}}{\sum_{k=1}^{m} floor\ (t_k/S)} \right\} \qquad (3)$$

$$\sum_{k=1}^{m} \{a_k \cdot floor\ (t_k/S)\} < g$$

where *floor* represents a function indicative of a roundup of fractions. By substituting equations (2) and (3) in equation (1), contents value calculating evaluation function $V(x)$ using the amount of information provided to the user as an evaluation criterion is obtained.

An example of evaluation functions using a value that information has as a measure (evaluation criterion) will be described below. For evaluating the value of information provided to the user as a measure, the value of a video image or a video region that can be displayed in the video data display area and the value of information of items displayed in the concomitant data display area are to be evaluated. The value of information may be evaluated for the user, or for the information provider, or for both the user and the information provider.

It is assumed with respect to video images that the value of information is assigned to each of a person and an object appearing in a video interval to be evaluated, there are $j$ pieces of appearances and video regions, the value of information that each appearance has is represented by $v_j$, and whether each appearance is displayed or not by $c_1$, $c_2$, ..., $c_k$, ..., $c_j$ $(1 \leq k \leq j)$. $c_k=1$ means that the $k$-th item is displayed, and $c_k=0$ means that the $k$-th item is not displayed. It is also assumed that appearances are selected so as to be able to display a combination of appearances having as high a value of information as possible in the limited video display area whose resolution is represented by $w$ horizontal pixels and $v$ vertical pixels. In this case, the video image value calculating evaluation function is expressed by equation (4):

$$g(w,v) = \max \left\{ \frac{\sum_{k=1}^{m} \{c_k \cdot v_k\}}{\sum_{k=1}^{m} v_k} \right\} \qquad (4)$$

In equation (4), the set of selected appearances should not extend beyond the video display area.
It is assumed with respect to concomitant data that there are $m$ items to be displayed in the concomitant data display area, the number of characters in one line is represented by $r$, the number of lines in one page by $s$, the numbers of characters of the items by $t_1, t_2, ..., t_k, ..., t_m$ $(1 \leq k \leq m)$, and the value of information of the items by $u_k$ $(0 \leq u_k \leq 1)$, and that whether an item is displayed in the concomitant data display area or not is represented by $a_1, a_2, ..., a_k, ..., a_m$ $(1 \leq k \leq m)$. $a_k=1$ means that the $k$-th item is displayed, and $a_k=0$ means that the $k$-th item is not displayed.
If the amount of information involved when all the concomitant data are displayed is represented by 1, then the value of information of concomitant data converted so as to be held in $q$ pages of the concomitant data display area, *i.e.*, concomitant data value calculating evaluation function $h(w,v)$, is expressed by equation (5):

$$h(w,v) = \max \left\{ \frac{\sum_{k=1}^{m} \{u_k \cdot a_k\}}{\sum_{k=1}^{m} u_k} \right\} \qquad (5)$$

$$\sum_{k=1}^{m} \{a_k \cdot floor(t_k/S)\} < g$$

By substituting equations (4) and (5) in equation (1), contents value calculating evaluation function $V(x)$ using the value of information provided to the user as a measure is obtained.

An example of evaluation functions using the ease with which to see information as an evaluation criterion will be described below. For evaluating the ease with which to see information provided to the user as a measure, the ease with which to see a video image displayed in the video data display area and the ease with which to see information displayed in the concomitant data display area are to be evaluated.

Firstly, a video image is evaluated based on the image qualities such as the smoothness of movement and the quantity of noise. It is assumed that the resolution of a video image is represented by $r$, the frame rate by $f$, the S/N ratio with respect to the original image by $s$, and the amount of movement by $m$. In this case, the video image value calculating evaluation function is expressed as a balance function having the above four variables by equation (6) shown below. Resolution $r$ and frame rate $f$ for optimizing the balance function are selected, and the video image can be converted according to resolution $r$ and frame rate $f$ that are selected.

$$g(w,v) = \max\{o(r,f,s,m)\} \qquad (6)$$

As the number of pages required to display concomitant data is smaller, then the information of the concomitant data can be seen with greater ease. Therefore, it is designed that a high evaluation is assigned in inverse proportion to the number of required pages. In this case, the concomitant data value calculating evaluation function is expressed by equation (7):

$$h(w,v) = h(l) = \begin{cases} 1 & (l < L) \\ (l_{max} - (l-L))/l_{max} & (L < l < l_{max}) \\ 0 & (l > l_{max}) \end{cases} \qquad (7)$$

where $l$ represents the number of lines required to display all selected items, $l_{max}$ the maximum number of lines, and $L$ the number of lines that can be displayed on the screen. By substituting equations (6) and (7) in equation (1), contents value calculating evaluation function $V(x)$ using the ease with which to see information provided to the user as a criterion is obtained.

An example of evaluation functions using the amount of information provided to the user, the value of information, and the ease with which to see information as evaluation criteria will be described below. In this case, an evaluation function based on a combination of any two or all of equations (2), (4), and (6), for example, can be used as the video image value calculating evaluation function, and an evaluation function based on a combination of any two or all of equations (3), (5), and (7), for example, can be used as the concomitant data value calculating evaluation function. For example, with respect to video data, equations (2) and (4) may be combined into a function taking into account a combination of appearances and scaling rations of the appearances in the given video display area. In this case, a video image value calculating evaluation function according to equation (8) may be used.

$$g(w,v) = \max\left\{ \frac{\sum_{k=1}^{m}\{c_k \cdot b_k \cdot v_k\}}{\sum_{k=1}^{m} v_k} \right\} \qquad (8)$$

With respect to concomitant data, for example, equations (5) and (7) may be combined into a function taking into account a tradeoff between the value of information and the ease with which to see information. In this case, a concomitant data value calculating evaluation function according to equation (9) may be used.

$$h(w,v) = \max\left\{ \frac{\sum\limits_{k=1}^{m}\{u_k \cdot a_k\}}{\sum\limits_{k=1}^{m} u_k} \cdot h(l) \right\},$$

$$h(l) = \left\{ \begin{array}{c} 1 \\ (l_{max} - (l - L))/l_{max} \\ 0 \end{array} \right\} \qquad (9)$$

$$\sum_{k=1}^{m}\{a_k \cdot floor(l_k/S)\} < g$$

By substituting equations (8) and (9) in equation (1), contents value calculating evaluation function $V(x)$ using the amount of information provided to the user, the value of information, and the ease with which to see information as criteria is obtained.

In step S108, contents display mode determiner 21 determines whether determined value $V$ of the overall contents is greater than maximum value $V_{max}$ of the content values or not. If contents display mode determiner 21 judges that calculated value $V$ of the overall contents is greater than maximum value $V_{max}$ of the content values, then contents display mode determiner 21 puts $V$ in $V_{max}$, thereby updating the value of $V_{max}$. Contents display mode determiner 21 generates a video conversion parameter for achieving an optimum display in the video display area and a concomitant data conversion parameter for achieving an optimum display in the concomitant data display area with respect to the $k$-th dividing pattern to be currently processed. In step S109, contents display mode determiner 21 saves the $k$-th dividing pattern and the video conversion parameter and the concomitant data conversion parameter which have been generated, in a storage device such as a memory or the like.

After updating the value of $V_{max}$, and saving the dividing pattern, the video conversion parameter, and the concomitant data conversion parameter, contents display mode determiner 21 adds 1 to variable $k$ in step S110. If contents display mode determiner 21 judges that calculated value $V$ of the overall contents is not greater than maximum value $V_{max}$ of the content values in step S108, then contents display mode determiner 21 skips the processing in step S109, and adds 1 to variable $k$.

In step S111, contents display mode determiner 21 determines whether the value of variable $k$ is greater than $n$ or not. If contents display mode determiner 21 judges that the value of variable $k$ is greater than n, then contents display mode determiner 21 judges that it has completed the processing on all the dividing patterns, and proceeds to the processing of step S112. If contents display mode determiner 21 judges that the value of variable $k$ is not greater than $n$, then goes back to step S103, and repeatedly performs the processing from step S103 to step S110. That is, contents display mode determiner 21 judges that there is a dividing pattern to be processed, reads a next dividing pattern accumulated in dividing pattern accumulator 34, and evaluates a contents value when the read dividing pattern is used.

As described above, the processing from step S103 to step S110 is repeatedly performed on all the dividing patterns accumulated in dividing pattern accumulator 34. By repeatedly processing all the dividing patterns, a dividing pattern, a video conversion parameter, and a concomitant data conversion parameter for the case of the maximum value of the overall contents are saved.

If contents display mode determiner 21 judges that the value of variable $k$ is greater than $n$, then contents display mode determiner 21 extracts and outputs the dividing pattern, the video conversion parameter, and the concomitant data conversion parameter currently stored in the storage device in step S112. Specifically, contents display mode determiner 21 outputs the dividing pattern, the video conversion parameter, and the concomitant data conversion parameter at the time of the maximum of contents value $V$, to contents converter 22. In this case, contents display mode determiner 21 generates layout information indicative of a layout on the display screen using the dividing pattern at the time of the maximum of contents value $V$. Contents display mode determiner 21 supplies display mode determining information 21A including the video conversion parameter, the concomitant data conversion parameter, and the layout information to contents converter 22.

As described above, contents display mode determiner 21 performs the processing from step S101 to step S112 to change the dividing pattern, *i.e.*, to increment $k$ by 1 ($k=k+1$), for thereby calculating values of the overall contents with respect to all the dividing patterns. Contents display mode determiner 21 employs the dividing pattern for the maximum value of the overall contents as a layout for the video interval and the concomitant data.

Contents display mode determiner 21 repeats the above process for each video interval included in the video data requested to be distributed. Contents display mode determiner 21 then calculates contents values for all the dividing patterns per video interval, determines a layout, and outputs display mode determining information 21A.

According to the present exemplary embodiment, as described above, contents distribution server 2 adaptively determines a display mode for contents depending on the substance of a video image and corresponding concomitant data with respect to each of the video intervals included in the video data. Contents distribution server 2 distributes contents converted according to the determined display mode to user terminal 1. User terminal 1 dynamically changes the video display area and the concomitant data display area per video interval according to the distributed contents, and displays them. According to the present exemplary embodiment, therefore, a display mode for contents is automatically determined per video interval, and a video image and concomitant data are displayed in a layout depending on the configurations of the display screen and the contents. According to the present exemplary embodiment, therefore, a video image and concomitant data can be displayed in a layout depending on the configurations of the display screen and the contents without the need for the contents creator to design a screen configuration per display screen with respect to individual information (*i.e.,* a video image and concomitant data). According to the present exemplary embodiment, furthermore, since a display mode for a video image and concomitant data can adaptively be determined and displayed per video interval depending on the contents of the video image and the concomitant data, a contents display system which is capable of effectively presenting video data and concomitant data can be realized.

According to the present exemplary embodiment, contents distribution server 2 adaptively determines a display mode for contents based on the display screen of the terminal which is a required condition of the viewer's side of video data and concomitant data. Consequently, a contents display system which is capable of effectively presenting video data and concomitant data on any desired display screens can be realized.

SECOND EXEMPLARY EMBODIMENT:

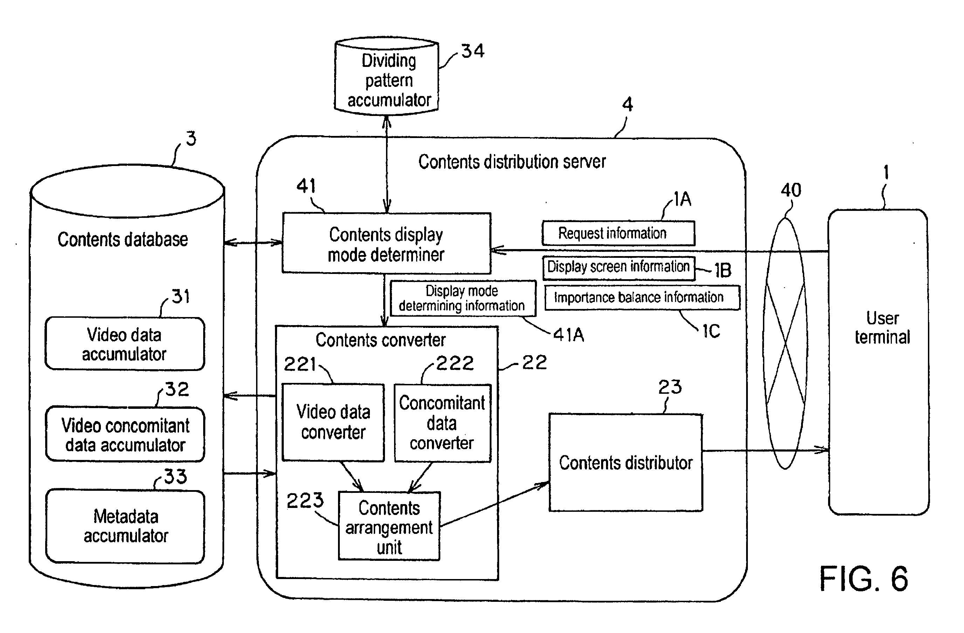

A contents display system according to a second exemplary embodiment of the present invention will be described below. FIG. 6 shows the contents display system according to the second exemplary embodiment. As shown in FIG. 6, in the contents display system according to the second exemplary embodiment, the function of contents display mode determiner 41 included in contents distribution server 4 is different from the function of contents display mode determiner 21 shown in the first exemplary embodiment. The system according to the second exemplary embodiment is different from the system according to the first exemplary embodiment in that user terminal 1 sends importance balance information 1C, in addition to request information 1A and display screen information 1B, to contents distribution server 4 through the communication network. In the second exemplary embodiment, the information accumulated in contents database 3 and dividing pattern accumulator 34 is the same as the information accumulated in contents database 3 and dividing pattern accumulator 34 in the first exemplary embodiment. The function of user terminal 1 is the same as the function of user terminal 1 in the first exemplary embodiment except that user terminal 1 sends importance balance information 1C, in addition to request information 1A and display screen information 1 B. The functions of contents converter 22 and contents distributor 23 of contents distribution server 4 are the same as those in the first exemplary embodiment.

In the system according to the second exemplary embodiment, contents display mode determiner 41 has a function to receive request information 1A, display screen information 1 B, and importance balance information 1C from user terminal 1 through the communication network. In the present exemplary embodiment, contents display mode determiner 41 receives information representative of the taste of the user or a balance between the importance of each video interval and the importance of corresponding concomitant data, as importance balance information (also referred to as importance information) 1C.

Contents display mode determiner 41 also has a function to determine a display mode for contents that have been requested to be distributed, based on request information 1A, display screen information 1B, and contents importance information 1C which are given (received) from user terminal 1, and the metadata. Contents display mode determiner 41 determines a display mode based on at least one of display screen information 1B, metadata such as video metadata and concomitant metadata, and importance balance information 1C.

In the second exemplary embodiment, contents display mode determiner 41 determines, per display interval, a display mode for displaying on user terminal 1 a video image requested (for distribution) and concomitant data corresponding to the video image. Contents display mode determiner 41 also has a function to generate display mode determining information 41A representing a determined display mode, and supply display mode determining information 41A to contents converter 22.

The contents importance refers to an importance balance between video data and concomitant data which the user wants to be distributed. In the present exemplary embodiment, specifically, contents display mode determiner 41 divides, per video interval, a display screen into a video display area and a concomitant data display area, using each of the dividing patterns prepared in dividing pattern accumulator 34, and determines evaluated values of the overall contents made up of the video image displayed in the video display area and the concomitant data displayed in the concomitant data display area, after the display screen is divided, with taking into account the contents importance.

Contents display mode determiner 41 then determines, per video interval, a dividing pattern which provides an optimum evaluated value, e.g., a maximum evaluated value, as a dividing pattern for use in dividing the display screen.

Display mode determining information 41A includes a video conversion parameter, a concomitant data conversion parameter, and layout information. The video conversion parameter is a parameter for converting a video image so as to be adapted to the determined display mode. The concomitant data conversion parameter is a parameter for converting concomitant data so as to be adapted to the determined display mode. The layout information is information descriptive of an arrangement layout with respect to a video image and concomitant data, *i.e.,* a dividing pattern. The importance balance between video data and concomitant data may be provided in advance from the contents creator rather than being provided from the user, *i.e.*, received from user terminal 1.

Operation of the contents display system according to the second exemplary embodiment will be described below. First, operation of contents distribution server 4 to distribute contents in response to a request from user terminal 1 will be described below.

When the user wants to view contents, the user operates user terminal 1 to enter a request to distribute the contents which the user wants to view. According to the action of the user, user terminal 1 sends request information 1A, display screen information 1B, and importance balance information 1C through communication network 40 to contents distribution server 4. Contents display mode determiner 41 of contents distribution server 4 determines a display mode for the contents based on request information 1A, display screen information 1B, and importance balance information 1C that have been received, and the metadata accumulated in contents database 3. The process in which contents converter 22 generates converted contents and the process in which contents distributor 23 distributes the converted contents are the same as the processing from step S13 to step S16 shown in FIG. 3.

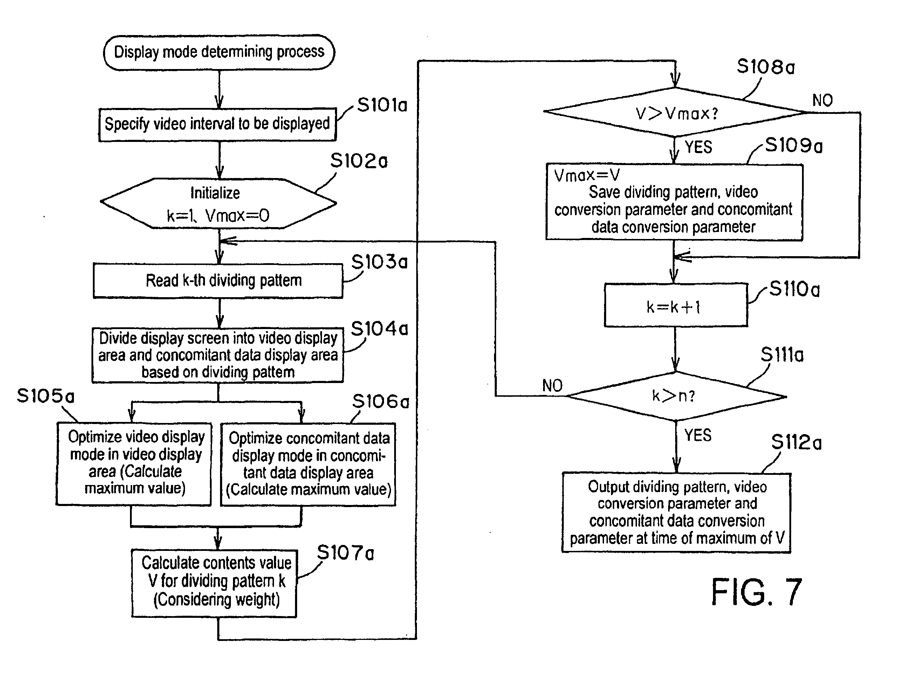

Operation of contents display mode determiner 41 to determine a display mode for contents will be described below. FIG. 7 shows a processing in which the contents display mode determiner determines a display mode for contents in the second exemplary embodiment.

As with the first exemplary embodiment, contents display mode determiner 41 extracts video data of the contents requested to be distributed and concomitant data of the contents requested to be distributed from contents database 3 based on received request information 1A. Contents display mode determiner 41 also extracts metadata corresponding to the contents requested to be distributed from contents database 3. Contents display mode determiner 41 identifies each video interval included in the video data based on the extracted metadata.

In step S101a, contents display mode determiner 41 then specifies a video interval to be displayed based on the results of the identification of video intervals. In the present exemplary embodiment, it is assumed that $n$ pieces of dividing patterns are provided in advance and dividing pattern accumulator 34 accumulates the $n$ pieces of dividing patterns. In step S102a, contents display mode determiner 41 initializes prescribed variable $k$ to $k=1$ and the maximum value of contents values to $V_{max}=0$.

Next, in step S103a, contents display mode determiner 41 reads a $k$-th dividing pattern from dividing pattern accumulator 34. In step S104a, contents display mode determiner 41 divides the display screen into the video display area and the concomitant data display area with respect to the video interval to be processed, based on the read dividing pattern. In step S105a, contents display mode determiner 41 then converts a video image into a format optimum for the video display area, and calculates a value (maximum value) which the video image has when the converted video image is displayed in the video display area, using a predetermined evaluation function. Generally, as the video image is reduced, it is more difficult to view the video image. Therefore, contents display mode determiner 41 determines the value of the video image such that the value is smaller as the video image is reduced, using the evaluation function.

In step S106a, contents display mode determiner 41 converts concomitant data corresponding to the video interval into a format optimum for the concomitant data display area, and calculates a value (maximum value) which the concomitant data have when the converted concomitant data are displayed in the concomitant data display area, using a predetermined evaluation function. For example, generally, as the number of items of concomitant data displayed on the display screen is reduced, the amount of information that can be displayed is reduced, but the number of pages required to display the concomitant data is reduced, allowing the user to see the concomitant data more easily. Therefore, contents display mode determiner 41 determines a value that the converted concomitant data have, using an evaluation function having variables that are representative of the number of items of concomitant data displayed, the importance of those items, and the number of pages required to display the concomitant data.

In step S107a, contents display mode determiner 41 calculates value $V$ of the overall contents (*i.e.*, a video image and concomitant data) displayed on the display screen, based on the converted video image and concomitant data, using a predetermined evaluation function. In the present exemplary embodiment, contents display mode determiner 41 calculates value $V$ of the overall contents using an evaluation function in the values of both the video image and the concomitant data are weighted based on contents importance information 1C. At this time, according to a simplest method, for example, contents display mode determiner 41 weights and adds the values of both the video image and the concomitant data based on contents importance information 1C.

An example of the contents value calculating evaluation function which is used by contents display mode determiner 41 to evaluate value $V$ of the overall contents will be described below. For example, contents value calculating evaluation function $V(x)$ can be expressed as the weighted sum of video image value calculating evaluation function $g(x)$ and concomitant data value calculating evaluation function $h(x)$, according to equation (10):

$$V(x) = f(g(x), h(x), w) = wg(x) + (1-w)h(x) \qquad (10)$$

where w represents the importance of the video image and (1-w) the importance of the concomitant data.

In step S108a, contents display mode determiner 41 then determines whether determined value $V$ of the overall contents is greater than maximum value $V_{max}$ of the content values or not. If contents display mode determiner 41 judges that calculated value $V$ of the overall contents is greater than maximum value $V_{max}$ of the content values, then contents display mode determiner 41 puts $V$ in $V_{max}$ to update the value of $V_{max}$, generates a video conversion parameter for achieving an optimum display in the video display area and a concomitant data conversion parameter for achieving an optimum display in the concomitant data display area with respect to the $k$-th dividing pattern to be currently processed, and saves the $k$-th dividing pattern and the video conversion parameter and the concomitant data conversion parameter which have been generated, in a storage device such as a memory or the like, in step S109a.

After updating the value of $V_{max}$, and saving the dividing pattern, the video conversion parameter, and the concomitant data conversion parameter, contents display mode determiner 41 adds 1 to variable $k$ in step S110a. If contents display mode determiner 41 judges that value $V$ of the overall contents is not greater than maximum value $V_{max}$ of the content values in step S108a, then contents display mode determiner 41 skips the processing in step S109a, and adds 1 to variable $k$.

Next, in step S111a, contents display mode determiner 41 determines whether the value of variable $k$ is greater than $n$ or not. If contents display mode determiner 41 judges that the value of variable $k$ is greater than $n$, then contents display mode determiner 41 judges that it has completed the processing on all the dividing patterns, and proceeds to the processing of step S112a. If contents display mode determiner 41 judges that the value of variable $k$ is not greater than $n$, then goes back to step S103a, and repeatedly performs the processing from step S103a to step S110a. That is, contents display mode determiner 41 judges that there is a dividing pattern to be processed, reads a next dividing pattern accumulated in dividing pattern accumulator 34, and evaluates a contents value when the read dividing pattern is used.

If contents display mode determiner 41 judges that the value of variable $k$ is greater than $n$ in step S111 a, then contents display mode determiner 41 extracts and outputs the dividing pattern, the video conversion parameter, and the concomitant data conversion parameter currently stored in the storage device in step S112a. Specifically, contents display mode determiner 41 supplies the dividing pattern, the video conversion parameter, and the concomitant data conversion parameter at the time of the maximum of contents value $V$, to contents converter 22. In this case, contents display mode determiner 41 generates layout information indicative of an arrangement layout on the display screen using the dividing pattern at the time of the maximum of contents value $V$, and supplies display mode determining information 41A including the video conversion parameter, the concomitant data conversion parameter, and the layout information to contents converter 22.

As described above, contents display mode determiner 41 performs the processing from step S101a to step S112a to change the dividing pattern, *i.e.*, to increment $k$ by 1 ($k=k+1$), for thereby calculating values of the overall contents with respect to all the dividing patterns. Contents display mode determiner 41 then employs the dividing pattern for the maximum value of the overall contents as an arrangement layout for the video image and the concomitant data.

Contents display mode determiner 41 repeats the above process for each video interval included in the video data requested to be distributed, and calculates contents values for all the dividing patterns, per video interval, to determine an arrangement layout, and outputs display mode determining information 41A.

According to the second exemplary embodiment, as described above, contents distribution server 4 adaptively determines a display mode for contents depending on the substance of a video image and corresponding concomitant data with respect to each of the video intervals included in the video data. Contents distribution server 4 then distributes contents converted according to the determined display mode to user terminal 1. User terminal 1 dynamically changes the video display area and the concomitant data display area per video interval according to the distributed contents, and displays them. According to the present exemplary embodiment, therefore, a display mode for contents is automatically determined per video interval, and a video image and concomitant data are displayed in a layout depending on the configurations of the display screen and the contents. Therefore, a video image and concomitant data can be displayed in a layout depending on the configurations of the display screen and the contents without the need for the contents creator to design a screen configuration per display screen with respect to individual information (*i.e.*, a video image and concomitant data).

According to the second exemplary embodiment, since a display mode for a video image and concomitant data can adaptively be determined and displayed per video interval depending on the substance of the video image and the concomitant data, a contents display system which is capable of effectively presenting video data and concomitant data can be realized. According to the present exemplary embodiment, contents distribution server 4 adaptively determines a display mode for contents based on the display screen of the terminal which is a required condition of the viewer's side of video data and concomitant data. Consequently, a contents display system is capable of effectively presenting video data and concomitant data on any desired display screens can be realized. Furthermore, inasmuch as contents distribution server 4 adaptively determines a display mode for contents based on the importance balance which is a required condition of the viewer's side of video data and concomitant data, a contents display system is capable of effectively presenting video data and concomitant data to match the taste of the user can be realized according to the present exemplary embodiment.

THIRD EXEMPLARY EMBODIMENT:

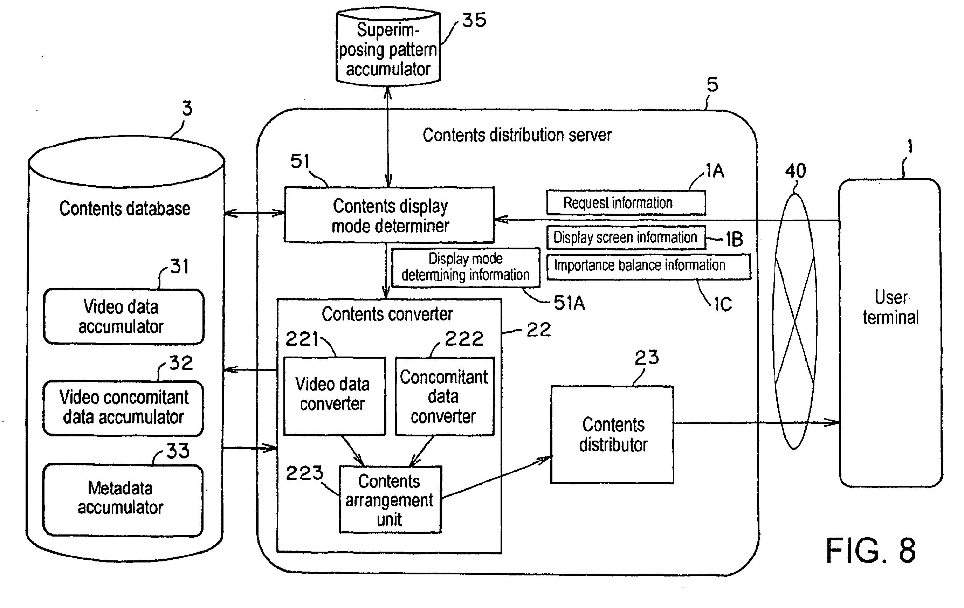

A contents display system according to a third exemplary embodiment of the present invention will be described below. FIG. 8 shows a constitution of the contents display system according to the third exemplary embodiment. In this contents display system, the function of contents display mode determiner 51 included in contents distribution server 5 is different from the function of contents display mode determiner 41 shown in the second exemplary embodiment. The contents display system is different from the contents display system of the second exemplary embodiment in that it includes superimposing pattern accumulator 35 instead of dividing pattern accumulator 34. In the third exemplary embodiment, the information accumulated in contents database 3 is the same as the information accumulated in contents database 3 in the second exemplary embodiment, the function of user terminal 1 is the same as the function of user terminal 1 in the second exemplary embodiment, and the functions of contents converter 22 and contents distributor 23 of contents distribution server 5 are the same as those in the second exemplary embodiment.

Superimposing pattern accumulator 35 serves to accumulate a plurality of superimposing patterns representative of patterns for superimposing and displaying concomitant data over video data on the display screen. Specifically, superimposing pattern accumulator 35 is implemented by a database device such as a magnetic disk drive, an optical disk drive, or the like. Superimposing pattern accumulator 35 accumulates, as superimposing patterns, a pattern for superimposing concomitant data over upper, lower, left, and right regions of a video image and a pattern for superimposing concomitant data in a vertical or horizontal writing mode. Superimposing pattern accumulator 35 also accumulates, as superimposing patterns, rectangular regions of various areas for superimposing concomitant data.

Contents display mode determiner 51 has a function to receive request information 1A, display screen information 1B, and importance balance information 1C from user terminal 1 through communication network 40, and a function to determine a display mode for contents that have been requested to be distributed, based on request information 1A, display screen information 1B, and contents importance information 1C which are given (received) from user terminal 1, and the metadata. In the present exemplary embodiment, contents display mode determiner 51 determines, per video interval, a display mode for displaying on user terminal 1 a video image requested (for distribution) and concomitant data corresponding to the video image. Contents display mode determiner 51 also has a function to generate display mode determining information 51A representing a determined display mode, and supply display mode determining information 51A to contents converter 22.

The contents importance refers to an importance balance between video data and concomitant data which the user wants to be distributed. According to the present exemplary embodiment, specifically, contents display mode determiner 51 superimposes concomitant data over each video interval on the display screen, using each of the superimposing patterns prepared in superimposing pattern accumulator 35, and determines evaluated values of the overall contents made up of the video image and the concomitant data displayed on the display screen, after the concomitant data are superimposed, with taking into account the contents importance. Contents display mode determiner 51 then determines, per video interval, a superimposing pattern which provides an optimum evaluated value, e.g., a maximum evaluated value, as a superimposing pattern for use in superimposing the concomitant data.

Display mode determining information 51A includes a video conversion parameter, a concomitant data conversion parameter, and layout information. The video conversion parameter is a parameter for converting a video image so as to be adapted to the determined display mode. The concomitant data conversion parameter is a parameter for converting concomitant data so as to be adapted to the determined display mode. The layout information is information descriptive of an arrangement layout with respect to a video image and concomitant data, i.e., a superimposing pattern. The importance balance between video data and concomitant data may be provided in advance from the contents creator rather than being provided from the user, *i.e.*, received from user terminal 1.

Operation of the contents display system according to the third exemplary embodiment will be described below. First, operation of contents distribution server 5 to distribute contents in response to a request from user terminal 1 will be described below.

When the user wants to view contents, the user operates the user terminal 1 to enter a request to distribute the contents which the user wants to view. According to the action of the user, user terminal 1 sends request information 1A, display screen information 1 B, and importance balance information 1C through communication network 40 to contents distribution server 5. Contents display mode determiner 51 of contents distribution server 5 then determines a display mode for the contents based on request information 1A, display screen information 1B, and importance balance information 1C that have been received, and the metadata accumulated in contents database 3. The process in which contents converter 22 generates converted contents and the process in which contents distributor 23 distributes converted contents are the same as the processing from step S13 to step S16 shown in FIG. 3.

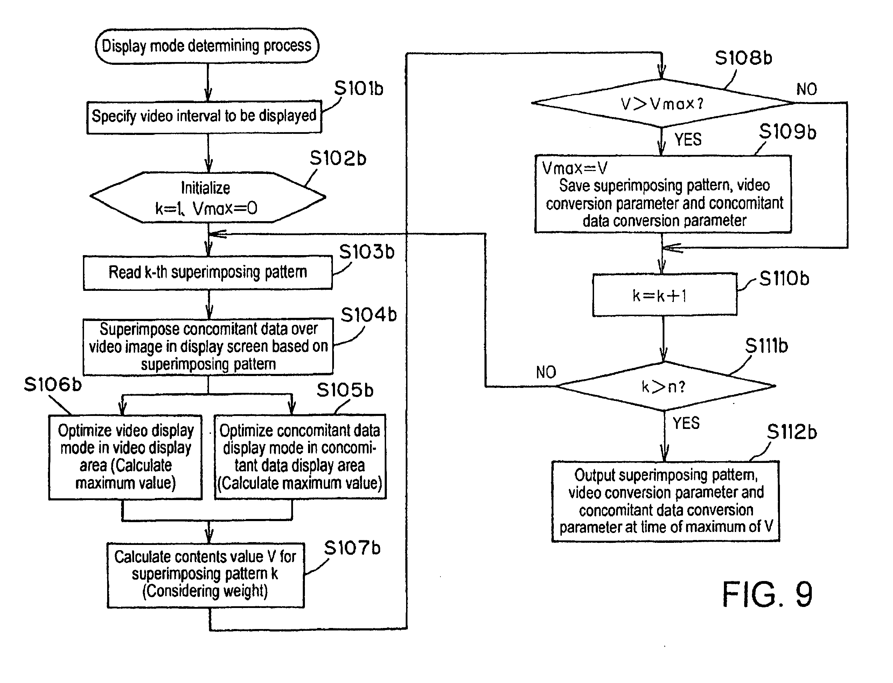

Operation of contents display mode determiner 51 to determine a display mode for contents will be described below. FIG. 9 shows a process in which the contents display mode determiner determines a display mode for contents in the third exemplary embodiment.

As with the first exemplary embodiment, contents display mode determiner 51 extracts video data of the contents requested to be distributed and each concomitant data of the contents requested to be distributed from contents database 3 based on received request information 1A. Contents display mode determiner 51 also extracts each metadata corresponding to the contents requested to be distributed from contents database 3. Contents display mode determiner 51 identifies each video interval included in the video data based on the extracted metadata.

In step S101b, contents display mode determiner 51 then specifies a video interval to be displayed based on the identification results of video intervals. According to the present exemplary embodiment, it is assumed that $n$ pieces of superimposing patterns are provided in advance and superimposing pattern accumulator 35 accumulates the $n$ pieces of dividing patterns. In step S102b, contents display mode determiner 51 initializes prescribed variable k to $k=1$ and the maximum value of contents values to $V_{max}=0$.

Next, in step S103b, contents display mode determiner 51 reads a $k$-th superimposing pattern from superimposing pattern accumulator 35. In step S104b, contents display mode determiner 41 superimposes the concomitant data over the video image in the video interval to be processed based on the read superimposing pattern. In step S105b, contents display mode determiner 51 converts concomitant data corresponding to the video interval into an optimum format, and calculates a value (maximum value) which the concomitant data have when the converted concomitant data are displayed in the concomitant data display area, using a predetermined evaluation function. Generally, as the number of items of concomitant data displayed on the display screen is reduced, the amount of information that can be displayed is reduced, but the number of pages required to display the concomitant data is reduced, allowing the user to see the concomitant data more easily. Therefore, contents display mode determiner 51 determines a value that the converted concomitant data have, using an evaluation function having, for example, variables that are representative of the number of items of concomitant data displayed, the importance of those items, and the number of pages required to display the concomitant data.

In step S106b, contents display mode determiner 51 converts a video image into a format optimum for the video display area, and calculates a value (maximum value) which the video image has when the converted video image is displayed in the video display area, using a predetermined evaluation function. In this case, contents display mode determiner 51 determines a video image value taking into account a reduction of the value caused by the superimposed concomitant data, using the evaluation function. For example, if the concomitant data are to be superimposed over a region, such as a sky, not interfering with the video image, then contents display mode determiner 51 determines a video image value so as to increase the value. Conversely, if the concomitant data are to be superimposed over the face of a principal character, significantly interfering with the video image, then contents display mode determiner 51 determines a video image value so as to reduce the value.

Further, in step S107b, contents display mode determiner 51 calculates value $V$ of the overall contents (*i.e.*, a video image and concomitant data) displayed on the display screen, based on the converted video image and concomitant data, using a predetermined evaluation function. In the present exemplary embodiment, contents display mode determiner 51 calculates value $V$ of the overall contents using an evaluation function in which the values of both the video image and the concomitant data are weighted based on contents importance information 1C.

In step S108b, contents display mode determiner 51 determines whether determined value $V$ of the overall contents is greater than maximum value $V_{max}$ of the content values or not. If contents display mode determiner 51 judges that calculated value $V$ of the overall contents is greater than maximum value $V_{max}$ of the content values, then contents display mode determiner 51 puts $V$ in $V_{max}$ to update the value of $V_{max}$, generates a video conversion parameter for achieving an optimum display in the video display area and a concomitant data conversion parameter for achieving an optimum display in the concomitant data display area with respect to the $k$-th superimposing pattern to be currently processed, and saves the $k$-th superimposing pattern and the video conversion parameter and the concomitant data conversion parameter which have been generated, in a storage device such as a memory or the like, in step S109b.

After updating the value of $V_{max}$, and saving the dividing pattern, the video conversion parameter, and the concomitant data conversion parameter, contents display mode determiner 51 adds 1 to variable $k$ in step S110b. If contents display mode determiner 51 judges that value $V$ of the overall contents is not greater than maximum value $V_{max}$ of the content values in step S108b, then contents display mode determiner 51 skips the processing in step S109b, and adds 1 to variable $k$.

**EP 1 883 241 B1**

In step S111b, contents display mode determiner 51 determines whether the value of variable $k$ is greater than $n$ or not. If contents display mode determiner 51 judges that the value of variable $k$ is greater than $n$, then contents display mode determiner 51 judges that it has completed the processing on all the dividing patterns, and proceeds to the processing of step S112b. If contents display mode determiner 51 judges that the value of variable $k$ is not greater than $n$, then goes back to step S103b, and repeatedly perform the processing from step S103b to step S110b. That is, contents display mode determiner 51 judges that there is a superimposing pattern to be processed, reads a next superimposing pattern accumulated in superimposing pattern accumulator 35, and evaluates a contents value when the read superimposing pattern is used.

If contents display mode determiner 51 judges that the value of variable $k$ is greater than $n$ in step S111b, then contents display mode determiner 51 extracts and outputs the superimposing pattern, the video conversion parameter, and the concomitant data conversion parameter currently stored in the storage device in step S112b. Specifically, contents display mode determiner 51 supplies the dividing pattern, the video conversion parameter, and the concomitant data conversion parameter at the time of the maximum of contents value $V$, to contents converter 22. In this case, contents display mode determiner 51 generates layout information indicative of an arrangement layout on the display screen using the superimposing pattern at the time of the maximum of contents value $V$, and supplies display mode determining information 51 A including the video conversion parameter, the concomitant data conversion parameter, and the layout information to contents converter 22.

As described above, contents display mode determiner 51 performs the processing from step S101b to step S112b to change the superimposing pattern, i.e., to increment $k$ by 1 ($k=k+1$), for thereby calculating values of the overall contents with respect to all the superimposing patterns. Contents display mode determiner 51 employs the superimposing pattern for the maximum value of the overall contents as an arrangement layout for the video image and the concomitant data.

Contents display mode determiner 51 repeats the above process for each video interval included in the video data requested to be distributed, and calculates contents values for all the superimposing patterns, per video interval to determine an arrangement layout, and outputs display mode determining information 51A.

According to the third exemplary embodiment, as described above, contents distribution server 5 adaptively determines a display mode for contents depending on the substance of a video image and corresponding concomitant data with respect to each of the video intervals included in the video data. Contents distribution server 5 distributes contents converted according to the determined display mode to user terminal 1. User terminal 1 dynamically changes the video display area and the concomitant data display area per video interval according to the distributed contents, and displays them. According to the present exemplary embodiment, therefore, a display mode for contents is automatically determined per video interval, and a video image and concomitant data are displayed in a layout depending on the configurations of the display screen and the contents. Therefore, a video image and concomitant data can be displayed in a layout depending on the configurations of the display screen and the contents without the need for the contents creator to design a screen configuration per display screen with respect to individual information (i.e., a video image and concomitant data).

According to the third exemplary embodiment, since a display mode for a video image and concomitant data can adaptively be determined and displayed per video interval depending on the substance of the video image and the concomitant data, a contents display system which is capable of effectively presenting video data and concomitant data can be realized. According to the present exemplary embodiment, contents distribution server 5 adaptively determines a display mode for contents based on the display screen of the terminal which is a required condition of the viewer's side of video data and concomitant data. Consequently, a contents display system which is capable of effectively presenting video data and concomitant data on any desired display screens can be realized. Furthermore, according to the present exemplary embodiment, inasmuch as contents distribution server 5 adaptively determines a display mode for contents based on the importance balance which is a required condition of the viewer's side of video data and concomitant data, a contents display system which is capable of effectively presenting video data and concomitant data to match the taste of the user can be realized.

FOURTH EXEMPLARY EMBODIMENT:

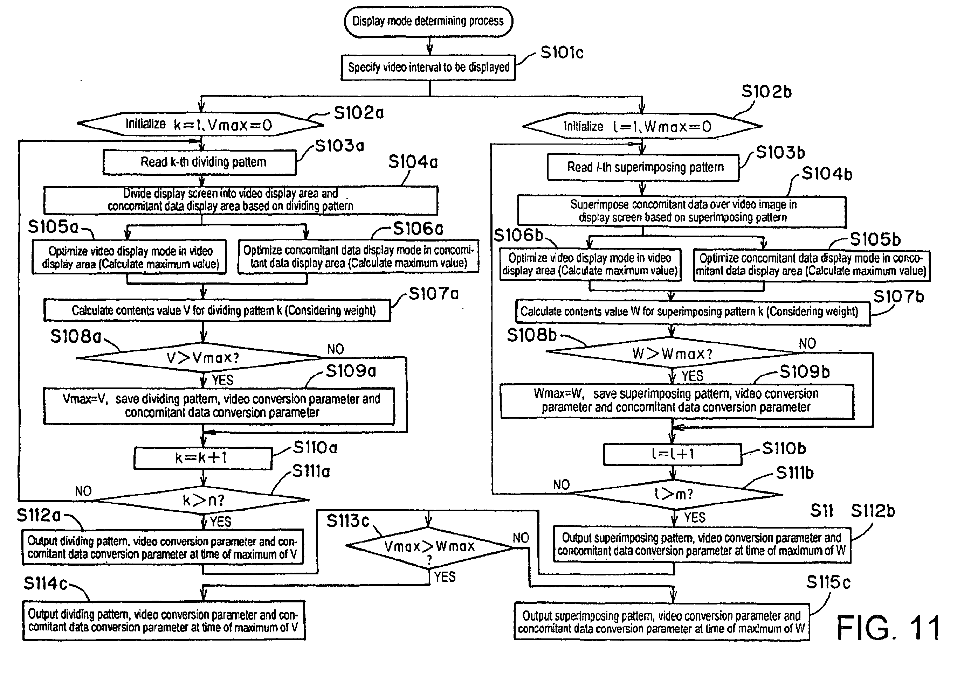

A contents display system according to a fourth exemplary embodiment of the present invention will be described below. FIG. 11 shows a constitution of the contents display system according to the fourth exemplary embodiment. In this contents display system, function of a contents display mode determiner 61 included in contents distribution server 6 is different from the function of contents display mode determiner 41 shown in the second exemplary embodiment. The contents display system is different from the contents display system in the second exemplary embodiment in that it includes superimposing pattern accumulator 35 in addition to dividing pattern accumulator 34. In the fourth exemplary embodiment, the information accumulated in contents database 3 and dividing pattern accumulator 34 is the same as the information accumulated in those in the second exemplary embodiment, the function of user terminal 1 is the same as the function of user terminal 1 in the second exemplary embodiment, and the functions of contents converter 22 and contents distributor 23 of contents distribution server 6 are the same as those in the second exemplary embodiment.

Superimposing pattern accumulator 35 serves to accumulate a plurality of superimposing patterns representative of patterns for superimposing and displaying concomitant data over video data on the display screen. Superimposing pattern accumulator 35 accumulates, as superimposing patterns, a pattern for superimposing concomitant data over upper, lower, left, and right regions of a video image and a pattern for superimposing concomitant data in a vertical or horizontal writing mode. Superimposing pattern accumulator 35 also accumulates, as superimposing patterns, rectangular regions of various areas for superimposing concomitant data.

Contents display mode determiner 61 has a function to receive request information 1A, display screen information 1 B, and importance balance information 1C from user terminal 1 through communication network 40, and a function to determine a display mode for contents that have been requested to be distributed, based on request information 1A, display screen information 1 B, and contents importance information 1C given (received) from user terminal 1, and the metadata. In the present exemplary embodiment, contents display mode determiner 61 determines, per video interval, a display mode for displaying on user terminal 1 a video image requested (for distribution) and concomitant data corresponding to the video image. Contents display mode determiner 61 also has a function to generate display mode determining information 61A representing a determined display mode, and supply display mode determining information 61A to contents converter 22.

The contents importance refers to an importance balance between video data and concomitant data which the user wants to be distributed. In the present exemplary embodiment, specifically, contents display mode determiner 61 divides, per video interval, a display screen into a video display area and a concomitant data display area, using each of the dividing patterns in dividing pattern accumulator 34, and determines evaluated values of the overall contents made up of the video image displayed in the video display area and the concomitant data displayed in the concomitant data display area, after the display screen is divided, with taking into account the contents importance. Contents display mode determiner 61 determines, per video interval, a dividing pattern which provides an optimum evaluated value, *e.g.*, a maximum evaluated value, as a dividing pattern for use in dividing the display screen. Contents display mode determiner 61 superimposes concomitant data over each video interval on the display screen, using each of the superimposing patterns prepared in superimposing pattern accumulator 35, and determines evaluated values of the overall contents made up of the video image and the concomitant data displayed on the display screen, after the concomitant data are superimposed, with taking into account the contents importance. Contents display mode determiner 61 then determines, per video interval, a superimposing pattern which provides an optimum evaluated value, e.g., a maximum evaluated value, as a superimposing pattern for use in superimposing the concomitant data.

Using a dividing pattern with an optimum evaluated value as an optimum dividing pattern and a superimposing pattern with an optimum evaluated value as an optimum superimposing pattern, contents display mode determiner 61 compares the evaluated value of the optimum dividing pattern and the evaluated value of the optimum superimposing pattern with each other, and selects one of the optimum dividing pattern and the optimum superimposing pattern which provides an optimum evaluated value, e.g., a greater value, as a pattern for use in displaying a video image and concomitant data.

Display mode determining information 61A includes a video conversion parameter, a concomitant data conversion parameter, and layout information. The video conversion parameter is a parameter for converting a video image so as to be adapted to the determined display mode. The concomitant data conversion parameter is a parameter for converting concomitant data so as to be adapted to the determined display mode. The layout information is information descriptive of an arrangement layout with respect to a video image and concomitant data. The arrangement layout refers to a dividing pattern or a superimposing pattern. The importance balance between video data and concomitant data may be provided in advance from the contents creator rather than being provided from the user, *i.e.*, received from user terminal 1.

Operation of the contents display system according to the fourth exemplary embodiment will be described below. First, operation of contents distribution server 6 to distribute contents in response to a request from user terminal 1 will be described below.

When the user wants to view contents, the user operates user terminal 1 to enter a request to distribute the contents which the user wants to view. According to the action of the user, user terminal 1 sends request information 1A, display screen information 1 B, and importance balance information 1C through communication network 40 to contents distribution server 6. Contents display mode determiner 61 of contents distribution server 6 determines a display mode for the contents based on request information 1A, display screen information 1 B, and importance balance information 1C that have been received, and the metadata accumulated in contents database 3. The process in which contents converter 22 generates converted contents and the process in which contents distributor 23 distributes converted contents are the same as the processing from step S13 to step S16 shown in FIG. 3.

Next, operation of contents display mode determiner 61 to determine a display mode for contents will be described below. FIG. 11 shows a process in which the contents display mode determiner determines a display mode for contents in the fourth exemplary embodiment.

As with the first exemplary embodiment, contents display mode determiner 61 extracts video data of the contents requested to be distributed and each concomitant data of the contents requested to be distributed from contents database 3 based on received request information 1A. Contents display mode determiner 61 extracts each metadata corresponding to the contents requested to be distributed from contents database 3. Contents display mode determiner 61 identifies each video interval included in the video data based on the extracted metadata.

Next, in step S101c, contents display mode determiner 61 specifies a video interval to be displayed based on the identification results of video intervals. In the present exemplary embodiment, it is assumed that n pieces of dividing patterns are provided in advance and dividing pattern accumulator 34 accumulates the n pieces of dividing patterns. In step S102a, contents display mode determiner 61 initializes prescribed variable $k$ to $k$=1 and the maximum value of contents values to $V_{max}$=0.

In step S103a, contents display mode determiner 61 then reads a k-th dividing pattern from dividing pattern accumulator 34. In step S104a, contents display mode determiner 61 divides the display screen into the video display area and the concomitant data display area with respect to the video interval to be processed, based on the read dividing pattern. In step S105a, the contents display mode determiner 61 converts a video image into a format optimum for the video display area, and calculates a value (maximum value) which the video image has when the converted video image is displayed in the video display area, using a predetermined evaluation function. Generally, as the video image is reduced, it is more difficult to view the video image. Therefore, contents display mode determiner 61 determines the value of the video image such that the value is smaller as the video image is reduced, using the evaluation function.

Similarly, in step S106a, contents display mode determiner 61 converts concomitant data corresponding to the video interval into a format optimum for the concomitant data display area, and calculates a value (maximum value) which the concomitant data have when the converted concomitant data are displayed in the concomitant data display area, using a predetermined evaluation function. Generally, as the number of items of concomitant data displayed on the display screen is reduced, the amount of information that can be displayed is reduced, but the number of pages required to display the concomitant data is reduced, allowing the user to see the concomitant data more easily. Therefore, contents display mode determiner 61 determines a value that the converted concomitant data have, using an evaluation function having variables that are representative of the number of items of concomitant data displayed, the importance of those items, and the number of pages required to display the concomitant data.

Next, in step S107a, contents display mode determiner 61 calculates value V of the overall contents (*i.e.*, a video image and concomitant data) displayed on the display screen, based on the converted video image and concomitant data, using a predetermined evaluation function. According to the present exemplary embodiment, contents display mode determiner 61 calculates value V of the overall contents using an evaluation function in which the values of both the video image and the concomitant data are weighted based on contents importance information 1C. At this time, according to a simplest method, for example, contents display mode determiner 61 weights and adds the values of both the video image and the concomitant data based on contents importance information 1C.

In step S108a, contents display mode determiner 61 determines whether determined value *V* of the overall contents is greater than maximum value $V_{max}$ of the content values or not. If contents display mode determiner 61 judges that calculated value *V* of the overall contents is greater than maximum value $V_{max}$ of the content values, then contents display mode determiner 41 puts *V* in $V_{max}$ to update the value of $V_{max}$, generates a video conversion parameter for achieving an optimum display in the video display area and a concomitant data conversion parameter for achieving an optimum display in the concomitant data display area with respect to the *k*-th dividing pattern to be currently processed, and saves the *k*-th dividing pattern and the video conversion parameter and the concomitant data conversion parameter which have been generated, in a storage device such as a memory or the like, in step S109a.

After updating the value of $V_{max}$, and saving the dividing pattern, the video conversion parameter, and the concomitant data conversion parameter, contents display mode determiner 61 adds 1 to variable *k* in step S110b. If contents display mode determiner 61 judges that value *V* of the overall contents is not greater than maximum value $V_{max}$ of the content values in step S108a, then contents display mode determiner 61 skips the processing in step S109a, and adds 1 to variable *k*.

Next, in step S111a, contents display mode determiner 61 determines whether the value of variable *k* is greater than *n* or not. If contents display mode determiner 61 judges that the value of variable *k* is greater than *n*, then contents display mode determiner 61 judges that it has completed the processing on all the dividing patterns, and proceeds to the processing of step S112a. If contents display mode determiner 61 judges that the value of variable *k* is not greater than *n*, then goes back to step S103a, and repeatedly performs the processing from step S103a to step S110a. That is, contents display mode determiner 61 judges that there is a dividing pattern to be processed, reads a next dividing pattern accumulated in dividing pattern accumulator 34, and evaluates a contents value when the read dividing pattern is used.

If contents display mode determiner 61 judges that the value of variable *k* is greater than *n* in step S111a, then contents display mode determiner 61 extracts and outputs the dividing pattern, the video conversion parameter, and the concomitant data conversion parameter currently stored in the storage device. Specifically, contents display mode determiner 61 outputs the dividing pattern, the video conversion parameter, and the concomitant data conversion parameter at the time of the maximum of contents value $V$.

As described above, contents display mode determiner 61 performs the processing from step S102a to step S112a to change the dividing pattern, *i.e.*, to increment $k$ by 1 ($k=k+1$), for thereby calculating values of the overall contents with respect to all the dividing patterns. Contents display mode determiner 61 employs the dividing pattern for the maximum value of the overall contents as an arrangement layout for the video image and the concomitant data.

Further, in the present exemplary embodiment, it is assumed that $m$ pieces of superimposing patterns are provided in advance and superimposing pattern accumulator 35 accumulates the n pieces of superimposing patterns. In step S102b, contents display mode determiner 61 initializes various variables and parameters used in processing each superimposing pattern. In the present exemplary embodiment, contents display mode determiner 61 initializes prescribed variable $l$ to $l=1$ and prescribed value $W_{max}$ to $W_{max}=0$. Variable $l$ is a variable indicative of which one of the superimposing patterns accumulated in superimposing pattern accumulator 35 is currently processed by contents display mode determiner 61. Value $W_{max}$ represents a maximum one of contents values that are determined for the respective superimposing patterns by contents display mode determiner 61.

Next, in step S103b, contents display mode determiner 61 reads a $l$-th superimposing pattern from superimposing pattern accumulator 35. In step S104b, contents display mode determiner 61 superimposes the concomitant data over the video image in the video interval to be processed based on the read superimposing pattern. In step S105b, the contents display mode determiner 61 converts concomitant data corresponding to the video interval into an optimum format, and calculates a value (maximum value) which the concomitant data have when the converted concomitant data are displayed in the concomitant data display area, using a predetermined evaluation function. Generally, as the number of items of concomitant data displayed on the display screen is reduced, the amount of information that can be displayed is reduced, but the number of pages required to display the concomitant data is reduced, allowing the user to see the concomitant data more easily. Therefore, contents display mode determiner 61 determines a value that the converted concomitant data have, using an evaluation function having variables that are representative of the number of items of concomitant data displayed, the importance of those items, and the number of pages required to display the concomitant data.

In step S106b, contents display mode determiner 61 converts a video image into a format optimum for the video display area, and calculates a value (maximum value) which the video image has when the converted video image is displayed in the video display area, using a predetermined evaluation function. In this case, contents display mode determiner 61 determines the video image value taking into account a reduction of the value caused by the superimposed concomitant data, using the evaluation function. For example, if the concomitant data are to be superimposed over a region, such as a sky or a monochromatic background, not interfering with the video image, then contents display mode determiner 61 determines a video image value so as to increase the value. Conversely, if the concomitant data are to be superimposed over the face of a principal character, remarkably interfering with the video image, then contents display mode determiner 61 determines a video image value so as to reduce the value.

In step S107b, contents display mode determiner 61 calculates value $W$ of the overall contents (*i.e.*, a video image and concomitant data) displayed on the display screen, based on the converted video image and concomitant data, using a predetermined evaluation function. In the present exemplary embodiment, contents display mode determiner 61 calculates value V of the overall contents using an evaluation function in which the values of both the video image and the concomitant data are weighted based on contents importance information 1C.

In step S108b, contents display mode determiner 61 determines whether determined value $W$ of the overall contents is greater than maximum value $W_{max}$ of the content values or not. If contents display mode determiner 61 judges that calculated value $W$ of the overall contents is greater than maximum value $W_{max}$ of the content values, then contents display mode determiner 61 puts $W$ in $W_{max}$ to update value of $W_{max}$, generates a video conversion parameter for achieving an optimum display in the video display area and a concomitant data conversion parameter for achieving an optimum display in the concomitant data display area with respect to the $l$-th superimposing pattern to be currently processed, and saves the $l$-th superimposing pattern and the video conversion parameter and the concomitant data conversion parameter which have been generated, in a storage device such as a memory or the like, in step S109b.

After updating value of $W_{max}$, and saving the dividing pattern, the video conversion parameter, and the concomitant data conversion parameter, contents display mode determiner 61 adds 1 to variable $k$ in step S110b. If contents display mode determiner 61 judges that value $W$ of the overall contents is not greater than maximum value $W_{max}$ of the content values in step S108b, then contents display mode determiner 61 skips the processing in step S109b, and adds 1 to variable $k$.

Next, in step S111b, contents display mode determiner 61 determines whether the value of variable $l$ is greater than $m$ or not. If contents display mode determiner 61 judges that the value of variable $l$ is greater than $m$, then contents display mode determiner 61 judges that it has completed the processing on all the dividing patterns, and proceeds to the processing of step S112b. If contents display mode determiner 61 judges that the value of variable $l$ is not greater than $m$, then goes back to step S103b, and repeatedly performs the processing from step S103b to step S110b. That is, contents display mode determiner 61 judges that there is a superimposing pattern to be processed, reads a next superimposing pattern accumulated in superimposing pattern accumulator 35, and evaluates a contents value when the read superimposing pattern is used.

If contents display mode determiner 61 judges that the value of the variable $l$ is greater than $m$ in step S111b, then contents display mode determiner 61 extracts and outputs the superimposing pattern, the video conversion parameter, and the concomitant data conversion parameter currently stored in the storage device in step S112b. Specifically, contents display mode determiner 61 outputs the dividing pattern, the video conversion parameter, and the concomitant data conversion parameter at the time of the maximum of contents value $V$.

As described above, contents display mode determiner 61 performs the processing from step S102b to step S112b to change the superimposing pattern, *i.e.*, to increment $k$ by 1 ($k=k+1$), for thereby calculating values of the overall contents with respect to all the superimposing patterns. Contents display mode determiner 61 employs the superimposing pattern for the maximum value of the overall contents as an arrangement layout for the video image and the concomitant data.

After the dividing pattern and the superimposing pattern to be employed as the arrangement layout for the video image and the concomitant data are determined, contents display mode determiner 61 compares evaluated value $V_{max}$ corresponding to the dividing pattern, *i.e.*, the optimum dividing pattern, employed in step S112a and evaluated value $W_{max}$ corresponding to the superimposing pattern, *i.e.*, the optimum superimposing pattern, employed in step S112b with each other, and finally employs one of the optimum dividing pattern and the optimum superimposing pattern which has a higher evaluated value, as a pattern for use in displaying the video image and the concomitant data. In the present exemplary embodiment, specifically, contents display mode determiner 61 determines whether evaluated value $V_{max}$ is greater than evaluated value $W_{max}$ or not in step S113c. If contents display mode determiner 61 judges that evaluated value $V_{max}$ is greater than evaluated value $W_{max}$, then contents display mode determiner 61 supplies the dividing pattern, the video conversion parameter, and the concomitant data conversion parameter at the time of the maximum of contents value $V$, to contents converter 22 in step S114c. In this case, contents display mode determiner 61 generates layout information indicative of an arrangement layout on the display screen using the dividing pattern at the time of the maximum of contents value $V$, and supplies display mode determining information 61A including the video conversion parameter, the concomitant data conversion parameter, and the layout information to contents converter 22. If contents display mode determiner 61 judges that evaluated value $V_{max}$ is not greater than evaluated value $W_{max}$ in step S113c, then contents display mode determiner 61 supplies the superimposing pattern, the video conversion parameter, and the concomitant data conversion parameter at the time of the maximum of contents value $V$, to contents converter 22 in step S115c. In this case, contents display mode determiner 61 generates layout information indicative of an arrangement layout on the display screen using the superimposing pattern at the time of the maximum of contents value $V$, and supplies display mode determining information 61A including the video conversion parameter, the concomitant data conversion parameter, and the layout information to contents converter 22.

Contents display mode determiner 61 repeats the above process for each video interval included in the video data requested to be distributed. Contents display mode determiner 61 calculates contents values for all the dividing patterns and the superimposing patterns, per video interval, to determine an arrangement layout, and outputs display mode determining information 61A.

According to the fourth exemplary embodiment, as described above, contents distribution server 6 adaptively determines a display mode for contents depending on the substance of a video image and corresponding concomitant data with respect to each of the video intervals included in the video data. Contents distribution server 6 distributes contents converted according to the determined display mode to user terminal 1. User terminal 1 dynamically changes the video display area and the concomitant data display area per video interval according to the distributed contents, and displays them. According to the present exemplary embodiment, therefore, a display mode for contents is automatically determined per video interval, and a video image and concomitant data are displayed in a layout depending on the configurations of the display screen and the contents. Therefore, a video image and concomitant data can be displayed in a layout depending on the configurations of the display screen and the contents without the need for the contents creator to design a screen configuration per display screen with respect to individual information (*i.e.,* a video image and concomitant data).

According to the fourth exemplary embodiment, since a display mode for a video image and concomitant data can adaptively be determined and displayed per video interval depending on the substance of the video image and the concomitant data, a contents display system which is capable of effectively presenting video data and concomitant data can be realized. According to the present exemplary embodiment, contents distribution server 6 adaptively determines a display mode for contents based on the display screen of the terminal which is a required condition of the viewer's side of video data and concomitant data. Consequently, a contents display system which is capable of effectively presenting video data and concomitant data on any desired display screens can be realized. Furthermore, according to the present exemplary embodiment, inasmuch as contents distribution server 6 adaptively determines a display mode for contents based on the importance balance which is a required condition of the viewer's side of video data and concomitant data, a contents display system which is capable of effectively presenting video data and concomitant data to match the taste of the user can be realized.

FIFTH EXEMPLARY EMBODIMENT:

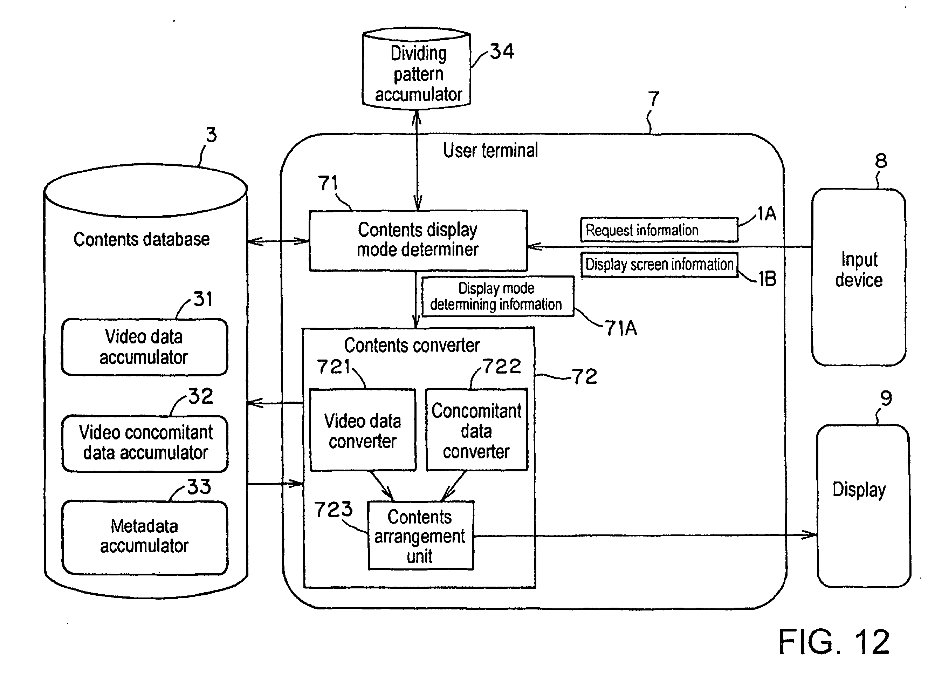

A contents display system according to a fifth exemplary embodiment of the present invention will be described below. With the contents display systems according to the first to fourth exemplary embodiments described above, the contents distribution server converts contents depending on a request from user terminal 1, and distributes the converted contents to user terminal 1. According to the fifth exemplary embodiment, the contents display system is configured to allow the terminal to directly receive contents requested by the user and to convert the contents on the user terminal or a user home server. In the present exemplary embodiment, the user terminal downloads contents themselves via the Internet, and converts and displays the downloaded contents. Alternatively, the user terminal is provided with a database for accumulating contents in advance, and converts and displays the accumulated contents. FIG. 12 shows a constitution of the contents display system according to the fifth exemplary embodiment.

As shown in FIG. 12, the contents display system according to the present exemplary embodiment includes: user terminal 7; input device 8 such as a keyboard, a mouse, etc.; display 9 such as a display device, a liquid crystal display, or the like; contents database 3; and dividing pattern accumulator 34.

Contents database 3 serves to accumulate contents created by a contents creator, and includes: video data accumulator 31; video concomitant data accumulator 32; and metadata accumulator 33. Video data accumulator 31 stores video data to be displayed on the screen. Video concomitant data accumulator 32 stores concomitant data as information to be displayed with video image. Metadata accumulator 33 stores metadata used to determine a contents display mode.

Dividing pattern accumulator 34 accumulates a plurality of dividing patterns indicative of patterns for dividing a display screen into a video display area and a concomitant data display area.

User terminal 7 is a terminal used by the user, specifically, an information processing terminal such as a personal computer, a mobile phone, a PDA, or the like. User terminal 7 is not limited to the information processing terminal used by the user, but may be another contents display terminal having a display which is capable of displaying contents. For example, user terminal 7 may be a television receiver, a terminal having an electrical bulletin board, a car navigation terminal, or the like. As shown in FIG. 12, user terminal 7 includes contents display mode determiner 71 and contents converter 72.

Contents display mode determiner 71 has a function to receive request information 1A and display screen information 1 B from input device 8 according to the action of the user, a function to determine a display mode for contents using request information 1A and display screen information 1 B given (applied) from input device 8 by performing the same process as contents display mode determiner 21 in the first exemplary embodiment, and a function to generate display mode determining information 71A representing the determined display mode and supply display mode determining information 71A to contents converter 72.

As shown in FIG. 12, contents converter 72 includes video data converter 721, concomitant data converter 722, and contents arrangement unit 723. The functions of video data converter 721, concomitant data converter 722, and contents arrangement unit 723 are the same as the functions of those in the first exemplary embodiment. In the present exemplary embodiment, converted contents are not distributed to the user terminal by a contents distribution server, but contents converter 72 controls display 9 to display a video image and concomitant data based on the converted contents.

In the fifth exemplary embodiment, a memory device (not shown) of user terminal 7 stores various programs for displaying contents including video data and concomitant data. For example, the memory device of user terminal 7 stores a contents display program for enabling a computer to perform a process for determining, per video interval, a display mode for displaying video data and concomitant data included in contents, a process for generating, per display interval, contents in which video data and concomitant data are arranged according to the determined display mode, and a process for displaying the contents including arranged video data and concomitant data.

In the contents display system, contents display mode determiner 71 may receive importance balance information 1C, in addition to request information 1A and display screen information 1B, from input device 8. In this case, contents display mode determiner 71 may determine a display mode for contents based on importance balance information 1C, in addition to request information 1A and display screen information 1B.

The contents display system may include superimposing pattern accumulator 35 in addition to dividing pattern accumulator 34. In such a case, contents display mode determiner 71 may determine a display mode for contents using superimposing patterns accumulated in superimposing pattern accumulator 35 in addition to dividing patterns accumulated in dividing pattern accumulator 34.

Contents display mode determiner 71 may determine a display mode for contents using the contents display mode determining process shown in either one of the second to fourth exemplary embodiments, rather than the process shown in the first exemplary embodiment.

According to the fifth exemplary embodiment, user terminal 7 is capable of determining a contents display mode and converting contents using the process in either one of the first to fourth exemplary embodiments.

SIXTH EXEMPLARY EMBODIMENT:

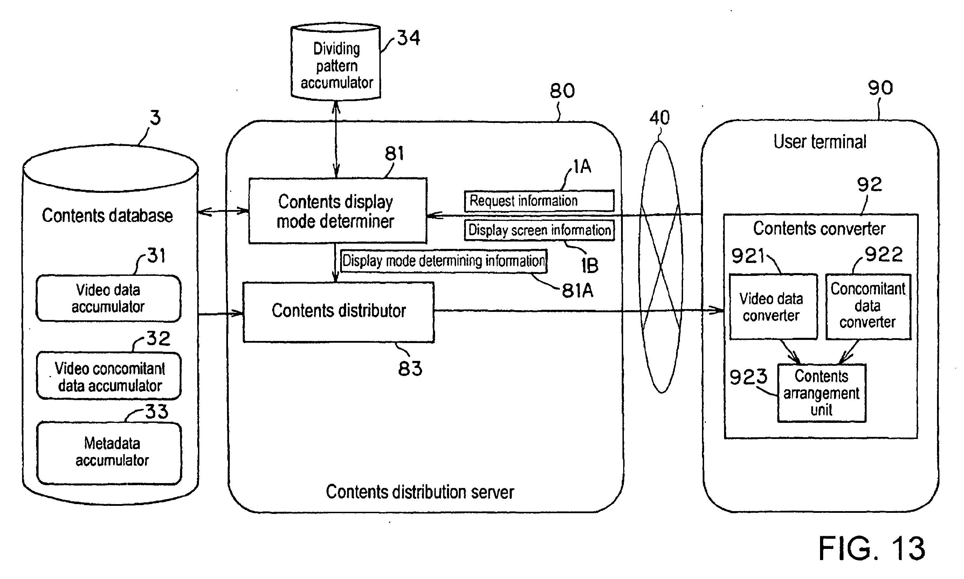

A contents display system according to a fifth exemplary embodiment of the present invention will be described below. With the contents display systems according to the first to fourth exemplary embodiments described above, the contents distribution server determines a display mode for contents and distributes contents converted according to the determined display mode to a user terminal. According to the fifth embodiment, the contents display system is configured such that a contents distribution server distributes unconverted contents to a user terminal, and the user terminal generates and displays converted contents according to a determined display mode. FIG. 13 shows a constitution of the contents display system according to the sixth exemplary embodiment.

As shown in FIG. 13, the contents display system according to the present exemplary embodiment is different from the contents display system in the first exemplary embodiment in that contents distribution server 80 does not have a contents converter, but a user terminal 90 has contents converter 92. In the present exemplary embodiment, function of contents distributor 83 of contents distribution server 80 is different from the function of contents distributor 23 in the first exemplary embodiment. In the sixth exemplary embodiment, the information accumulated in contents database 3 and dividing pattern accumulator 34 is the same as the information accumulated in those in the first exemplary embodiment. The function of contents display mode determiner 81 of contents distribution server 80 is the same as the function of contents display mode determiner 21 shown in the first exemplary embodiment.

Contents distributor 83 has a function to extract contents (*i.e.*, video data and concomitant data) requested to be distributed from contents database 3 based on request information 1A when contents display mode determiner 81 determines a display mode for contents, and a function to send the extracted contents and display mode determining information 81A generated by contents display mode determiner 81 to user terminal 90 through communication network 40.

Contents converter 92 of user terminal 90 has a function to receive display mode determining information 81A and the contents from contents distribution server 80 through communication network 40. As shown in FIG. 13, contents converter 92 includes video data converter 921, concomitant data converter 922, and contents arrangement unit 923.

Video data converter 921 has a function to convert video data included in the received contents using a video conversion parameter included in display mode determining information 81A. Concomitant data converter 922 has a function to convert concomitant data included in the received contents using a concomitant data conversion parameter included in display mode determining information 81A. Contents arrangement unit 923 has a function to generate converted contents made up of video data converted by video data converter 921 and concomitant data converted by concomitant data converter 922, arranged to a layout according to layout information included in display mode determining information 81A. Contents arrangement unit 923 also has a function to display a video image and concomitant data on a display (not shown) such as a liquid crystal display or the like based on the converted contents.

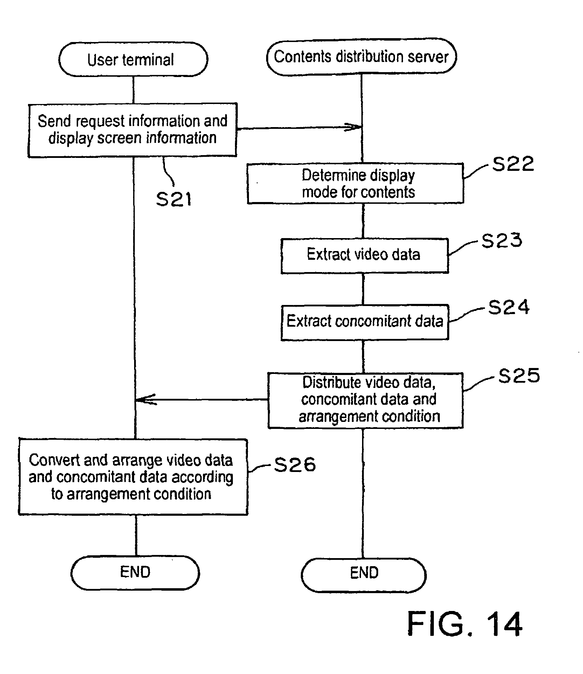

Operation of the contents display system according to the sixth exemplary embodiment will be described below. FIG. 14 shows a process for the contents distribution server to distribute contents in response to a request from the user terminal.

First, user terminal 90 sends request information 1A and display screen information 1 B through communication network 40 to contents distribution server 80 in step S21 according to the same processing as in step S11 shown in FIG. 3. Contents display mode determiner 81 of contents distribution server 80 determines a display mode for contents per video interval in step S22 according to the same processing as in step S12 shown in FIG. 3.

After the display mode for contents is determined, contents distributor 83 extracts video data of the contents requested to be distributed from contents database 3 based on request information 1A in step S23, and extracts concomitant data of the contents requested to be distributed from contents database 3 based on request information 1A in step S24.

Then, in step S25, contents distributor 83 sends the extracted video data and concomitant data, and display mode determining information 81A generated by contents display mode determiner 81 through communication network 40 to user terminal 90. Stated otherwise, contents distributor 83 distribute unconverted contents (*i.e.,* video data and concomitant data) and arrangement conditions for a video image and concomitant data, instead of distributing converted contents.

User terminal 90 receives the contents and display mode determining information 81A from contents distribution server 80 through the communication network. Contents converter 92 then converts and arranges the video data and the concomitant data according to the arrangement conditions represented by display mode determining information 81A, based on the received contents and display mode determining information 81A, in step S26. Contents converter 92 then controls the display to display a video image and concomitant data based on the converted contents that are generated.

In the present exemplary embodiment, contents display mode determiner 81 may receive importance balance information 1C, in addition to request information 1A and display screen information 1B, from user terminal 90. In such a case, contents display mode determiner 81 may determine a display mode for contents based on importance balance information 1C, in addition to request information 1A and display screen information 1 B.

The contents display system may include superimposing pattern accumulator 35 in addition to dividing pattern accumulator 34. In such a case, contents display mode determiner 81 may determine a display mode for contents using superimposing patterns accumulated in superimposing pattern accumulator 35 in addition to dividing patterns accumulated in dividing pattern accumulator 34.

Further, contents display mode determiner 81 may determine a display mode for contents using the contents display mode determining process shown in either one of the second to fourth exemplary embodiments, rather than the process shown in the first exemplary embodiment.

In the first to sixth exemplary embodiments described above, metadata are extracted from the contents database upon the display mode determining process. In these exemplary embodiments, the contents display mode determiner may generate, in real time, metadata for each video interval and metadata for concomitant data corresponding to each video interval. For example, the contents display mode determiner may have a metadata generator for generating metadata corresponding to contents to be displayed (*i.e.*, video metadata and concomitant metadata), and may determine a display mode for contents to be displayed based on the metadata generated by the metadata generator. The metadata generator is implemented by a CPU of a server which operates according to a program, for example.

For example, the contents display mode determiner may acquire (determine) a video resolution from video data themselves as metadata for overall video data.

The contents display mode determiner may extract a video interval in real time as metadata by automatically detecting a cut change in the video image in real time from video data being reproduced. In this case, each time the contents display mode determiner detects a cut, the contents display mode determiner may use the detected cut as the starting point of a new shot, and may use a frame preceding the detected cut as the ending point of the preceding frame. A cut detecting method which can be used here is disclosed in Ullas Gargi, Rangachar Kasturi, Susan H. Strayer, "Performance Characterization of Video-Shot-Change Detection Methods", IEEE Transaction on Circuits and Systems for Video Technology, Vol. 10, No. 1, February 2000.

Alternatively, the contents display mode determiner may generate attention area information as metadata for each video interval by automatically extracting an attention area such as an area including appearances from the video image. A method of extracting an attention area which can be used here is disclosed in A. Mohan, C. Papageorgiou, T. Poggio, "Example-Based Object Detection in Images by Components", IEEE Trans. on PAMI, Vol. 23, No. 4, pp. 349-361, 2001.

The contents display mode determiner may automatically generate metadata for concomitant data in each video interval by counting display items included in the concomitant data and characters of each of the items.

The first to sixth exemplary embodiments have been described on the premise that there are always concomitant data corresponding to each video interval. However, concomitant data may not necessarily be present with respect to all video intervals. For example, if video data include a video image such as a television commercial between programs, then concomitant data may not be present in the video interval of the television commercial. If no concomitant data are present in a video interval, then the contents display mode determiner may determine a display mode for displaying only a video image corresponding to the video interval.

EXAMPLES:

Operation of the contents display system according to the present invention will be described below using specific examples thereof. In the contents display system described above, a news program including a plurality of topics is prepared as video data and accumulated in contents database 3 in advance, and a text indicating the titles of the news topics and details of the topics is prepared and accumulated in contents database 3 in advance. The resolution of a video image is accumulated as video metadata in contents database 3 in advance, and the titles of the news topics, the number of characters of a detailed text, and the importance of each topic are accumulated and held as concomitant metadata in contents database 3 in advance. The contents distribution server has a function to display video data and concomitant data requested (for distribution) from user terminal 1 to match the display capability of the user terminal.

The inventors of the present invention conducted experiments for displaying contents on display screens by accessing the contents distribution server and requesting the news program with a plurality of terminals including a television receiver, a mobile phone, and the like. The inventors also conducted experiments wherein importance balances of three types, shown below, are given as importance balances between a video image and concomitant data.

1) First, an experiment was conducted to equalize the importance of a video image and concomitant data at all times.

2) On the assumption that the user is interested in news topics, an experiment was conducted to increase the importance of a video image while a topic was being displayed and reduce the importance of a video image in a video interval wherein the announcer was displayed.

3) On the assumption that the user is a fan of a certain announcer, an experiment was conducted to increase the importance of a video image in a video interval wherein the announcer was displayed, and on the assumption that news topics should quickly be understood using characters, an experiment was conducted to increase the importance of concomitant data while a topic was being displayed.

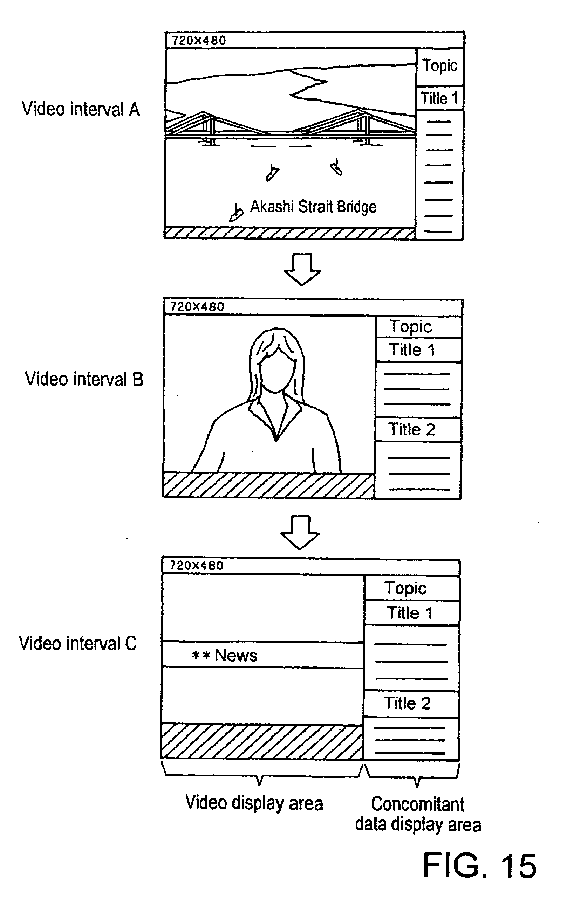

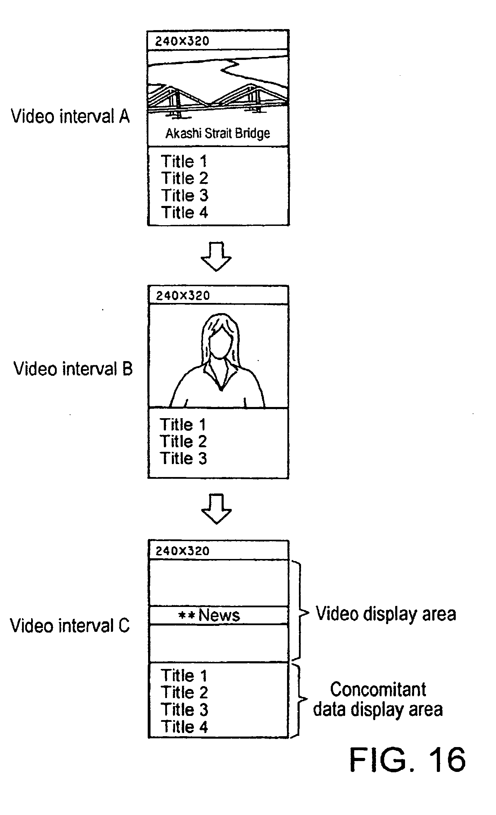

FIGs. 15 and 16 are diagrams showing experimental results produced using the contents display system. FIG. 15 shows displayed images which were displayed according to determined display modes when a television receiver requested the distribution of a news program. FIG. 16 shows displayed images which were displayed according to determined display modes when a mobile phone requested the distribution of a news program.

As shown in FIG. 15, the experimental results show that when a television receiver whose display screen had a resolution of 720x480 pixels requested a news program, a video image and concomitant data were arranged in left and right regions of the display screen and displayed. The display range of the concomitant data changed in each video interval depending on the length of the detailed text and the importance of the topic.

As shown in FIG. 16, when a mobile phone whose display screen had a resolution of 240x320 pixels requested a news program, a video image and concomitant data were arranged vertically (in upper and lower regions in FIG. 16) and displayed. Except when the detailed text was short, only the title was displayed. According to the importance balance given by the user, a close-up medium (*i.e.*, a video image or concomitant data) was adaptively changed and displayed in each scene (video interval).

In the examples, a number of live bulletin boards are prepared and accumulated in the contents database. If the program video image and the substance of the bulletin boards are to be displayed simultaneously, then they can be displayed while the display balance between the program and the messages is being optimally adjusted depending on the number of bulletin board messages added to each scene of the program.

In the examples, as described above, a display mode for contents is adaptively determined to match the substance of video data and concomitant data for each of the video intervals included in the video data. Therefore, a contents display system which is capable of effectively presenting video data and concomitant data is realized. In the examples, a display mode for contents is adaptively determined based on the display screen of a terminal which is a required condition of the viewer's side of video data and concomitant data. Consequently, a contents display system which is capable of effectively presenting video data and concomitant data on any desired display screens is realized. In the examples, furthermore, a display mode for contents is adaptively determined based on the importance balance which is a required condition of the viewer's side of video data and concomitant data. Therefore, a contents display system which is capable of effectively presenting video data and concomitant data to match the taste of the user is realized.

INDUSTRIAL APPLICABILITY:

The present invention is applicable to applications such as a contents display system for displaying video data and concomitant data on any desired display screens, and a contents display program for realizing a contents display system on a computer, etc. The present invention is also applicable to an application for efficiently displaying video data such as of television broadcasts, Internet broadcasts, or the like and concomitant data related to the video data, such as text information or web information, for example, on desired display screens of a mobile phone, a personal computer, a PDA, etc.

**Claims**

**1.** A system for displaying video contents each including video data including a plurality of non-overlapping video segments and their corresponding concomitant data associated with the video data, the system comprising:

content display mode determining means (21,41,51,61,71,81) for adaptively determining, per video segment, a display mode which is indicative of how video data and corresponding concomitant data included in a video content to be displayed are arranged on a display screen in such a manner that the display mode is adapted to content of said video segment and content of said corresponding concomitant data; and content arranging means (223,723,923) for generating, per video segment, a video content in which said video data and said concomitant data are arranged according to the display mode determined by said content display mode determining means, such that the video content generated by said content arranging means is displayed on the display screen,

wherein the content display mode determining means is adapted to divide the display screen into a video display area and a concomitant data display area in such a manner that the dividing pattern is determined per video segment of said video content,

said content display mode determining means is further adapted to determine the display mode for the video content to be displayed by using a predetermined evaluation function for calculating an evaluated value for each display mode depending on the displayed video content made up of video data displayed in said video display area and concomitant data displayed in said concomitant data display area so as to determine a mode of dividing the display screen into said video display area and said concomitant data area that provides an optimized evaluated value of displayed video content, said predetermined evaluation function using at least one of evaluation criteria: (i) amount of information provided to user, (ii) value of information, and (iii) ease with which to see information, and

said content display mode determining means is further adapted to:

determine, per video segment, the evaluated value of the video content to be displayed, using a first evaluation function for evaluating the video data displayed in said video display area, a second evaluation function for evaluating the concomitant data displayed in the concomitant data display area, and a third evaluation function representing a balance of importance between the video data and the concomitant data corresponding to the video data; and

determine a mode of dividing the display screen for each video segment in order to optimize the determined evaluated value.

2. The system according to claim 1, further comprising:

video converting means (221,721,921) for converting said video data according to the display mode determined by said content display mode determining means; and

concomitant data converting means (222,722,922) for converting said concomitant data according to the display mode determined by said content display mode determining means;

wherein said content display mode determining means determines said display mode based on display screen information representing size of the display screen, video metadata including attribute information of video data corresponding to each video segment, and concomitant metadata including attribute information of the concomitant data corresponding to the video segments, and

wherein said content arranging means for generating said video content by arranging the video data converted by said video converting means and the concomitant data converted by said concomitant data converting means.

3. The system according to claim 2, wherein
said content display means is adapted to display the video content generated by said content arranging means.

4. The system according to claim 2 or 3, wherein said content display mode determining means determines the display mode based on at least one of said display screen information, said video metadata, said concomitant metadata, preference of the user, and a balance between importance of each video segment and importance of corresponding concomitant data.

5. The system according to any one of claims 2 to 4, wherein said content display mode determining means comprises:

metadata generating means for generating video metadata and concomitant metadata corresponding to the video content to be displayed;

wherein said content display mode determining means determines the display mode for the video content to be displayed based on the video metadata and the concomitant metadata which are generated by said metadata generating means.

6. The system according to any one of claims 1 to 5, further comprising:

dividing pattern storing means (34) for storing a plurality of dividing patterns representing patterns for dividing the display screen into said video display area and said concomitant data display area;

wherein said content display mode determining means:

divides, per video segment, the display screen into said video display area and said concomitant data display area using each dividing pattern stored in said dividing pattern stored means;
determines an evaluated value of said video content per video segment when the video content to be displayed are divided and displayed in said video display area and said concomitant data display area; and
determines, per video segment, a dividing pattern for maximizing the determined evaluated value, among the dividing patterns stored in said dividing pattern storing means, as a dividing pattern for use in displaying the video content to be displayed.

7. The system according to any one of claims 2 to 5, wherein said content display mode determining means:

superimposes concomitant data corresponding to the video data over the video data per video segment; and
determines the display mode for the video content to be displayed per video segment by determining a mode of superimposing the concomitant data in order to optimize an evaluated value of the video content made up of displayed video data and concomitant data when the concomitant data is superimposed over the video data.

8. The system according to claim 7, further comprising:

superimposing pattern storing means (35) for storing a plurality of superimposing patterns representing patterns for superimposing the concomitant data over the video data;
wherein said content display mode determining means:

superimposes, per video segment, the concomitant data over the video data using each superimposing pattern storied in said superimposing pattern storing means;
determines, per video segment, an evaluated value of said video content when the concomitant data is superimposed over the video data and displayed, based on the video content to be displayed; and
determines, per video segment, a superimposing pattern for maximizing the determined evaluated value, among the superimposing patterns storied in said superimposing pattern storing means, as a superimposing pattern for use in displaying the video content to be displayed.

9. The system according to any one of claims 2 to 5, wherein said content display mode determining means:

superimposes, per video segment, the concomitant data corresponding to the video data over the video data; and
determines a process for displaying the video content to be displayed per video segment by selecting a mode for optimizing an evaluated value based on an evaluated value of the video content when the video content to be displayed is displayed using a mode for separately displaying the video data and the concomitant data, and an evaluated value of the video content when the video content is displayed using a mode for superimposing the concomitant data over the video data.

10. The system according to claim 9, further comprising:

dividing pattern storing means (34) for storing a plurality of dividing patterns representing patterns for dividing the display screen into said video display area and said concomitant data display area; and
superimposing pattern storing means (35) for storing a plurality of superimposing patterns representing patterns for superimposing the concomitant data over the video data;
wherein said content display mode determining means:

divides, per display segment, the display screen into said video display area and said concomitant data display area using each dividing pattern storied in said dividing pattern storing means;
determines, per video segment, a first evaluated value of said video content when the video content to be displayed is divided and displayed in said video display area and said concomitant data display area;
selects, per video segment, a dividing pattern for maximizing the determined first evaluated value, among the dividing patterns storied in said dividing pattern storing means;
superimposes, per display segment, the concomitant data over the video data using each superimposing pattern storied in said superimposing pattern storing means;
determines, per video segment, a second evaluated value of said video content when the concomitant data are superimposed over the video data, based on the video content to be displayed;
selects, per video segment, a superimposing pattern for maximizing the determined second evaluated value, among the superimposing patterns storied in said superimposing pattern storing means; and
determines, per video segment, the display mode for the video content to be displayed by selecting a pattern for maximizing the evaluated value among the selected dividing pattern and the selected superimposing pattern.

11. The system according to any one of claims 7 to 10, wherein said content display mode determining means:

determines, per video segment, the evaluated value of the video content to be displayed, using a first evaluation function for evaluating the concomitant data superimposed and displayed over video data, a second evaluation function for evaluating the video data to be displayed, and a third evaluation function representing a balance of importance between video data and the concomitant data corresponding to the video data; and

determines a mode of superimposing the concomitant data over the video data for each video segment in order to optimize the determined evaluated value.

12. The system according to claim 1,
   further comprising:

a user terminal (1); and
a content distribution server (2,4,5,6) for distributing video contents;
wherein said user terminal (1) includes content requesting means for sending a video content distribution request (1A) through a communication network to said content distribution server, and
said content distribution server (2,4,5,6) comprises;
said content display mode determining means (21,41,51,61) for performing said adaptive determination when the video content distribution request is received from said user terminal;
said content arranging means (223); and
content distributing means (23) for sending the video content generated by said content arranging means through said communication network to said user terminal.

13. A content distribution server (2,4,5,6,8) for distributing video contents each including video data including a plurality of non-overlapping video segments and their corresponding concomitant data associated with the video data, the server comprising:

content display mode determining means (21,41,51,61,81) for adaptively determining, per video segment, a display mode which is indicative of how video data and corresponding concomitant data included in a video content to be displayed are arranged on a display screen of a user terminal (1) in such a manner that the display mode is adapted to content of said video segment and content of said corresponding concomitant data, when a video content distribution request (1A) is received through a communication network from the user terminal (1), wherein the content display mode determining means is adapted to divide the display screen into a video display area and a concomitant data display area in such a manner that the dividing pattern is determined per video segment of said video content,

said content display mode determining means is further adapted to determine the display mode for the video content to be displayed by using a predetermined evaluation function for calculating an evaluated value for each display mode depending on the displayed video content made up of video data displayed in said video display area and concomitant data displayed in said concomitant data display area so as to determine a mode of dividing the display screen into said video display area and said concomitant data area that provides an optimized evaluated value of displayed video content, said predetermined evaluation function using at least one of evaluation criteria: (i) amount of information provided to user, (ii) value of information, and (iii) ease with which to see information, and

said content display mode determining means is further adapted to:

determine, per video segment, the evaluated value of the video content to be displayed, using a first evaluation function for evaluating the video data displayed in said video display area, a second evaluation function for evaluating the concomitant data displayed in the concomitant data display area, and a third evaluation function representing a balance of importance between the video data and the concomitant data corresponding to the video data; and

determine a mode of dividing the display screen for each video segment in order to optimize the determined evaluated value.

14. The server according to claim 13, further comprising:

determining information generating means (81) for generating display mode determining information (81A) representing the display mode determined by said content display mode determining means; and content distributing means (83) for sending the video content requested to be distributed and the display mode determining information generated by said determining information generating means, through said communication network to said user terminal.

**15.** The server according to claim 13, further comprising:

content arranging means (223) for generating, per video segment, a video content in which said video data and said concomitant data are arranged according to the display mode determined by said content display mode determining means; and
content distributing means (23) for sending the video content generated by said content arranging means through said communication network to said user terminal.

**16.** The server according to claim 14, further comprising:

video converting means (221) for converting said video data according to the display mode determined by said content display mode determining means;
concomitant data converting means (222) for converting said concomitant data according to the display mode determined by said content display mode determining means;
content arranging means (223) for generating, per video segment, a video content in which the video data converted by said video converting means and the concomitant data converted by said concomitant data converting means are arranged according to the display mode determined by said content display mode determining means; and
content distributing means (23) for distributing the video content generated by said content arranging means to the user terminal,
wherein said content display mode determining means determines said display mode based on a required condition with respect to a display format of video data and concomitant data corresponding to the video data.

**17.** A content display method of displaying video contents each including video data including a plurality of non-overlapping video segments and their corresponding concomitant data associated with the video data, the method comprising the step of:

adaptively determining, per video segment, a display mode which is indicative of how video data and corresponding concomitant data included in a video content to be displayed are arranged on a display screen in such a manner that the display mode is adapted to content of said video segment and content of said corresponding concomitant data;
generating, per video segment, a video content in which the video data and the concomitant data are arranged according to the determined display mode; and
displaying the generated video content on the display screen,
wherein said content display mode determining step comprises the step of diviving the display screen into a video display area and a concomitant data display area in such a manner that the dividing pattern is determined per video segment of said video content,
said content display mode determining step comprises the step of:

determining the display mode by using a predetermined evaluation function for calculating an evaluated value for each display mode depending on the displayed video content made up of video data displayed in said video display area and concomitant data displayed in said concomitant data display area so as to determine a mode of dividing the display screen into said video display area and said concomitant data area that provides an optimized evaluated value of displayed video content, said predetermined evaluation function using at least one of evaluation criteria: (i) amount of information provided to user, (ii) value of information, and (iii) ease with which to see information, and
said content display mode determining step comprises the steps of:

determining, per video segment, the evaluated value of the video content to be displayed, using a first evaluation function for evaluating the video data displayed in said video display area, a second evaluation function for evaluating the concomitant data displayed in the concomitant data display area, and a third evaluation function representing a balance of importance between video data and the concomitant data corresponding to the video data; and
determining a mode of dividing the display screen for each video segment in order to optimize the determined evaluated value.

**18.** The method according to claim 17,
wherein said display mode is determined based on display screen information representing a size of the display screen, video metadata including attribute information of video data corresponding to each video segment, and concomitant metadata including attribute information of the concomitant data corresponding to the video segments.

**19.** The method according to claim 18, wherein said display mode is determined based on either one or a combination of at least the size of the display screen, the content of the video data in each video segment, and the content of the concomitant data corresponding to the video segments, as a required condition with respect to a display format of video data and concomitant data corresponding to the video data.

**20.** The method according to claim 18, wherein in said content display mode determining step, said display mode is determined based on at least one of display screen information, each video metadata, concomitant metadata, preference of the user, and a balance between the importance of each video segment and the importance of corresponding concomitant data.

**21.** The method according to any one of claims 18 to 20, wherein said content display mode determining step comprises the steps of:

superimposing the concomitant data corresponding to the video data over the video data per video segment; and
determining the display mode per video segment by determining a mode of superimposing the concomitant data in order to optimize an evaluated value of the video content made up of displayed video data and concomitant data when the concomitant data is superimposed over the video data.

**22.** The method according to any one of claims 18 to 20, wherein said content display mode determining step comprises the steps of:

superimposing, per video segment, the concomitant data corresponding to the video data over the video data; and
determining a process for displaying the video content to be displayed per video segment by selecting a mode for optimizing an evaluated value based on a first evaluated value of the video content when the video content to be displayed is displayed using a mode for dividing and displaying the video data and the concomitant data, and a second evaluated value of the video content when the video content is displayed using a mode for superimposing the concomitant data over the video data.

**23.** The method according to claim 21 or 22, wherein said content display mode determining step comprises the steps of:

determining, per video segment, the evaluated value of the video content to be displayed, using a first evaluation function for evaluating the concomitant data superimposed and displayed over video data, a second evaluation function for evaluating the displayed video data, and a third evaluation function representing a balance of importance between each video data and the concomitant data corresponding to the video data; and
determining a mode of superimposing the concomitant data over the video data for each video segment in order to optimize the determined evaluated value.

**24.** A content display program for displaying video contents each including video data including a plurality of non-overlapping video segments and their corresponding concomitant data associated with the video data,
said content display program enabling a computer to perform the processes for:

adaptively determining, per video segment, a display mode which is indicative of how video data and corresponding concomitant data included in a video content are arranged on a display screen in such a manner that the display mode is adapted to content of said video segment and content of said corresponding concomitant data;
generating, per video segment, a video content in which said video data and said concomitant data are arranged according to the determined display mode; and
displaying the generated video content,
wherein at the determining process the display screen is divided into a video display area and a concomitant data display area in such a manner that the dividing pattern is determined per video segment of said video content, the determining process comprises the process of determining the display mode by using a predetermined evaluation function for calculating an evaluated value for each display mode depending on the displayed video content made up of video data displayed in said video display area and concomitant data displayed in said concomitant data display area so as to determine a mode of dividing the display screen into said video display area and said concomitant data area that provides an optimized evaluated value of displayed video content, said predetermined evaluation function using at least one of evaluation criteria: (i) amount of information provided to user, (ii) value of information, and (iii) ease with which to see information, and
the determining process comprises the processes of:

determining, per video segment, the evaluated value of the video content to be displayed, using a first evaluation function for evaluating the video data displayed in said video display area, a second evaluation function for evaluating the concomitant data displayed in the concomitant data display area, and a third evaluation function representing a balance of importance between video data and the concomitant data corresponding to the video data; and
determining a mode of dividing the display screen for each video segment in order to optimize the determined evaluated value.

25. A content distribution program for distributing video contents each including video data including a plurality of non-overlapping video segments and their corresponding concomitant data associated with the video data,
said content distribution program enabling a computer to perform the processes of:

receiving a video content distribution request (1A) from a user terminal (1) through a communication network;
adaptively determining, per video segment, a display mode which is indicative of how video data and corresponding concomitant data included in a video content requested to be distributed are arranged on a display screen, when the video content distribution request is received from said user terminal in such a manner that the display mode is adapted to content of said video segment and content of said corresponding concomitant data;
generating, per video segment, a video content in which said video data and said concomitant data are arranged according to the determined display mode; and
sending the video content in which said video data and said concomitant data are arranged through said communication network to said user terminal,
wherein at the determining process the display screen is divided into a video display area and a concomitant data display area in such a manner that the dividing pattern is determined per video segment of said video content, the determining process comprises the process of determining the display mode by using a predetermined evaluation function for calculating an evaluated value for each display mode depending on the displayed video content made up of video data displayed in said video display area and concomitant data displayed in said concomitant data display area so as to determine a mode of dividing the display screen into said video display area and said concomitant data area that provides an optimized evaluated value of displayed video content, said predetermined evaluation function using at least one of evaluation criteria: (i) amount of information provided to user, (ii) value of information, and (iii) ease with which to see information, and
the determining process comprises the processes of:

determining, per video segment, the evaluated value of the video content to be displayed, using a first evaluation function for evaluating the video data displayed in said video display area, a second evaluation function for evaluating the concomitant data displayed in the concomitant data display area, and a third evaluation function representing a balance of importance between video data and the concomitant data corresponding to the video data; and
determining a mode of dividing the display screen for each video segment in order to optimize the determined evaluated value.

## Patentansprüche

1. System zum Darstellen von Videoinhalten, die jeweils Videodaten, die mehrere nicht überlappende Videosegmente aufweisen, und den Videodaten zugeordnete Begleitdaten enthalten,
wobei das System aufweist:

eine Inhaltdarstellungsmodusbestimmungseinrichtung (21, 41, 51, 61, 71, 81) zum adaptiven Bestimmen, pro Videosegment, eines Darstellungsmodus, der anzeigt, wie Videodaten und entsprechende Begleitdaten, die in einem darzustellenden Videoinhalt enthalten sind, auf einem Bildschirm angeordnet sind, derart, dass der Darstellungsmodus dem Inhalt des Videosegments und dem Inhalt der entsprechenden Begleitdaten angepasst ist; und

eine Inhaltanordnungseinrichtung (223, 723, 923) zum Erzeugen, pro Segment, eines Videoinhalts, in dem die Videodaten und die Begleitdaten gemäß dem durch die Inhaltdarstellungsmodusbestimmungseinrichtung bestimmten Darstellungsmodus angeordnet sind, so dass der durch die Inhaltanordnungseinrichtung erzeugte Videoinhalt auf dem Bildschirm dargestellt wird,

wobei die Inhaltdarstellungsmodusbestimmungseinrichtung dazu geeignet ist, den Bildschirm in einen Videodatenbereich und einen Begleitdatendarstellungsbereich zu teilen, derart, dass das Teilungsmuster pro Videosegment des Videoinhalts bestimmt ist,

die Inhaltdarstellungsmodusbestimmungseinrichtung ferner dazu geeignet ist, den Darstellungsmodus für den darzustellenden Videoinhalt unter Verwendung einer vorgegebenen Bewertungsfunktion zum Berechnen eines Bewertungswertes für jeden Darstellungsmodus in Abhängigkeit von dem dargestellten Videoinhalt zu berechnen, der aus im Videodarstellungsbereich dargestellten Videodaten und im Begleitdatendarstellungsbereich dargestellten Begleitdaten besteht, um einen Modus zum Teilen des Bildschirms in den Videodarstellungsbereich und den Begleitdatendarstellungsbereich zu bestimmen, der einen optimierten Bewertungswert des dargestellten Videoinhalts bereitstellt, wobei die vorgegebene Bewertungsfunktion mindestens eines der folgenden Bewertungskriterien verwendet: (i) die für den Benutzer bereitgestellte Informationsmenge, (ii) den Informationswert, und (iii) die Einfachheit, mit der die Information sichtbar ist, und

wobei die Inhaltdarstellungsmodusbestimmungseinrichtung ferner dazu geeignet ist,

pro Videosegment den Bewertungswert des darzustellenden Videoinhalts unter Verwendung einer ersten Bewertungsfunktion zum Bewerten der im Videodarstellungsbereich dargestellten Videodaten, einer zweiten Bewertungsfunktion zum Bewerten der im Begleitdatendarstellungsbereich dargestellten Begleitdaten und einer dritten Bewertungsfunktion zu bestimmen, die ein Gewichtungsgleichgewicht zwischen den Videodaten und den den Videodaten zugeordneten Begleitdaten darstellt; und

einen Modus zum Teilen des Bildschirms für jedes Videosegment zu bestimmen, um den bestimmten Bewertungswert zu optimieren.

2. System nach Anspruch 1, ferner mit:

einer Videoumwandlungseinrichtung (221, 721, 921) zum Umwandeln der Videodaten gemäß dem durch die Inhaltdarstellungsmodusbestimmungseinrichtung bestimmten Darstellungsmodus; und

einer Begleitdatenumwandlungseinrichtung (222, 722, 922) zum Umwandeln der Begleitdaten gemäß dem durch die Inhaltdarstellungsmodusbestimmungseinrichtung bestimmten Darstellungsmodus,

wobei die Inhaltdarstellungsmodusbestimmungseinrichtung den Darstellungsmodus basierend auf Bildschirminformation, die die Größe des Bildschirms darstellt, Videometadaten, die Attributinformation über die jedem Videosegment entsprechenden Videodaten enthält, und Begleitmetadaten bestimmt, die Attributinformation über den Videosegmenten entsprechende Begleitdaten enthält, und

wobei die Inhaltanordnungseinrichtung den Videoinhalt durch Anordnen der durch die Videoumwandlungseinrichtung umgewandelten Videodaten und der durch die Begleitdatenumwandlungseinrichtung umgewandelten Begleitdaten erzeugt.

3. System nach Anspruch 2, wobei
die Inhaltdarstellungseinrichtung dazu geeignet ist, den durch die Inhaltanordnungseinrichtung erzeugten Videoinhalt darzustellen.

4. System nach Anspruch 2 oder 3, wobei die Inhaltdarstellungsmodusbestimmungseinrichtung den Darstellungsmodus basierend auf mindestens einer Information unter der Bildschirminformation, den Videometadaten, den Begleitmetadaten, der Präferenz des Benutzers und einem Gewichtungsgleichgewicht zwischen jedem Videosegment und entsprechenden Begleitdaten bestimmt.

5. System nach einem der Ansprüche 2 bis 4, wobei die Inhaltdarstellungsmodusbestimmungseinrichtung aufweist:

eine Metadatenerzeugungseinrichtung zum Erzeugen von Videometadaten und Begleitmetadaten, die dem darzustellenden Videoinhalt entsprechen,
wobei die Inhaltdarstellungsmodusbestimmungseinrichtung den Darstellungsmodus für den darzustellenden Videoinhalt basierend auf den Videometadaten und den Begleitmetadaten bestimmt, die durch die Metadatenerzeugungseinrichtung erzeugt werden.

6.   System nach einem der Ansprüche 1 bis 5, ferner mit:

einer Teilungsmusterspeichereinrichtung (34) zum Speichern mehrerer Teilungsmuster, die Muster zum Teilen des Bildschirms in den Videodarstellungsbereich und den Begleitdatendarstellungsbereich darstellen, wobei die Inhaltdarstellungsmodusbestimmungseinrichtung:

pro Videosegment den Bildschirm unter Verwendung jedes der in der Teilungsmusterspeichereinrichtung gespeicherten Teilungsmuster in den Videodarstellungsbereich und den Begleitdatendarstellungsbereich teilt,
einen Bewertungswert des Videoinhalts pro Videosegment bestimmt, wenn der darzustellende Videoinhalt geteilt und im Videodarstellungsbereich und im Begleitdatendarstellungsbereich dargestellt wird, und
pro Videosegment ein Teilungsmuster zum Maximieren des bestimmten Bewertungswertes unter den in der Teilungsmusterspeichereinrichtung gespeicherten Teilungsmustern als ein Teilungsmuster zur Verwendung bei der Darstellung des darzustellenden Videoinhalts bestimmt.

7.   System nach einem der Ansprüche 2 bis 5, wobei die Inhaltdarstellungsmodusbestimmungseinrichtung
den Videodaten entsprechende Begleitdaten pro Videosegment auf den Videodaten überlagert, und
den Darstellungsmodus für den darzustellenden Videoinhalt pro Videosegment durch Bestimmen eines Modus zum Überlagern der Begleitdaten bestimmt, um einen Bewertungswert des Videoinhalts zu optimieren, der aus dargestellten Videodaten und Begleitdaten besteht, wenn die Begleitdaten auf den Videodaten überlagert werden.

8.   System nach Anspruch 7, ferner mit:

einer Überlagerungsmusterspeichereinrichtung (35) zum Speichern mehrerer Überlagerungsmuster, die Muster zum Überlagern der Begleitdaten auf den Videodaten darstellen,
wobei die Inhaltdarstellungsmodusbestimmungseinrichtung
pro Videosegment die Begleitdaten unter Verwendung jedes in der Überlagerungsmusterspeichereinrichtung gespeicherten Überlagerungsmusters auf den Videodaten überlagert;
wenn die Begleitdaten auf den Videodaten überlagert und dargestellt sind, pro Videosegment einen Bewertungswert des Videoinhalts basierend auf dem darzustellenden Videoinhalt bestimmt, und
pro Videosegment ein Überlagerungsmuster zum Maximieren des bestimmten Bewertungswertes unter den in der Überlagerungsmusterspeichereinrichtung gespeicherten Überlagerungsmustern als ein Überlagerungsmuster zur Verwendung bei der Darstellung des darzustellenden Videoinhalts bestimmt.

9.   System nach einem der Ansprüche 2 bis 5, wobei die Inhaltdarstellungsmodusbestimmungseinrichtung
pro Videosegment die den Videodaten entsprechenden Begleitdaten auf den Videodaten überlagert, und
einen Prozess zum Darstellen des pro Videosegment darzustellenden Videoinhalts durch Auswählen eines Modus zum Optimieren eines Bewertungswertes basierend auf einem Bewertungswert des Videoinhalts, wenn der darzustellende Videoinhalt unter Verwendung eines Modus zum separaten Darstellen der Videodaten und der Begleitdaten dargestellt wird, und basierend auf einem Bewertungswert des Videoinhalts bestimmt, wenn der Videoinhalt unter Verwendung eines Modus zum Überlagern der Begleitdaten auf den Videodaten dargestellt wird.

10.  System nach Anspruch 9, mit:

einer Teilungsmusterspeichereinrichtung (34) zum Speichern mehrerer Teilungsmuster, die Muster zum Teilen des Bildschirms in den Videodarstellungsbereich und den Begleitdatendarstellungsbereich darstellen; und
einer Überlagerungsmusterspeichereinrichtung (35) zum Speichern mehrerer Überlagerungsmuster, die Muster zum Überlagern der Begleitdaten auf den Videodaten darstellen,
wobei die Inhaltdarstellungsmodusbestimmungseinrichtung
den Bildschirm pro Videosegment unter Verwendung jedes in der Teilungsmusterspeichereinrichtung gespeicherten Teilungsmusters in den Videodarstellungsbereich und den Begleitdatendarstellungsbereich teilt,
pro Videosegment einen ersten Bewertungswert des Videoinhalts bestimmt, wenn der darzustellende Videoinhalt geteilt und im Videodarstellungsbereich und im Begleitdatendarstellungsbereich dargestellt wird,
pro Videosegment ein Teilungsmuster zum Maximieren des bestimmten ersten Bewertungswertes unter den in der Teilungsmusterspeichereinrichtung gespeicherten Teilungsmustern auswählt,

pro Videosegment die Begleitdaten unter Verwendung des in der Überlagerungsmusterspeichereinrichtung gespeicherten Überlagerungsmusters auf den Videodaten überlagert,

pro Videosegment einen zweiten Bewertungswert des Videoinhalts, wenn die Begleitdaten auf den Videodaten überlagert sind, basierend auf den darzustellenden Videodaten bestimmt,

pro Videosegment ein Überlagerungsmuster zum Maximieren des bestimmten zweiten Bewertungswertes unter den in der Überlagerungsmusterspeichereinrichtung gespeicherten Überlagerungsmustern auswählt, und

pro Videosegment den Darstellungsmodus für den darzustellenden Videoinhalt durch Auswählen eines Musters zum Maximieren des Bewertungswertes unter den ausgewählten Teilungsmustern und den ausgewählten Überlagerungsmustern bestimmt.

**11.** System nach einem der Ansprüche 7 bis 10, wobei die Inhaltdarstellungsmodusbestimmungseinrichtung

pro Videosegment den Bewertungswert des darzustellenden Videoinhalts unter Verwendung einer ersten Bewertungsfunktion zum Bewerten der auf den Videodaten überlagerten und dargestellten Begleitdaten, einer zweiten Bewertungsfunktion zum Bewerten der darzustellenden Videodaten und einer dritten Bewertungsfunktion bestimmt, die ein Gewichtungsgleichgewicht zwischen Videodaten und den den Videodaten zugeordneten Begleitdaten darstellt; und

einen Modus zum Überlagern der Begleitdaten auf den Videodaten für jedes Videosegment bestimmt, um den bestimmten Bewertungswert zu optimieren.

**12.** System nach Anspruch 1, ferner mit:

einem Benutzerendgerät (1); und
einem Inhaltverteilungsserver (2, 4, 5, 6) zum Verteilen von Videoinhalt,
wobei das Benutzerendgerät (1) eine Inhaltanforderungseinrichtung zum Übertragen einer Videoinhaltverteilungsanforderung (1A) über ein Kommunikationsnetzwerk an den Inhaltverteilungsserver aufweist, und
der Inhaltverteilungsserver (2, 4, 5, 6) aufweist:

die Inhaltdarstellungsmodusbestimmungseinrichtung (21, 41, 51, 61) zum Ausfahren einer adaptiven Bestimmung, wenn die Videoinhaltverteilungsanforderung vom Benutzerendgerät empfangen wird;
die Inhaltanordnungseinrichtung (223); und
eine Inhaltverteilungseinrichtung (23) zum Übertragen des durch die Inhaltanordnungseinrichtung erzeugten Videoinhalts über das Kommunikationsnetzwerk an das Benutzerendgerät.

**13.** Inhaltverteilungsserver (2, 4, 5, 6, 8) zum Verteilen von Videoinhalten, die jeweils Videodaten, die mehrere nicht überlappende Videosegmente aufweisen, und den Videodaten zugeordnete Begleitdaten enthalten,
wobei der Server aufweist:

eine Inhaltdarstellungsmodusbestimmungseinrichtung (21, 41, 51, 61, 81) zum adaptiven Bestimmen, pro Videosegment, eines Darstellungsmodus, der anzeigt, wie Videodaten und entsprechende Begleitdaten, die in einem darzustellenden Videoinhalt enthalten sind, auf einem Bildschirm eines Benutzerendgeräts (1) angeordnet sind, derart, dass der Darstellungsmodus Inhalt des Videosegments und Inhalt der entsprechenden Begleitdaten angepasst ist, wenn eine Videoinhaltverteilungsanforderung (1A) über ein Kommunikationsnetzwerk vom Benutzerendgerät (1) empfangen wird,
wobei die Inhaltdarstellungsmodusbestimmungseinrichtung dazu geeignet ist, den Bildschirm in einen Videodatenbereich und einen Begleitdatenbereich zu teilen, derart, dass das Teilungsmuster pro Videosegment des Videoinhalts bestimmt ist,
wobei die Inhaltdarstellungsmodusbestimmungseinrichtung ferner dazu geeignet ist, den Darstellungsmodus für den darzustellenden Videoinhalt unter Verwendung einer vorgegebenen Bewertungsfunktion zum Berechnen eines Bewertungswertes für jeden Darstellungsmodus in Abhängigkeit von dem dargestellten Videoinhalt zu bestimmen, der aus im Videodarstellungsbereich dargestellten Videodaten und im Begleitdatendarstellungsbereich dargestellten Begleitdaten besteht, um einen Modus zum Teilen des Bildschirms in den Videodarstellungsbereich und den Begleitdatendarstellungsbereich zu teilen, der einen optimierten Bewertungswert für den dargestellten Videoinhalt bereitstellt, wobei die vorgegebene Bewertungsfunktion mindestens eines der folgenden Bewertungskriterien verwendet: (i) die für den Benutzer bereitgestellte Informationsmenge, (ii) den Informationswert, und (iii) die Einfachheit, mit der die Information sichtbar ist, und
wobei die Inhaltdarstellungsmodusbestimmungseinrichtung ferner dazu geeignet ist,
pro Videosegment den Bewertungswert des darzustellenden Videoinhalts unter Verwendung einer ersten Bewertungsfunktion zum Bewerten der im Videodarstellungsbereich dargestellten Videodaten, einer zweiten Bewertungsfunktion zum Bewerten der im Begleitdatendarstellungsbereich dargestellten Begleitdaten und einer dritten Bewertungsfunktion zu bestimmen, die ein Gewichtungsgleichgewicht zwischen den Videodaten und den den Videodaten entsprechenden Begleitdaten darstellt; und

einen Modus zum Teilen des Bildschirms für jedes Videosegment zu bestimmen, um den bestimmten Bewertungswert zu optimieren.

14. Server nach Anspruch 13, ferner mit:

einer Bestimmungsinformationerzeugungseinrichtung (81) zum Erzeugen von Darstellungsmodusbestimmungsinformation (81A), die den durch die Inhaltdarstellungsmodusbestimmungseinrichtung bestimmten Darstellungsmodus darstellt; und

einer Inhaltverteilungseinrichtung (83) zum Übertragen des angeforderten, zu verteilenden Videoinhalts und der durch die Bestimmungsinformationerzeugungseinrichtung erzeugten Darstellungsmodusbestimmungsinformation über das Kommunikationsnetzwerk an das Benutzerendgerät.

15. Server nach Anspruch 13, ferner mit:

einer Inhaltanordnungseinrichtung (223) zum Erzeugen, pro Videosegment, eines Videoinhalts, in dem die Videodaten und die Begleitdaten angeordnet sind, gemäß dem durch die Inhaltdarstellungsmodusbestimmungseinrichtung bestimmten Darstellungsmodus; und

einer Inhaltverteilungseinrichtung (23) zum Übertragen des durch die Inhaltanordnungseinrichtung erzeugten Videoinhalts über das Kommunikationsnetzwerk an das Benutzerendgerät.

16. Server nach Anspruch 14, ferner mit:

einer Videoumwandlungseinrichtung (221) zum Umwandeln der Videodaten gemäß dem durch die Inhaltdarstellungsmodusbestimmungseinrichtung bestimmten Darstellungsmodus;

einer Begleitdatenumwandlungseinrichtung (222) zum Umwandeln der Begleitdaten gemäß dem durch die Inhaltdarstellungsmodusbestimmungseinrichtung bestimmten Darstellungsmodus;

einer Inhaltanordnungseinrichtung (223) zum Erzeugen, pro Videosegment, eines Videoinhalts, in dem die durch die Videoumwandlungseinrichtung umgewandelten Videodaten und die durch die Begleitdatenumwandlungseinrichtung umgewandelten Begleitdaten gemäß dem durch die Inhaltdarstellungsmodusbestimmungseinrichtung bestimmten Darstellungsmodus angeordnet sind; und

einer Inhaltverteilungseinrichtung (23) zum Verteilen des durch die Inhaltanordnungseinrichtung erzeugten Videoinhalts an das Benutzerendgerät,

wobei die Inhaltdarstellungsmodusbestimmungseinrichtung den Darstellungsmodus basierend auf einer erforderlichen Bedingung bezüglich eines Darstellungsformats der Videodaten und den den Videodaten entsprechenden Begleitdaten bestimmt.

17. Inhaltdarstellungsverfahren zum Darstellen von Videoinhalten, die jeweils Videodaten, die mehrere nicht überlappende Videosegmente aufweisen, und den Videodaten zugeordnete Begleitdaten enthalten, wobei das Verfahren die Schritte aufweist:

adaptives Bestimmen, pro Videosegment, eines Darstellungsmodus, der anzeigt, wie Videodaten und entsprechende Begleitdaten, die in einem darzustellenden Videoinhalt enthalten sind, auf einem Bildschirm angeordnet sind, derart, dass der Darstellungsmodus dem Inhalt des Videosegments und dem Inhalt der entsprechenden Begleitdaten angepasst ist;

Erzeugen, pro Videosegment, eines Videoinhalts, in dem die Videodaten und die Begleitdaten gemäß dem bestimmten Darstellungsmodus angeordnet sind; und

Darstellen des erzeugten Videoinhalts auf dem Bildschirm,

wobei der Inhaltdarstellungsmodusbestimmungsschritt den Schritt zum Teilen des Bildschirms in einen Videodarstellungsbereich und in einen Begleitdatendarstellungsbereich aufweist, derart, dass das Teilungsmuster pro Videosegment des Videoinhalts bestimmt ist,

wobei der Inhaltdarstellungsmodusbestimmungsschritt den Schritt aufweist:

Bestimmen des Darstellungsmodus unter Verwendung einer vorgegebenen Bewertungsfunktion zum Berechnen eines Bewertungswertes für jeden Darstellungsmodus in Abhängigkeit von dem dargestellten Videoinhalt, der aus im Videodarstellungsbereich dargestellten Videodaten und im Begleitdatendarstellungsbereich dargestellten Begleitdaten besteht, um einen Modus zum Teilen des Bildschirms in den Videodarstellungsbereich und den Begleitdatendarstellungsbereich zu bestimmen, der einen optimierten Bewertungswert des dargestellten Videoinhalts bereitstellt, wobei die vorgegebene Bewertungsfunktion mindestens eines der folgenden Bewertungskriterien verwendet: (i) die für den Benutzer bereitgestellte Informationsmenge, (ii) den Informationswert, und (iii) die Einfachheit, mit der die Information sichtbar ist, und wobei der Inhaltdarstellungsmodusbestimmungsschritt die Schritte aufweist:

Bestimmen, pro Videosegment, des Bewertungswertes des darzustellenden Videoinhalts unter Verwendung einer ersten Bewertungsfunktion zum Bewerten der im Videodarstellungsbereich dargestellten Videodaten, einer zweiten Bewertungsfunktion zum Bewerten der im Begleitdatendarstellungsbereich dargestellten Begleitdaten und einer dritten Bewertungsfunktion, die ein Gewichtungsgleichgewicht zwischen den Videodaten und den den Videodaten entsprechenden Begleitdaten darstellt; und Bestimmen eines Modus zum Teilen des Bildschirms für jedes Videosegment, um den bestimmten Bewertungswert zu optimieren.

**18.** Verfahren nach Anspruch 17,
wobei der Darstellungsmodus basierend auf Bildschirminformation, die eine Größe des Bildschirms darstellt, Videometadaten, die Attributinformation über jedem Videosegment entsprechende Videodaten enthalten, und Begleitmetadaten bestimmt wird, die Attributinformation über die den Videosegmenten entsprechenden Begleitdaten enthalten.

**19.** Verfahren nach Anspruch 18, wobei der Darstellungsmodus basierend auf einem Informationselement oder einer Kombination von Informationselementen unter der Größe des Bildschirms, dem Inhalt der Videodaten in jedem Videosegment und dem Inhalt der den Videosegmenten entsprechenden Begleitdaten als eine erforderliche Bedingung bezüglich des Darstellungsformats der Videodaten und der den Videodaten entsprechenden Begleitdaten bestimmt wird.

**20.** Verfahren nach Anspruch 18, wobei im Inhaltdarstellungsmodusbestimmungsschritt der Darstellungsmodus basierend auf mindestens einem Informationselement unter Bildschirminformation, Videometadaten, Begleitmetadaten, der Präferenz des Benutzers und dem Gewichtungsgleichgewicht zwischen jedem Videosegment und den entsprechenden Begleitdaten bestimmt wird.

**21.** Verfahren nach einem der Ansprüche 18 bis 20, wobei der Inhaltdarstellungsmodusbestimmungsschritt die Schritte aufweist:

Überlagern der den Videodaten entsprechenden Begleitdaten auf den Videodaten pro Video segment; und Bestimmen des Darstellungsmodus pro Videosegment durch Bestimmen eines Modus zum Überlagern der Begleitdaten, um einen Bewertungswert des Videoinhalts zu optimieren, der aus dargestellten Videodaten und Begleitdaten besteht, wenn die Begleitdaten auf den Videodaten überlagert werden.

**22.** Verfahren nach einem der Ansprüche 18 bis 20, wobei der Inhaltdarstellungsmodusbestimmungsschritt die Schritte aufweist:

Überlagern der den Videodaten entsprechenden Begleitdaten auf den Videodaten pro Videosegment; und Bestimmen eines Prozesses zum Darstellen des pro Videosegment darzustellenden Videoinhalts durch Auswählen eines Modus zum Optimieren eines Bewertungswertes basierend auf einem ersten Bewertungswert des Videoinhalts, wenn der darzustellende Videoinhalt unter Verwendung eines Modus zum Teilen und Darstellen der Videodaten und der Begleitdaten dargestellt wird, und einem zweiten Bewertungswert des Videoinhalts, wenn der Videoinhalt unter Verwendung eines Modus zum Überlagern der Begleitdaten auf den Videodaten dargestellt wird.

**23.** Verfahren nach Anspruch 21 oder 22, wobei der Inhaltdarstellungsmodusbestimmungsschritt die Schritte aufweist:

Bestimmen, pro Videosegment, des Bewertungswertes des darzustellenden Videoinhalts unter Verwendung einer ersten Bewertungsfunktion zum Bewerten der Begleitdaten, die auf Videodaten überlagert dargestellt werden, einer zweiten Bewertungsfunktion zum Bewerten der dargestellten Videodaten und einer dritten Bewertungsfunktion, die eine Gewichtungsgleichgewicht zwischen den einzelnen Videodaten und den den Videodaten entsprechenden Begleitdaten darstellt; und

Bestimmen eines Modus zum Überlagern der Begleitdaten auf den Videodaten für jedes Videosegment, um den bestimmten Bewertungswert zu optimieren.

24. Inhaltdarstellungsprogramm zum Darstellen von Videoinhalten, die jeweils Videodaten, die mehrere nicht überlappende Videosegmente aufweisen, und den Videodaten zugeordnete Begleitdaten enthalten, wobei das Inhaltdarstellungsprogramm einem Computer ermöglicht, die folgenden Prozesse auszufahren:

adaptives Bestimmen, pro Videosegment, eines Darstellungsmodus, der anzeigt, wie Videodaten und entsprechende Begleitdaten, die in einem Videoinhalt enthalten sind, auf einem Bildschirm angeordnet sind, derart, dass der Darstellungsmodus dem Inhalt des Videosegments und dem Inhalt der entsprechenden Begleitdaten angepasst ist;

Erzeugen, pro Segment, eines Videoinhalts, in dem die Videodaten und die Begleitdaten gemäß dem bestimmten Darstellungsmodus angeordnet sind; und

Darstellen des erzeugten Videoinhalts,

wobei im Bestimmungsprozess der Bildschirm in einen Videodarstellungsbereich und in einen Begleitdatendarstellungsbereich derart geteilt wird, dass das Teilungsmuster pro Videosegment des Videoinhalts bestimmt ist,

wobei der Bestimmungsprozess den Prozess zum Bestimmen des Darstellungsmodus unter Verwendung einer vorgegebenen Bewertungsfunktion zum Berechnen eines Bewertungswertes für jeden Darstellungsmodus in Abhängigkeit von dem dargestellten Videoinhalt aufweist, der aus im Videodarstellungsbereich dargestellten Videodaten und im Begleitdatendarstellungsbereich dargestellten Begleitdaten besteht, um einen Modus zum Teilen des Bildschirms in den Videodarstellungsbereich und den Begleitdatendarstellungsbereich zu bestimmen, der einen optimierten Bewertungswert des dargestellten Videoinhalts bereitstellt, wobei die vorgegebene Bewertungsfunktion mindestens eines der folgenden Bewertungskriterien verwendet: (i) die für den Benutzer bereitgestellte Informationsmenge, (ii) den Informationswert, und (iii) die Einfachheit, mit der die Information sichtbar ist, und

wobei der Bestimmungsprozess die Prozesse aufweist:

Bestimmen, pro Videosegment, des Bewertungswertes des darzustellenden Videoinhalts unter Verwendung einer ersten Bewertungsfunktion zum Bewerten der im Videodarstellungsbereich dargestellten Videodaten, einer zweiten Bewertungsfunktion zum Bewerten der im Begleitdatendarstellungsbereich dargestellten Begleitdaten und einer dritten Bewertungsfunktion, die ein Gewichtungsgleichgewicht zwischen den Videodaten und den den Videodaten entsprechenden Begleitdaten darstellt; und

Bestimmen eines Modus zum Teilen des Bildschirms für jedes Videosegment, um den bestimmten Bewertungswert zu optimieren.

25. Inhaltverteilungsprogramm zum Verteilen von Videoinhalten, die jeweils Videodaten, die mehrere nicht überlappende Videosegmente aufweisen, und den Videodaten zugeordnete Begleitdaten enthalten, wobei das Inhaltverteilungsprogramm einem Computer ermöglicht, die folgenden Prozesse auszuführen:

Empfangen einer Videoinhaltverteilungsanforderung (1A) von einem Benutzerendgerät (1) über ein Kommunikationsnetzwerk;

adaptives Bestimmen, pro Videosegment, eines Darstellungsmodus, der anzeigt, wie Videodaten und entsprechende Begleitdaten, die in einem Videoinhalt enthalten sind, der für eine Verteilung angefordert wurde, auf einem Bildschirm angeordnet sind, wenn die Videoinhaltverteilungsanforderung vom Benutzerendgerät empfangen wird, derart, dass der Darstellungsmodus dem Inhalt des Videosegments und dem Inhalt der entsprechenden Begleitdaten angepasst ist;

Erzeugen, pro Videosegment, eines Videoinhalts, in dem die Videodaten und die Begleitdaten gemäß dem bestimmten Darstellungsmodus angeordnet sind; und

Übertragen des Videoinhalts, in dem die Videodaten und die Begleitdaten angeordnet sind, über das Kommunikationsnetzwerk zum Benutzerendgerät,

wobei im Bestimmungsprozess der Bildschirm in einen Videodarstellungsbereich und in einen Begleitdatendarstellungsbereich geteilt wird, derart, dass das Teilungsmuster pro Videosegment des Videoinhalts bestimmt ist,

wobei der Bestimmungsprozess den Prozess zum Bestimmen des Darstellungsmodus unter Verwendung einer vorgegebenen Bewertungsfunktion zum Berechnen eines Bewertungswertes für jeden Darstellungsmodus in Abhängigkeit von dem dargestellten Videoinhalt aufweist, der aus im Videodarstellungsbereich dargestellten Videodaten und im Begleitdatendarstellungsbereich dargestellten Begleitdaten besteht, um einen Modus zum Teilen des Bildschirms in den Videodarstellungsbereich und den Begleitdatendarstellungsbereich zu bestimmen, der einen optimierten Bewertungswert des dargestellten Videoinhalts bereitstellt, wobei die vorgegebene Bewertungsfunktion mindestens eines der folgenden Bewertungskriterien verwendet: (i) die für den Benutzer bereitgestellte Informationsmenge, (ii) den Informationswert, und (iii) die Einfachheit, mit der die Information sichtbar ist, und
wobei der Bestimmungsprozess die Prozesse aufweist:

Bestimmen, pro Videosegment, des Bewertungswertes des darzustellenden Videoinhalts unter Verwendung einer ersten Bewertungsfunktion zum Bewerten der im Videodarstellungsbereich dargestellten Videodaten, einer zweiten Bewertungsfunktion zum Bewerten der im Begleitdatendarstellungsbereich dargestellten Begleitdaten und einer dritten Bewertungsfunktion, die ein Gewichtungsgleichgewicht zwischen den Videodaten und den den Videodaten entsprechenden Begleitdaten darstellt; und
Bestimmen eines Modus zum Teilen des Bildschirms für jedes Videosegment, um den bestimmten Bewertungswert zu optimieren.

## Revendications

1. Système pour l'affichage de contenus vidéo contenant des données vidéo constituées d'une pluralité de segments vidéo non chevauchants et de leurs données concomitantes correspondantes associées aux données vidéo, ledit système comprenant :

un moyen de détermination du mode d'affichage de contenu (21, 41, 51, 61, 71, 81) pour la détermination adaptative, par segment vidéo, d'un mode d'affichage indicatif de l'agencement sur un écran d'affichage des données vidéo et des données concomitantes correspondantes comprises dans un contenu vidéo à afficher, de manière à adapter le mode d'affichage au contenu du segment vidéo et au contenu des données concomitantes correspondantes ; et
un moyen de disposition de contenu (223, 723, 923) pour la génération, par segment vidéo, d'un contenu vidéo où les données vidéo et les données concomitantes sont agencées en fonction du mode d'affichage déterminé par le moyen de détermination du mode d'affichage de contenu, de manière à afficher sur l'écran d'affichage le contenu vidéo généré par le moyen de disposition de contenu,
où le moyen de détermination du mode d'affichage de contenu est prévu pour diviser l'écran d'affichage en une zone d'affichage vidéo et une zone d'affichage de données concomitantes de manière à définir le motif de division par segment vidéo du contenu vidéo,
le moyen de détermination du mode d'affichage de contenu est en outre prévu pour déterminer le mode d'affichage pour le contenu vidéo à afficher en recourant à une fonction d'évaluation prédéfinie pour le calcul d'une valeur d'évaluation pour chaque mode d'affichage en fonction du contenu vidéo affiché constitué de données vidéo affichées dans la zone d'affichage vidéo et de données concomitantes affichées dans la zone d'affichage de données concomitantes, de manière à déterminer un mode de division de l'écran d'affichage en zone d'affichage vidéo et en zone de données concomitantes délivrant une valeur d'évaluation optimisée du contenu vidéo affiché, ladite fonction d'évaluation prédéfinie recourant à au moins un des critères d'évaluation suivants : (i) quantité d'informations délivrée à l'utilisateur, (ii) valeur des informations, et (iii) facilité de visualisation des informations, et
le moyen de détermination du mode d'affichage de contenu est en outre prévu pour :

déterminer, par segment vidéo, la valeur d'évaluation du contenu vidéo à afficher, en recourant à une première fonction d'évaluation pour l'évaluation des données vidéo affichées dans la zone d'affichage vidéo, une deuxième fonction d'évaluation pour l'évaluation des données concomitantes affichées dans la zone d'affichage de données concomitantes, et une troisième fonction d'évaluation représentant une pondération d'importance entre les données vidéo et les données concomitantes correspondant aux données vidéo ; et
déterminer un mode de division de l'écran d'affichage pour chaque segment vidéo afin d'optimiser la valeur d'évaluation déterminée.

2. Système selon la revendication 1, comprenant en outre :

un moyen de conversion vidéo (221, 721, 921) pour la conversion des données vidéo en fonction du mode d'affichage déterminé par le moyen de détermination du mode d'affichage de contenu ; et

un moyen de conversion de données concomitantes (222, 722, 922) pour la conversion des données concomitantes en fonction du mode d'affichage déterminé par le moyen de détermination du mode d'affichage de contenu ;

le moyen de détermination du mode d'affichage de contenu déterminant le mode d'affichage sur la base d'informations d'écran d'affichage représentant les dimensions de l'écran d'affichage, de métadonnées vidéo comprenant des informations d'attributs de données vidéo correspondant à chaque segment vidéo, et de métadonnées concomitantes comprenant des informations d'attributs des données concomitantes correspondant aux segments vidéo, et

le moyen de disposition de contenu pour la génération du contenu vidéo agençant les données vidéo converties par le moyen de conversion vidéo et les données concomitantes converties par le moyen de conversion de données concomitantes.

3. Système selon la revendication 2, où
le moyen d'affichage de contenu est prévu pour afficher le contenu vidéo généré par le moyen de disposition de contenu.

4. Système selon la revendication 2 ou la revendication 3, où le moyen de détermination du mode d'affichage de contenu détermine le mode d'affichage sur la base des informations d'écran d'affichage et/ou des métadonnées vidéo et/ou des métadonnées concomitantes et/ou des préférences de l'utilisateur et/ou d'une pondération d'importance entre chaque segment vidéo et les données concomitantes correspondantes.

5. Système selon l'une des revendications 2 à 4, où le moyen de détermination du mode d'affichage de contenu comprend :

un moyen de génération de métadonnées pour la génération de métadonnées vidéo et de métadonnées concomitantes correspondant au contenu vidéo à afficher ;
où le moyen de détermination du mode d'affichage de contenu détermine le mode d'affichage pour le contenu vidéo à afficher sur la base des métadonnées vidéo et des métadonnées concomitantes générées par le moyen de génération de métadonnées.

6. Système selon l'une des revendications 1 à 5, comprenant en outre :

un moyen de mémorisation de motifs de division (34) pour la mémorisation d'une pluralité de motifs de division représentant des motifs pour la division de l'écran d'affichage en zone d'affichage vidéo et zone d'affichage de données concomitantes ;
où le moyen de détermination du mode d'affichage de contenu :

divise, par segment vidéo, l'écran d'affichage en zone d'affichage vidéo et en zone d'affichage de données concomitantes en recourant à chaque motif de division stocké dans le moyen de mémorisation de motifs de division ;
détermine une valeur d'évaluation du contenu vidéo par segment vidéo quand le contenu vidéo à afficher est divisé et affiché dans la zone d'affichage vidéo et la zone d'affichage de données concomitantes ; et
détermine, par segment vidéo, un motif de division pour maximiser la valeur d'évaluation déterminée, parmi les motifs de division stockés dans le moyen de mémorisation de motifs de division, en tant que motif de division exploitable pour l'affichage du contenu vidéo à afficher.

7. Système selon l'une des revendications 2 à 5, où le moyen de détermination du mode d'affichage de contenu :

superpose les données concomitantes correspondant aux données vidéo aux données vidéo par segment vidéo ; et
détermine le mode d'affichage pour le contenu vidéo à afficher par segment vidéo en déterminant un mode de superposition des données concomitantes afin d'optimiser une valeur d'évaluation du contenu vidéo constitué de données vidéo affichées et de données concomitantes quand les données concomitantes sont superposées aux données vidéo.

8. Système selon la revendication 7, comprenant en outre :

un moyen de mémorisation de motifs de superposition (35) pour la mémorisation d'une pluralité de motifs de superposition représentant des motifs pour la superposition des données concomitantes aux données vidéo ; où le moyen de détermination du mode d'affichage de contenu :

superpose, par segment vidéo, les données concomitantes aux données vidéo en recourant à chaque motif de superposition stocké dans le moyen de mémorisation de motifs de superposition ; détermine, par segment vidéo, une valeur d'évaluation du contenu vidéo quand les données concomitantes sont superposées aux données vidéo et affichées, sur la base du contenu vidéo à afficher ; et détermine, par segment vidéo, un motif de superposition pour maximiser la valeur d'évaluation déterminée, parmi les motifs de superposition stockés dans le moyen de mémorisation de motifs de superposition, en tant que motif de superposition exploitable pour l'affichage du contenu vidéo à afficher.

9. Système selon l'une des revendications 2 à 5, où le moyen de détermination du mode d'affichage de contenu :

superpose aux données vidéo, par segment vidéo, les données concomitantes correspondant aux données vidéo; et détermine un processus pour l'affichage du contenu vidéo à afficher par segment vidéo par sélection d'un mode pour l'optimisation d'une valeur d'évaluation, sur la base d'une valeur d'évaluation du contenu vidéo quand le contenu vidéo à afficher est affiché en recourant à un mode pour l'affichage séparé des données vidéo et des données concomitantes, et d'une valeur d'évaluation du contenu vidéo quand le contenu vidéo est affiché en recourant à un mode pour la superposition des données concomitantes aux données vidéo.

10. Système selon la revendication 9, comprenant en outre :

un moyen de mémorisation de motifs de division (34) pour la mémorisation d'une pluralité de motifs de division représentant des motifs pour la division de l'écran d'affichage en zone d'affichage vidéo et en zone d'affichage de données concomitantes ; et un moyen de mémorisation de motifs de superposition (35) pour la mémorisation d'une pluralité de motifs de superposition représentant des motifs pour la superposition des données concomitantes aux données vidéo ; où le moyen de détermination du mode d'affichage de contenu :

divise, par segment d'affichage, l'écran d'affichage en zone d'affichage vidéo et en zone d'affichage de données concomitantes en recourant à chaque motif de division stocké dans le moyen de mémorisation de motifs de division ; détermine, par segment vidéo, une première valeur d'évaluation du contenu vidéo quand le contenu vidéo à afficher est divisé et affiché dans la zone d'affichage vidéo et la zone d'affichage de données concomitantes ; sélectionne, par segment vidéo, un motif de division pour maximiser la première valeur d'évaluation déterminée, entre les motifs de division stockés dans le moyen de mémorisation de motifs de division ; superpose, par segment d'affichage, les données concomitantes aux données vidéo en recourant à chaque motif de superposition stocké dans le moyen de mémorisation de motifs de superposition ; détermine, par segment vidéo, une deuxième valeur d'évaluation du contenu vidéo quand les données concomitantes sont superposées aux données vidéo, sur la base du contenu vidéo à afficher ; sélectionne, par segment vidéo, un motif de superposition pour maximiser la deuxième valeur d'évaluation déterminée, entre les motifs de superposition stockés dans le moyen de mémorisation de motifs de superposition ; et détermine, par segment vidéo, le mode d'affichage pour le contenu vidéo à afficher par sélection d'un motif pour maximiser la valeur d'évaluation entre le motif de division sélectionné et le motif de superposition sélectionné.

11. Système selon l'une des revendications 7 à 10, où le moyen de détermination du mode d'affichage de contenu :

détermine, par segment vidéo, la valeur d'évaluation du contenu vidéo à afficher, en recourant à une première fonction d'évaluation pour évaluer les données concomitantes superposées aux données vidéo et affichées, une deuxième fonction d'évaluation pour évaluer les données vidéo à afficher, et une troisième fonction d'évaluation représentant une pondération d'importance entre les données vidéo et les données concomitantes correspondant aux données vidéo ; et détermine un mode de superposition des données concomitantes aux données vidéo pour chaque segment vidéo afin d'optimiser la valeur d'évaluation déterminée.

**12.** Système selon la revendication 1, comprenant en outre :

un terminal d'utilisateur (1) ; et

un serveur de diffusion de contenus (2,4, 5, 6) pour la diffusion de contenus vidéo ;

où le terminal d'utilisateur (1) comprend un moyen de demande de contenu pour la transmission d'une demande de diffusion de contenu vidéo (1A) au serveur de diffusion de contenus via un réseau de communication, et où le serveur de diffusion de contenus (2, 4, 5, 6) comprend ;

le moyen de détermination du mode d'affichage de contenu (21, 41, 51, 61) pour l'exécution de la détermination adaptative quand la demande de diffusion de contenu vidéo est reçue du terminal d'utilisateur ;

le moyen de disposition de contenu (223) ; et

un moyen de diffusion de contenu (23) pour transmettre au terminal d'utilisateur le contenu vidéo généré par le moyen de disposition de contenu via le réseau de communication.

**13.** Serveur de diffusion de contenus (2, 4, 5, 6, 8) pour la diffusion de contenus vidéo contenant des données vidéo constituées d'une pluralité de segments vidéo non chevauchants et de leurs données concomitantes correspondantes associées aux données vidéo, ledit serveur comprenant :

un moyen de détermination du mode d'affichage de contenu (21, 41, 51, 61, 81) pour la détermination adaptative, par segment vidéo, d'un mode d'affichage indicatif de l'agencement, sur un écran d'affichage d'un terminal d'utilisateur (1), des données vidéo et des données concomitantes correspondantes comprises dans un contenu vidéo à afficher, de manière à adapter le mode d'affichage au contenu du segment vidéo et au contenu des données concomitantes correspondantes, quand une demande de diffusion de contenu vidéo (1A) est reçue du terminal d'utilisateur (1) via un réseau de communication,

où le moyen de détermination du mode d'affichage de contenu est prévu pour diviser l'écran d'affichage en une zone d'affichage vidéo et une zone d'affichage de données concomitantes de manière à définir le motif de division par segment vidéo du contenu vidéo,

le moyen de détermination du mode d'affichage de contenu est en outre prévu pour déterminer le mode d'affichage pour le contenu vidéo à afficher en recourant à une fonction d'évaluation prédéfinie pour le calcul d'une valeur d'évaluation pour chaque mode d'affichage en fonction du contenu vidéo affiché constitué de données vidéo affichées dans la zone d'affichage vidéo et de données concomitantes affichées dans la zone d'affichage de données concomitantes, de manière à déterminer un mode de division de l'écran d'affichage en zone d'affichage vidéo et en zone de données concomitantes délivrant une valeur d'évaluation optimisée du contenu vidéo affiché, ladite fonction d'évaluation prédéfinie recourant à au moins un des critères d'évaluation suivants : (i) quantité d'informations délivrée à l'utilisateur, (ii) valeur des informations, et (iii) facilité de visualisation des informations, et

le moyen de détermination du mode d'affichage de contenu est en outre prévu pour :

déterminer, par segment vidéo, la valeur d'évaluation du contenu vidéo à afficher, en recourant à une première fonction d'évaluation pour l'évaluation des données vidéo affichées dans la zone d'affichage vidéo, une deuxième fonction d'évaluation pour l'évaluation des données concomitantes affichées dans la zone d'affichage de données concomitantes, et une troisième fonction d'évaluation représentant une pondération d'importance entre les données vidéo et les données concomitantes correspondant aux données vidéo ; et

déterminer un mode de division de l'écran d'affichage pour chaque segment vidéo afin d'optimiser la valeur d'évaluation déterminée.

**14.** Serveur selon la revendication 13, comprenant en outre :

un moyen de génération d'informations de détermination (81) pour la génération d'informations de détermination de mode d'affichage (81A) représentant le mode d'affichage déterminé par le moyen de détermination du mode d'affichage de contenu ; et

un moyen de diffusion de contenu (83) par la transmission au terminal d'utilisateur du contenu vidéo dont la diffusion est demandée et des informations de détermination de mode d'affichage générées par le moyen de génération d'informations de détermination, via le réseau de communication.

**15.** Serveur selon la revendication 13, comprenant en outre :

un moyen de disposition de contenu (223) pour la génération, par segment vidéo, d'un contenu vidéo où les données vidéo et les données concomitantes sont agencées en fonction du mode d'affichage déterminé par le moyen de détermination du mode d'affichage de contenu ; et

un moyen de diffusion de contenu (23) pour la transmission au terminal d'utilisateur du contenu vidéo généré par le moyen de disposition de contenu via le réseau de communication.

16. Serveur selon la revendication 14, comprenant en outre :

un moyen de conversion vidéo (221) pour la conversion des données vidéo en fonction du mode d'affichage déterminé par le moyen de détermination du mode d'affichage de contenu ;

un moyen de conversion de données concomitantes (222) pour la conversion des données concomitantes en fonction du mode d'affichage déterminé par le moyen de détermination du mode d'affichage de contenu ;

un moyen de disposition de contenu (223) pour la génération, par segment vidéo, d'un contenu vidéo où les données vidéo converties par le moyen de conversion vidéo et les données concomitantes converties par le moyen de conversion de données concomitantes sont agencées en fonction du mode d'affichage déterminé par le moyen de détermination du mode d'affichage de contenu ; et

un moyen de diffusion de contenu (23) pour la transmission au terminal d'utilisateur du contenu vidéo généré par le moyen de disposition de contenu,

où le moyen de détermination du mode d'affichage de contenu détermine le mode d'affichage sur la base d'un état exigé par rapport à un format d'affichage de données vidéo et de données concomitantes correspondant aux données vidéo.

17. Procédé d'affichage de contenus vidéo contenant des données vidéo constituées d'une pluralité de segments vidéo non chevauchants et de leurs données concomitantes correspondantes associées aux données vidéo, ledit procédé comprenant les étapes de :

détermination adaptative, par segment vidéo, d'un mode d'affichage indicatif de l'agencement sur un écran d'affichage des données vidéo et des données concomitantes correspondantes comprises dans un contenu vidéo à afficher, de manière à adapter le mode d'affichage au contenu du segment vidéo et au contenu des données concomitantes correspondantes ;

génération, par segment vidéo, d'un contenu vidéo où les données vidéo et les données concomitantes sont agencées en fonction du mode d'affichage déterminé ; et

affichage du contenu vidéo généré sur l'écran d'affichage,

où l'étape de détermination du mode d'affichage de contenu comprend l'étape de division de l'écran d'affichage en une zone d'affichage vidéo et une zone d'affichage de données concomitantes de manière à définir le motif de division par segment vidéo du contenu vidéo,

l'étape de détermination du mode d'affichage de contenu comprend l'étape de :

détermination du mode d'affichage en recourant à une fonction d'évaluation prédéfinie pour le calcul d'une valeur d'évaluation pour chaque mode d'affichage en fonction du contenu vidéo affiché constitué de données vidéo affichées dans la zone d'affichage vidéo et de données concomitantes affichées dans la zone d'affichage de données concomitantes, de manière à déterminer un mode de division de l'écran d'affichage en zone d'affichage vidéo et en zone de données concomitantes délivrant une valeur d'évaluation optimisée du contenu vidéo affiché, ladite fonction d'évaluation prédéfinie recourant à au moins un des critères d'évaluation suivants : (i) quantité d'informations délivrée à l'utilisateur, (ii) valeur des informations, et (iii) facilité de visualisation des informations, et où

l'étape de détermination du mode d'affichage de contenu comprend les étapes de :

détermination, par segment vidéo, de la valeur d'évaluation du contenu vidéo à afficher, en recourant à une première fonction d'évaluation pour l'évaluation des données vidéo affichées dans la zone d'affichage vidéo, une deuxième fonction d'évaluation pour l'évaluation des données concomitantes affichées dans la zone d'affichage de données concomitantes, et une troisième fonction d'évaluation représentant une pondération d'importance entre les données vidéo et les données concomitantes correspondant aux données vidéo ; et

détermination d'un mode de division de l'écran d'affichage pour chaque segment vidéo afin d'optimiser la valeur d'évaluation déterminée.

18. Procédé selon la revendication 17,

où le mode d'affichage est déterminé sur la base d'informations d'écran d'affichage représentant les dimensions de l'écran d'affichage, de métadonnées vidéo comprenant des informations d'attributs de données vidéo correspondant à chaque segment vidéo, et de métadonnées concomitantes comprenant des informations d'attributs des données concomitantes correspondant aux segments vidéo.

**19.** Procédé selon la revendication 18, où le mode d'affichage est déterminé sur la base des dimensions de l'écran d'affichage et/ou du contenu des données vidéo dans chaque segment vidéo et/ou du contenu des données concomitantes correspondant aux segments vidéo, en tant qu'état exigé par rapport à un format d'affichage de données vidéo et de données concomitantes correspondant aux données vidéo.

**20.** Procédé selon la revendication 18, où en étape de détermination du mode d'affichage de contenu, le mode d'affichage est déterminé sur la base des informations d'écran d'affichage et/ou des métadonnées vidéo et/ou des métadonnées concomitantes et/ou des préférences de l'utilisateur et/ou d'une pondération d'importance entre chaque segment vidéo et les données concomitantes correspondantes.

**21.** Procédé selon l'une des revendications 18 à 20, où l'étape de détermination du mode d'affichage de contenu comprend les étapes de :

superposition aux données vidéo des données concomitantes correspondant aux données vidéo, par segment vidéo ; et

détermination du mode d'affichage par segment vidéo, par détermination d'un mode de superposition des données concomitantes afin d'optimiser une valeur d'évaluation du contenu vidéo constitué de données vidéo affichées et de données concomitantes quand les données concomitantes sont superposées aux données vidéo.

**22.** Procédé selon l'une des revendications 18 à 20, où l'étape de détermination du mode d'affichage de contenu comprend les étapes de :

superposition aux données vidéo, par segment vidéo, des données concomitantes correspondant aux données vidéo ; et

détermination d'un processus pour l'affichage du contenu vidéo à afficher par segment vidéo en sélectionnant un mode pour optimiser une valeur d'évaluation sur la base d'une première valeur d'évaluation du contenu vidéo, quand le contenu vidéo à afficher est affiché en recourant à un mode pour la division et l'affichage des données vidéo et des données concomitantes, et d'une deuxième valeur d'évaluation du contenu vidéo, quand le contenu vidéo est affiché en recourant à un mode pour la superposition des données concomitantes aux données vidéo.

**23.** Procédé selon la revendication 21 ou la revendication 22, où l'étape de détermination du mode d'affichage de contenu comprend les étapes de :

détermination, par segment vidéo, de la valeur d'évaluation du contenu vidéo à afficher, en recourant à une première fonction d'évaluation pour évaluer les données concomitantes superposées aux données vidéo et affichées, une deuxième fonction d'évaluation pour évaluer les données vidéo affichées, et une troisième fonction d'évaluation représentant une pondération d'importance entre les données vidéo et les données concomitantes correspondant aux données vidéo ; et

détermination d'un mode de superposition des données concomitantes aux données vidéo pour chaque segment vidéo afin d'optimiser la valeur d'évaluation déterminée.

**24.** Programme d'affichage de contenus vidéo contenant des données vidéo constituées d'une pluralité de segments vidéo non chevauchants et de leurs données concomitantes correspondantes associées aux données vidéo, ledit programme d'affichage de contenus permettant à un ordinateur d'exécuter les processus pour :

la détermination adaptative, par segment vidéo, d'un mode d'affichage indicatif de l'agencement sur un écran d'affichage des données vidéo et des données concomitantes correspondantes comprises dans un contenu vidéo à afficher, de manière à adapter le mode d'affichage au contenu du segment vidéo et au contenu des données concomitantes correspondantes ;

la génération, par segment vidéo, d'un contenu vidéo où les données vidéo et les données concomitantes sont agencées en fonction du mode d'affichage déterminé ; et

affichage du contenu vidéo généré sur l'écran d'affichage ; et

l'affichage du contenu vidéo généré,

où lors du processus de détermination l'écran d'affichage est divisé en une zone d'affichage vidéo et une zone d'affichage de données concomitantes de manière à définir le motif de division par segment vidéo du contenu vidéo,

le processus de détermination comprend le processus de détermination du mode d'affichage en recourant à une fonction d'évaluation prédéfinie pour le calcul d'une valeur d'évaluation pour chaque mode d'affichage en fonction du contenu vidéo affiché constitué de données vidéo affichées dans la zone d'affichage vidéo et de données concomitantes affichées dans la zone d'affichage de données concomitantes, de manière à déterminer un mode de division de l'écran d'affichage en zone d'affichage vidéo et en zone de données concomitantes délivrant une valeur d'évaluation optimisée du contenu vidéo affiché, ladite fonction d'évaluation prédéfinie recourant à au moins un des critères d'évaluation suivants : (i) quantité d'informations délivrée à l'utilisateur, (ii) valeur des informations, et (iii) facilité de visualisation des informations, et

le processus de détermination comprend les processus de :

détermination, par segment vidéo, de la valeur d'évaluation du contenu vidéo à afficher, en recourant à une première fonction d'évaluation pour évaluer les données vidéo affichées dans la zone d'affichage vidéo, une deuxième fonction d'évaluation pour évaluer les données concomitantes affichées dans la zone d'affichage de données concomitantes, et une troisième fonction d'évaluation représentant une pondération d'importance entre les données vidéo et les données concomitantes correspondant aux données vidéo ; et détermination d'un mode de division de l'écran d'affichage pour chaque segment vidéo afin d'optimiser la valeur d'évaluation déterminée.

25. Programme de diffusion de contenus vidéo contenant des données vidéo constituées d'une pluralité de segments vidéo non chevauchants et de leurs données concomitantes correspondantes associées aux données vidéo, ledit programme de diffusion de contenus permettant à un ordinateur d'exécuter les processus de :

réception d'une demande de diffusion de contenu vidéo (1A) d'un terminal d'utilisateur (1) via un réseau de communication ;

détermination adaptative, par segment vidéo, d'un mode d'affichage indicatif de l'agencement sur un écran d'affichage des données vidéo et des données concomitantes correspondantes comprises dans un contenu vidéo dont la diffusion est demandée,

quand la demande de diffusion de contenu vidéo est reçue du terminal d'utilisateur, de manière à adapter le mode d'affichage au contenu du segment vidéo et au contenu des données concomitantes correspondantes ;

génération, par segment vidéo, d'un contenu vidéo où les données vidéo et les données concomitantes sont agencées en fonction du mode d'affichage déterminé ; et

transmission au terminal d'utilisateur du contenu vidéo où sont agencées les données vidéo et les données concomitantes, via le réseau de communication,

où lors du processus de détermination l'écran d'affichage est divisé en une zone d'affichage vidéo et une zone d'affichage de données concomitantes de manière à définir le motif de division par segment vidéo du contenu vidéo,

le processus de détermination comprend le processus de détermination du mode d'affichage en recourant à une fonction d'évaluation prédéfinie pour le calcul d'une valeur d'évaluation pour chaque mode d'affichage en fonction du contenu vidéo affiché constitué de données vidéo affichées dans la zone d'affichage vidéo et de données concomitantes affichées dans la zone d'affichage de données concomitantes, de manière à déterminer un mode de division de l'écran d'affichage en zone d'affichage vidéo et en zone de données concomitantes délivrant une valeur d'évaluation optimisée du contenu vidéo affiché, ladite fonction d'évaluation prédéfinie recourant à au moins un des critères d'évaluation suivants : (i) quantité d'informations délivrée à l'utilisateur, (ii) valeur des informations, et (iii) facilité de visualisation des informations, et

le processus de détermination comprend les processus de :

détermination, par segment vidéo, de la valeur d'évaluation du contenu vidéo à afficher, en recourant à une première fonction d'évaluation pour évaluer les données vidéo affichées dans la zone d'affichage vidéo, une deuxième fonction d'évaluation pour évaluer les données concomitantes affichées dans la zone d'affichage de données concomitantes, et une troisième fonction d'évaluation représentant une pondération d'importance entre les données vidéo et les données concomitantes correspondant aux données vidéo ; et détermination d'un mode de division de l'écran d'affichage pour chaque segment vidéo afin d'optimiser la valeur d'évaluation déterminée.

FIG. 1

Metadata of entire video content
(Resolution, encoding process, starting and ending points of each video interval, serial number, etc.) 840

Video interval metadata (Restrictive items for attention area) 821

Video interval metadata (Restrictive items for attention area) 822

Video interval metadata (Restrictive items for attention area) 823

Video interval metadata (Restrictive items for attention area) 824

Video:

Video interval 1 — 801
Video interval 2 — 802
Video interval 3 — 803
Video interval 4 — 804

Concomitant data:

Concomitant data 1 — 811
Concomitant data 2 — 812
Concomitant data 3 — 813
Concomitant data 4 — 814

Concomitant data metadata (number of characters, number of items, importance of each item, priority order, etc.) 831

Concomitant data metadata (number of characters, number of items, importance of each item, priority order, etc.) 832

Concomitant data metadata (number of characters, number of items, importance of each item, priority order, etc.) 833

Concomitant data metadata (number of characters, number of items, importance of each item, priority order, etc.) 834

Metadata of concomitant data (Genre, format, etc.) 850

t

FIG. 2

User terminal

Contents distribution server

Send request information and
display screen information

S11

Determine display mode for contents — S12

Extract and convert video data — S13

Extract and convert concomitant data — S14

Arrange converted video data
and concomitant data to
generate converted contents — S15

Distribute converted contents — S16

END

END

FIG. 3

| Video image |
| --- |
| Concomitant data |

$\Rightarrow$

| Video image |
| --- |
| Concomitant data |

$\Rightarrow$

| Video image |
| --- |
| Concomitant data |

– – – –

|← Video interval 1 →|← Video interval 2 →|← Video interval 3 →|

## FIG. 4A

| Video image | Concomitant data |
| --- | --- |

$\Rightarrow$

| Video image | Concomitant data |
| --- | --- |

$\Rightarrow$

| Video image | Concomitant data |
| --- | --- |

– – – –

|← Video interval 1 →|← Video interval 2 →|← Video interval 3 →|

## FIG. 4B

FIG. 5

Display mode determining process

S101 — Specify video interval to be displayed

S102 — Initialize k=1, Vmax=0

S103 — Read k-th dividing pattern

S104 — Divide display screen into video display area and concomitant data display area based on dividing pattern

S105 — Optimize video display mode in video display area (Calculate maximum value)

S106 — Optimize concomitant data display mode in concomitant data display area (Calculate maximum value)

S107 — Calculate contents value V for dividing pattern k

S108 — V>Vmax?
NO
YES

S109 — Vmax=V
Save dividing pattern, video conversion parameter and concomitant data conversion parameter

S110 — k=k+1

S111 — k>n?
NO
YES

S112 — Output dividing pattern, video conversion parameter and concomitant data conversion parameter at time of maximum of V

FIG. 6

EP 1 883 241 B1

Display mode determining process

Specify video interval to be displayed ⟶ S101a

Initialize
k=1, Vmax=0 ⟶ S102a

Read k-th dividing pattern ⟶ S103a

Divide display screen into video display area and concomitant data display area based on dividing pattern ⟶ S104a

Optimize video display mode in video display area (Calculate maximum value) ⟵ S105a

Optimize concomitant data display mode in concomitant data display area (Calculate maximum value) ⟶ S106a

Calculate contents value V for dividing pattern k (Considering weight) ⟶ S107a

V>Vmax? ⟶ S108a — NO

YES

Vmax=V
Save dividing pattern, video conversion parameter and concomitant data conversion parameter ⟶ S109a

k=k+1 ⟶ S110a

k>n? ⟶ S111a — NO

YES

Output dividing pattern, video conversion parameter and concomitant data conversion parameter at time of maximum of V ⟶ S112a

FIG. 7

FIG. 8

Superimposing pattern accumulator — 35

Contents distribution server — 5

Contents database — 3

Video data accumulator — 31

Video concomitant data accumulator — 32

Metadata accumulator — 33

Contents display mode determiner — 51

Request information — 1A

Display screen information — 1B

Importance balance information — 1C

Display mode determining information — 51A

Contents converter — 22

Video data converter — 221

Concomitant data converter — 222

Contents arrangement unit — 223

Contents distributor — 23

User terminal — 1

40

EP 1 883 241 B1

```
         ┌──────────────────────────────────┐
         │  Display mode determining process │
         └──────────────────────────────────┘
                        │
                        ▼
         ┌──────────────────────────────────┐  S101b
         │  Specify video interval to be displayed │
         └──────────────────────────────────┘
                        │
                        ▼                      S102b
         ╱────────────────────────────────╲
         │           Initialize            │
         │         k=1, Vmax=0             │
         ╲────────────────────────────────╱
                        │
                        ▼                      S103b
         ┌──────────────────────────────────┐
         │   Read k-th superimposing pattern │
         └──────────────────────────────────┘
                        │
                        ▼                      S104b
         ┌──────────────────────────────────┐
         │  Superimpose concomitant data over│
         │  video image in display screen based on│
         │        superimposing pattern      │
         └──────────────────────────────────┘
```

**S106b** — Optimize video display mode in video display area (Calculate maximum value)

**S105b** — Optimize concomitant data display mode in concomitant data display area (Calculate maximum value)

**S107b** — Calculate contents value V for superimposing pattern k (Considering weight)

**S108b** — V>Vmax?  NO / YES

**S109b** — Vmax=V  Save superimposing pattern, video conversion parameter and concomitant data conversion parameter

**S110b** — k=k+1

**S111b** — k>n?  NO / YES

**S112b** — Output superimposing pattern, video conversion parameter and concomitant data conversion parameter at time of maximum of V

FIG. 9

FIG. 10

Contents distribution server **6**

- **34** Dividing pattern accumulator
- **35** Superimposing pattern accumulator

**3** Contents database
- **31** Video data accumulator
- **32** Video concomitant data accumulator
- **33** Metadata accumulator

**61** Contents display mode determiner

**61A** Display mode determining information

**22** Contents converter
- **221** Video data converter
- **222** Concomitant data converter
- **223** Contents arrangement unit

**23** Contents distributor

**1A** Request information
**1B** Display screen information
**1C** Importance balance information

**40**

**1** User terminal

EP 1 883 241 B1

EP 1 883 241 B1

Display mode determining process

Specify video interval to be displayed ── S101c

Initialize k=1,Vmax=0 ── S102a

S102b
Initialize l=1,Wmax=0

Read k-th dividing pattern ── S103a

S103b
Read l-th superimposing pattern

S104a
Divide display screen into video display area and concomitant data display area based on dividing pattern

S104b
Superimpose concomitant data over video image in display screen based on superimposing pattern

S105a
Optimize video display mode in video display area (Calculate maximum value)

S106a
Optimize concomitant data display mode in concomitant data display area (Calculate maximum value)

S106b
Optimize video display mode in video display area (Calculate maximum value)

S105b
Optimize concomitant data display mode in concomitant data display area (Calculate maximum value)

S107a
Calculate contents value V for dividing pattern k (Considering weight)

S107b
Calculate contents value W for superimposing pattern k (Considering weight)

S108a
V>Vmax?    NO

S108b
W>Wmax?    NO

YES ── S109a

Vmax=V, save dividing pattern, video conversion parameter and concomitant data conversion parameter

YES ── S109b

Wmax=W, save superimposing pattern, video conversion parameter and concomitant data conversion parameter

k=k+1 ── S110a

l=l+1 ── S110b

S111a
NO    k>n?

S111b
NO    l>m?

YES

YES

S112a
Output dividing pattern, video conversion parameter and concomitant data conversion parameter at time of maximum of V

S113c
Vmax>Wmax?    NO

S11  S112b
Output superimposing pattern, video conversion parameter and concomitant data conversion parameter at time of maximum of W

YES

S114c
Output dividing pattern, video conversion parameter and concomitant data conversion parameter at time of maximum of V

S115c
Output superimposing pattern, video conversion parameter and concomitant data conversion parameter at time of maximum of W

FIG. 11

FIG. 12

FIG. 13

EP 1 883 241 B1

FIG. 14

Video interval A

720×480

Topic

Title 1

Akashi Strait Bridge

Video interval B

720×480

Topic

Title 1

Title 2

Video interval C

720×480

Topic

Title 1

**News

Title 2

Video display area    Concomitant data display area

# FIG. 15

Video interval A

240×320

Akashi Strait Bridge

Title 1
Title 2
Title 3
Title 4

Video interval B

240×320

Title 1
Title 2
Title 3

Video interval C

240×320

**News

Video display area

Title 1
Title 2
Title 3
Title 4

Concomitant
data display area

FIG. 16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001296852 A
- JP 2003018553 A
- JP 2003 A
- JP 018553 A
- JP 2003032747 A
- JP 6149968 A
- JP 2003067100 A
- JP 2002032747 A
- JP H6149968 B
- US 6023714 A
- US 20040073925 A
- EP 1347645 A
- WO 2004008768 A
- US 20020199190 A

**Non-patent literature cited in the description**

- **ULLAS GARGI ; RANGACHAR KASTURI ; SUSAN H. STRAYER.** Performance Characterization of Video-Shot-Change Detection Methods. *IEEE Transaction on Circuits and Systems for Video Technology,* February 2000, vol. 10 (1
- **A. MOHAN ; C. PAPAGEORGIOU ; T. POGGIO.** Example-Based Object Detection in Images by Components. *IEEE Trans. on PAMI,* 2001, vol. 23 (4), 349-361